(19)

**Europäisches Patentamt**
**European Patent Office**
**Office européen des brevets**

(11)  **EP 4 654 514 A1**

(12)  **EUROPEAN PATENT APPLICATION**
published in accordance with Art. 153(4) EPC

(43) Date of publication:
26.11.2025  Bulletin 2025/48

(21) Application number: 24749762.1

(22) Date of filing: 02.02.2024

(51) International Patent Classification (IPC):
$H04L\ 5/00^{(2006.01)}$     $H04W\ 52/14^{(2009.01)}$

(52) Cooperative Patent Classification (CPC):
H04B 7/0426; H04B 7/0456; H04L 5/00;
H04W 52/14; H04W 52/24

(86) International application number:
PCT/CN2024/075592

(87) International publication number:
WO 2024/160287 (08.08.2024 Gazette 2024/32)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  03.02.2023  CN 202310149382

(71) Applicant: **Huawei Technologies Co., Ltd.**
**Shenzhen, Guangdong 518129 (CN)**

(72) Inventors:
• **DONG, Changzhao**
  **Shenzhen, Guangdong 518129 (CN)**

• **GAO, Xiang**
  **Shenzhen, Guangdong 518129 (CN)**
• **LIU, Xianda**
  **Shenzhen, Guangdong 518129 (CN)**
• **ZHANG, Zhening**
  **Shenzhen, Guangdong 518129 (CN)**
• **LIU, Kunpeng**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54)  **COMMUNICATION METHOD, APPARATUS AND SYSTEM, AND STORAGE MEDIUM**

(57)     This application discloses a communication method, apparatus, and system, a chip, a chip module, and a storage medium. A terminal obtains at least one correspondence between a power factor P and at least one of a number L of uplink transmission layers, precoding information, and a number $Q_P$ of phase tracking reference signal PTRS ports, where L ranges from 1 to 8; receives downlink control information, where the downlink control information indicates at least one of the following information: first precoding information, a first number of uplink transmission layers, and a first SRI; and determines, based on the at least one correspondence and the downlink control information, first P corresponding to at least one of the first precoding information, the first number of uplink transmission layers, and the first SRI. Therefore, in a scenario in which the number of uplink transmission layers ranges from 1 to 8, the terminal and a network device may accurately determine a power factor of a PTRS based on the at least one correspondence and the downlink control information, improving resource utilization.

```
┌──────────────┐                      ┌──────────────┐
│   Terminal   │                      │   Network    │
│              │                      │    device    │
└──────────────┘                      └──────────────┘
┌─────────────────────────┐    ┌─────────────────────────┐
│ S301a: The terminal      │    │ S301b: The network device│
│ obtains at least one     │    │ obtains at least one     │
│ correspondence between a │    │ correspondence between a │
│ power coefficient and at │    │ power coefficient and at │
│ least one of a number of │    │ least one of a number of │
│ uplink transmission      │    │ uplink transmission      │
│ streams, precoding       │    │ streams, precoding       │
│ information, and a number│    │ information, and a number│
│ of PTRS ports            │    │ of PTRS ports            │
└─────────────────────────┘    └─────────────────────────┘
              ┌─────────────────────────────────────┐
              │ S302: Downlink control information   │
              │ (indicating at least one of the      │
              │ following information: first         │
              │ precoding information, a first number│
              │ of uplink transmission streams, and  │
              │ a first SRI)                         │
              └─────────────────────────────────────┘
┌─────────────────────────┐    ┌─────────────────────────┐
│ S303a: The terminal      │    │ S303b: The network device│
│ determines, based on the │    │ determines, based on the │
│ at least one             │    │ at least one correspondence│
│ correspondence and the   │    │ and the downlink control │
│ downlink control         │    │ information, a first power│
│ information, a first power│   │ coefficient corresponding│
│ coefficient corresponding│    │ to at least one of the   │
│ to at least one of the   │    │ first precoding          │
│ first precoding          │    │ information, the first   │
│ information, the first   │    │ number of uplink         │
│ number of uplink         │    │ transmission streams, and│
│ transmission streams, and│    │ the first SRI            │
│ the first SRI            │    │                          │
└─────────────────────────┘    └─────────────────────────┘
              ┌─────────────────────────────────────┐
              │ S304: The terminal sends a PTRS signal│
              │ based on the first power coefficient  │
              │ through at least one PTRS port        │
              └─ ─ ─ ─ ─ ─ ─ ─ ─ ─ ─ ─ ─ ─ ─ ─ ─ ─ ─▶│
              └─────────────────────────────────────┘

                         FIG. 3
```

## Description

This application claims priority to Chinese Patent Application No. 202310149382.3, filed with the China National Intellectual Property Administration on February 3, 2023 and entitled "COMMUNICATION METHOD, APPARATUS, AND SYSTEM, AND STORAGE MEDIUM", which is incorporated herein by refernce in its entirety.

## TECHNICAL FIELD

This application relates to the field of communication technologies, and in particular, to a communication method, apparatus, and system, a chip, a chip module, and a storage medium.

## BACKGROUND

A phase tracking reference signal (phase tracking reference signal, PTRS) is used to perform phase tracking on a physical uplink shared channel (physical uplink shared channel, PUSCH) sent by a terminal. The PTRS is sent on an associated candidate demodulation reference signal (demodulation reference signal, DMRS) port. However, in a scenario in which a single terminal supports transmission of more than 4T (transmission) and/or more than four layers, there is currently no corresponding solution for determining power of the PTRS when the PTRS is sent.

## SUMMARY

This application provides a communication method, apparatus, and system, and a storage medium, to accurately determine power of a PTRS.

According to a first aspect, a communication method is provided. The method includes: obtaining at least one correspondence between a power factor P and at least one of a number L of uplink transmission layers, precoding information, and a number $Q_P$ of phase tracking reference signal PTRS ports, where P is a power ratio of a PTRS to a physical uplink shared channel per layer per resource element, and the number of uplink transmission layers ranges from 1 to 8; receiving downlink control information, where the downlink control information indicates at least one of the following information: first precoding information, a first number of uplink transmission layers, and a first SRI; and determining, based on the at least one correspondence and the downlink control information, first P corresponding to at least one of the first precoding information, the first number of uplink transmission layers, and the first SRI.

P may alternatively be understood as a power ratio of a data signal carried on a physical uplink shared channel to a PTRS reference signal, a power ratio of an uplink data signal to a PTRS reference signal, a power ratio of a PTRS to a physical uplink shared channel, a power ratio of a PTRS reference signal to a data signal carried on a physical uplink shared channel, or a power ratio of a PTRS reference signal to an uplink data signal.

In this aspect, in a scenario in which the number of uplink transmission layers ranges from 1 to 8, a terminal may accurately determine a power factor of a PTRS based on the at least one correspondence and the downlink control information, so that the terminal can fully use a power resource, ensuring PTRS transmission reliability and improving channel estimation and phase noise detection capabilities.

In a possible implementation, the method further includes: sending a PTRS signal based on the first P through at least one PTRS port.

According to a second aspect, a communication method is provided. The method includes: obtaining at least one correspondence between a power factor P and at least one of a number L of uplink transmission layers, precoding information, and a number $Q_P$ of phase tracking reference signal PTRS ports, where P is a power ratio of a PTRS to a physical uplink shared channel per layer per resource element, and the number of uplink transmission layers ranges from 1 to 8; sending downlink control information, where the downlink control information indicates at least one of the following information: first precoding information, a first number of uplink transmission layers, and a first SRI; and determining, based on the at least one correspondence and the downlink control information, first P corresponding to at least one of the first precoding information, the first number of uplink transmission layers, and the first SRI.

P may alternatively be understood as a power ratio of a data signal carried on a physical uplink shared channel to a PTRS reference signal, a power ratio of an uplink data signal to a PTRS reference signal, a power ratio of a PTRS to a physical uplink shared channel, a power ratio of a PTRS reference signal to a data signal carried on a physical uplink shared channel, or a power ratio of a PTRS reference signal to an uplink data signal.

When a number of PUSCH antenna ports is 8, the number of uplink transmission layers ranges from 1 to 4. Alternatively, when a number of PUSCH antenna ports is 8, the number of uplink transmission layers ranges from 1 to 8.

In this aspect, in a scenario in which the number of uplink transmission layers ranges from 1 to 8, a network device may accurately determine a power factor of a PTRS based on the at least one correspondence and the downlink control information, improving resource utilization.

In a possible implementation, the method further includes: receiving a PTRS signal based on the first P through at least one PTRS port.

According to a third aspect, a communication apparatus is provided. The communication apparatus may implement the method in the first aspect. For example, the communication apparatus may be a terminal or a chip system in a terminal. The method may be implemented by software, hardware, or hardware executing corresponding software.

In a possible implementation, the apparatus includes a transceiver unit and a processing unit. The processing unit is configured to obtain at least one correspondence between a power factor P and at least one of a number L of uplink transmission layers, precoding information, and a number $Q_P$ of phase tracking reference signal PTRS ports, where P is a power ratio of a PTRS to a physical uplink shared channel per layer per resource element, and the number of uplink transmission layers ranges from 1 to 8. The transceiver unit is configured to receive downlink control information, where the downlink control information indicates at least one of the following information: first precoding information, a first number of uplink transmission layers, and a first SRI. The processing unit is further configured to determine, based on the at least one correspondence and the downlink control information, first P corresponding to at least one of the first precoding information, the first number of uplink transmission layers, and the first SRI.

Optionally, the transceiver unit is further configured to send a PTRS signal based on the first P through at least one PTRS port.

According to a fourth aspect, a communication apparatus is provided. The communication apparatus may implement the method in the second aspect. For example, the communication apparatus may be a network device or a chip system in a network device. The method may be implemented by software, hardware, or hardware executing corresponding software.

In a possible implementation, the apparatus includes a transceiver unit and a processing unit. The processing unit is configured to obtain at least one correspondence between a power factor P and at least one of a number L of uplink transmission layers, precoding information, and a number $Q_P$ of phase tracking reference signal PTRS ports, where P is a power ratio of a PTRS to a physical uplink shared channel per layer per resource element, and the number of uplink transmission layers ranges from 1 to 8. The transceiver unit is configured to send downlink control information, where the downlink control information indicates at least one of the following information: first precoding information, a first number of uplink transmission layers, and a first SRI. The processing unit is further configured to determine, based on the at least one correspondence and the downlink control information, first P corresponding to at least one of the first precoding information, the first number of uplink transmission layers, and the first SRI.

Optionally, the transceiver unit is further configured to receive a PTRS signal based on the first P through at least one PTRS port.

With reference to the third aspect or the fourth aspect, in another possible implementation, the communication apparatus includes a processor coupled to a memory. The processor is configured to support the apparatus in performing a corresponding function in the foregoing communication method. The memory is configured to be coupled to the processor. The memory stores a computer program (or computer-executable instructions) and/or data required for the apparatus. Optionally, the communication apparatus may further include a communication interface, configured to support communication between the apparatus and another network element, for example, sending or receiving of data and/or a signal. For example, the communication interface may be a transceiver, a circuit, a bus, a module, or another type of communication interface. Optionally, the memory may be located inside the communication apparatus and integrated with the processor, or may be located outside the communication apparatus.

With reference to the third aspect or the fourth aspect, in still another possible implementation, the communication apparatus includes a processor and a transceiver apparatus. The processor is coupled to the transceiver apparatus. The processor is configured to execute a computer program or instructions to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, an interface circuit, or an input/output interface, and is configured to: receive a signal from a communication apparatus other than the communication apparatus and transmit the signal to the processor, or send a signal from the processor to a communication apparatus other than the communication apparatus. When the communication apparatus is a chip, the transceiver apparatus is a transceiver circuit or an input/output interface.

When the communication apparatus is the chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine; and a receiving unit may be a receiver or a receiver machine.

With reference to any one of the first aspect to the fourth aspect or any one of the possible implementations of the first aspect to the fourth aspect, in still another possible implementation, in a same PUSCH transmission mode, when $L_1 < L_2$ is satisfied, $P_1 \leq P_2$, where $L_1$ and $L_2$ correspond to different numbers of uplink transmission layers, $P_1$ is a power factor corresponding to $L_1$, and $P_2$ is a power factor corresponding to $L_2$. The PUSCH transmission mode includes at least one of the following: a full coherent transmission mode, a partial coherent transmission mode, a non-coherent transmission mode, and a non-codebook based transmission mode. The first precoding information corresponds to at least one PUSCH transmission mode.

In this implementation, in the same PUSCH transmission mode, a larger number of uplink transmission layers indicates that a power factor corresponding to a larger uplink transmission layer may be greater than or equal to a power factor corresponding to a smaller uplink transmission layer. Therefore, the power factor of the PTRS is more accurately determined, and the resource utilization is improved.

With reference to any one of the first aspect to the fourth aspect or any one of the possible implementations of the first aspect to the fourth aspect, in still another possible implementation, in any one of the partial coherent transmission mode, the non-coherent transmission mode, and the non-codebook based transmission mode, a same PTRS port corresponds to different P in a case of same L and different numbers of PTRS ports.

In this implementation, in any one of the partial coherent transmission mode, the non-coherent transmission mode, and the non-codebook based transmission mode, in a case of a same number of uplink transmission layers, the number of PTRS ports configured by the network device may be less than or equal to a maximum number of supported PTRS ports, and in a case of different numbers of PTRS ports, a same PTRS port corresponds to different power factors.

For example, for same L, the number of PTRS ports includes at least a first value and a second value, where the first value corresponds to a first power factor, and the second value corresponds to a second power factor.

For example, the number of PTRS ports further includes a third value and/or a fourth value, where the third value corresponds to a third power factor, and the fourth value corresponds to a fourth power factor.

With reference to any one of the first aspect to the fourth aspect or any one of the possible implementations of the first aspect to the fourth aspect, in still another possible implementation, in the partial coherent transmission mode, different PTRS ports correspond to different P in a case of same L.

In this implementation, in the partial coherent transmission mode, in the case of the same L, different PTRS ports are associated with different numbers of uplink transmission layers, that is, different PTRS ports correspond to different numbers of uplink transmission layers. In addition, because the power factor protected in this application is mainly a power ratio of a PUSCH to a PTRS, it may be understood that different PTRS ports may correspond to different power values because different PTRS ports correspond to different numbers of PUSCH transmission layers. It may also be understood that maximum transmit power corresponding to one PTRS port is the same as total power of uplink data signals sent by all uplink transmit antennas (PUSCH antenna ports) corresponding to the PTRS port, and the uplink data signals may be carried on a physical uplink shared channel. Therefore, different PTRS ports correspond to different P.

With reference to any one of the first aspect to the fourth aspect or any one of the possible implementations of the first aspect to the fourth aspect, in still another possible implementation, the PTRS port includes a first PTRS port and a second PTRS port. The first PTRS port is associated with a first demodulation reference signal DMRS port. The first PTRS port corresponds to the first power factor. The second PTRS port is associated with a second DMRS port. The second PTRS port corresponds to the second power factor.

In this implementation, different PTRS ports are located in different Ngs, and may be associated with different DMRS ports. Different PTRS ports are associated with different DMRS ports, and may correspond to different power factors.

With reference to any one of the first aspect to the fourth aspect or any one of the possible implementations of the first aspect to the fourth aspect, in still another possible implementation, when a value of L is 2, 4, 6, or 8, a value of P is associated with a value of $Q_P$. When the value of L is 3, 5, or 7, the value of P is associated with $Q_P$ and the PTRS port.

In this implementation, for example, when Ng=2, and the maximum number of supported PTRS ports is 2, corresponding to different numbers of uplink transmission layers, the value of P may be associated with $Q_P$; or the value of P is associated with $Q_P$ and the PTRS port, that is, corresponds to different $Q_P$, and different PTRS ports may correspond to different values of P.

With reference to any one of the first aspect to the fourth aspect or any one of the possible implementations of the first aspect to the fourth aspect, in still another possible implementation, when a value of L is 2, 3, or 4, a value of P is associated with $Q_P$. When the value of L is 6, the value of P is associated with $Q_P$ and the PTRS port. When the value of L is 5 or 7, the value of P is associated with $Q_P$, the PTRS port, and a DMRS port associated with the PTRS port.

In this implementation, for example, when Ng=4, and the maximum number of supported PTRS ports is 2, corresponding to different numbers of uplink transmission layers, the value of P may be associated with $Q_P$; the value of P is associated with $Q_P$ and the PTRS port, that is, corresponds to different $Q_P$, and different PTRS ports may correspond to different values of P; or the value of P is associated with $Q_P$, the PTRS port, and the DMRS port associated with the PTRS port, that is, corresponds to different $Q_P$ and different PTRS ports, and the PTRS ports are associated with different DMRS ports (or the PTRS ports are located in different Ngs), may correspond to different values of P.

With reference to any one of the first aspect to the fourth aspect or any one of the possible implementations of the first aspect to the fourth aspect, in still another possible implementation, during partial coherent transmission, a value of L is 2, and a value of P is $P_{L2}$. The value of L is 3, and the value of P is $P_{L3}$. The value of L is 4, and the value of P is $P_{L4}$. The value of L is 5, and the value of P is $P_{L3}$. The value of L is 6, and the value of P is $P_{L6}$. The value of L is 7, and the value of P is $P_{L7}$. $P_{L2}=P_{L3}$, $P_{L4}=P_{L3}$, and $P_{L6}=P_{L7}$. $P_{L2}$, $P_{L3}$, $P_{L4}$, $P_{L3}$, $P_{L6}$, and $P_{L7}$ respectively represent power factors used when L is 2, 3, 4, 5, 6, and 7.

In this implementation, for example, when a maximum number of supported PTRS ports is 2, $P_{L2}=P_{L3}$, $P_{L4}=P_{L5}$, and $P_{L6}=P_{L7}$. In this case, a number Ng of antenna coherence groups may be equal to 2 or 4.

With reference to any one of the first aspect to the fourth aspect or any one of the possible implementations of the first aspect to the fourth aspect, in still another possible implementation, $P_{L2}<P_{L4}<P_{L6}$.

In this implementation, for example, when the maximum number of supported PTRS ports is 2, a larger number of uplink transmission layers indicates that a power factor corresponding to a larger uplink transmission layer may be greater than or equal to a power factor corresponding to a smaller uplink transmission layer. Therefore, the power factor of the PTRS is more accurately determined, and the resource utilization is improved. Herein, the number Ng of antenna coherence groups may be equal to 2 or 4.

With reference to any one of the first aspect to the fourth aspect or any one of the possible implementations of the first aspect to the fourth aspect, in still another possible implementation, the value of L is 1, and the value of P is $P_{L1}$. The value of L is 8, and the value of P is $P_{L8}$. $P_{L1}<P_{L2}<P_{L4}<P_{L6}<P_{L8}$.

In this implementation, for example, when the maximum number of supported PTRS ports is 2, a larger number of uplink transmission layers indicates that a power factor corresponding to a larger uplink transmission layer may be greater than or equal to a power factor corresponding to a smaller uplink transmission layer. Therefore, the power factor of the PTRS is more accurately determined, and the resource utilization is improved. Herein, the number Ng of antenna coherence groups may be equal to 2 or 4.

With reference to any one of the first aspect to the fourth aspect or any one of the possible implementations of the first aspect to the fourth aspect, in still another possible implementation, a value of $P_{L2}$ is $3Q_P-3$, a value of $P_{L4}$ is $3Q_P$, and a value of $P_{L6}$ is $3Q_P+1.77$.

With reference to any one of the first aspect to the fourth aspect or any one of the possible implementations of the first aspect to the fourth aspect, in still another possible implementation, when $Q_P=1$, $P_{L6}=4.77$ dB. When $Q_P=2$, $P_{L6}=7.78$ dB.

With reference to any one of the first aspect to the fourth aspect or any one of the possible implementations of the first aspect to the fourth aspect, in still another possible implementation, a value of $P_{L8}$ is $3Q_P+3$.

With reference to any one of the first aspect to the fourth aspect or any one of the possible implementations of the first aspect to the fourth aspect, in still another possible implementation, during partial coherent transmission, a value of L is 2, and a value of P is $P'_{L2}$. The value of L is 3, and the value of P is $P'_{L3}$. The value of L is 4, and the value of P is $P'_{L4}$. The value of L is 5, and the value of P is $P'_{L5}$. The value of L is 6, and the value of P is $P'_{L6}$. The value of L is 7, and the value of P is $P'_{L7}$. $P'_{L2}=P'_{L3}=P'_{L4}=P'_{L5}=P'_{L6}=P'_{L7}$. $P'_{L2}$, $P'_{L3}$, $P'_{L4}$, $P'_{L5}$, $P'_{L6}$, and $P'_{L7}$ respectively represent power factors used when L is 2, 3, 4, 5, 6, and 7.

In this implementation, for example, when Ng=4, a maximum number of supported PTRS ports is 2, and the number of uplink transmission layers ranges from 2 to 7, corresponding power factors are the same, so that the power factor is more accurately determined.

With reference to any one of the first aspect to the fourth aspect or any one of the possible implementations of the first aspect to the fourth aspect, in still another possible implementation, the value of L is 1, and the value of P is $P'_{L1}$. The value of L is 8, and the value of P is $P'_{L8}$. $P'_{L1}<P'_{L2}<P'_{L8}$.

With reference to any one of the first aspect to the fourth aspect or any one of the possible implementations of the first aspect to the fourth aspect, in still another possible implementation, a value of $P'_{L2}$ is $3Q_P-3$.

With reference to any one of the first aspect to the fourth aspect or any one of the possible implementations of the first aspect to the fourth aspect, in still another possible implementation, a value of $P'_{L8}$ is $3Q_P$.

With reference to any one of the first aspect to the fourth aspect or any one of the possible implementations of the first aspect to the fourth aspect, in still another possible implementation, during partial coherent transmission, a value of L is 4, and a value of P is $P''_{L4}$. The value of L is 5, and the value of P is $P''_{L5}$. The value of L is 6, and the value of P is $P''_{L6}$. The value of L is 7, and the value of P is $P''_{L7}$. The value of L is 8, and the value of P is $P''_{L8}$. $P''_{L4}=P''_{L5}=P''_{L6}=P''_{L7}=P''_{L8}$.

In this implementation, for example, when Ng=4, a maximum number of supported PTRS ports is 4, and the number of uplink transmission layers ranges from 4 to 8, corresponding power factors are the same, so that the power factor is more accurately determined.

With reference to any one of the first aspect to the fourth aspect or any one of the possible implementation of the first aspect to the fourth aspect, in still another possible implementation, a value of $P''_{L4}$ is as follows: When $Q_P=1$, $P''_{L4}=0$ dB. When $Q_P=2$, $P''_{L4}=3$ dB. When $Q_P=3$, $P''_{L4}=4.77$ dB. When $Q_P=4$, $P''_{L4}=6$ dB.

With reference to any one of the first aspect to the fourth aspect or any one of the possible implementations of the first aspect to the fourth aspect, in still another possible implementation, during partial coherent transmission, a value of L is 2, and a value of P is $P''_{L2}$. A value of $P''_{L2}$ is $3Q_P-3$.

With reference to any one of the first aspect to the fourth aspect or any one of the possible implementations of the

**EP 4 654 514 A1**

first aspect to the fourth aspect, in still another possible implementation, during partial coherent transmission, a value of L is 3, and a value of P" is $P_{L3}$. A value of $P''_{L3}$ is as follows: When $Q_P$=1, $P''_{L3}$=0 dB. When $Q_P$=2, $P''_{L3}$=3 dB. When $Q_P$=3, $P''_{L3}$=4.77 dB.

With reference to any one of the first aspect to the fourth aspect or any one of the possible implementations of the first aspect to the fourth aspect, in still another possible implementation, the value of P is associated with at least one of a number $L_P$ of uplink transmission layers corresponding to one PTRS port among the $Q_P$ PTRS ports and a number $L_{Ng}$ of uplink transmission layers corresponding to one antenna coherence group.

In this implementation, after one correspondence between a power factor and a number of uplink transmission layers, precoding information, and a number of PTRS ports is determined based on at least one of a number of uplink transmission layers, precoding information, and an SRI, a specific value of the power factor is further associated with at least one of a number $L_P$ of uplink transmission layers corresponding to a specific PTRS port and the number $L_{Ng}$ of uplink transmission layers corresponding to one antenna coherence group. Therefore, the power factor is more accurately determined.

With reference to any one of the first aspect to the fourth aspect or any one of the possible implementations of the first aspect to the fourth aspect, in still another possible implementation, the value of P is associated with a first parameter, and the first parameter is a product of $Q_P$ and $L_P$, or the first parameter is a product of $Q_P$ and $L_{Ng}$.

With reference to any one of the first aspect to the fourth aspect or any one of the possible implementations of the first aspect to the fourth aspect, in still another possible implementation, the value satisfies $P = 10 * log10(Q_p * L_p)$ or $P = 10 * log10(Q_p * L_{Ng})$.

With reference to any one of the first aspect to the fourth aspect or any one of the possible implementations of the first aspect to the fourth aspect, in still another possible implementation, in the full coherent transmission mode, the value of P is associated with L.

With reference to any one of the first aspect to the fourth aspect or any one of the possible implementations of the first aspect to the fourth aspect, in still another possible implementation, $Q_p$ = 1, and the value satisfies $P = 10 * log_{10}(L)$.

With reference to any one of the first aspect to the fourth aspect or any one of the possible implementations of the first aspect to the fourth aspect, in still another possible implementation, when L is 1, P is 0 dB. When L is 2, P is 3 dB. When L is 3, P is 4.77 dB. When L is 4, P is 6 dB. When L is 5, P is 6.99 dB. When L is 6, P is 7.78 dB. When L is 7, P is 8.45 Db. When L is 8, P is 9 dB.

With reference to any one of the first aspect to the fourth aspect or any one of the possible implementations of the first aspect to the fourth aspect, in still another possible implementation, in the partial coherent transmission mode, when the first parameter is 1, P is 0 dB. When the first parameter is 2, P is 3 dB. When the first parameter is 3, P is 4.77 dB. When the first parameter is 4, P is 6 dB. When the first parameter is 5, P is 7 dB. When the first parameter is 6, P is 7.78 dB. When the first parameter is 7, P is 8.45 dB. When the first parameter is 8, P is 9 dB.

With reference to any one of the first aspect to the fourth aspect or any one of the possible implementations of the first aspect to the fourth aspect, in still another possible implementation, in the non-coherent transmission mode, the value of P is associated with $Q_P$, and a larger number of PTRS ports indicates a larger value of P. The value of P may satisfy a formula $P = 10 * log10(Q_p)$.

With reference to any one of the first aspect to the fourth aspect or any one of the possible implementations of the first aspect to the fourth aspect, in still another possible implementation, $L_p$ = 1, or $L_{Ng}$ = 1, and the value satisfies $P = 10 * log_{10}(Q_p)$.

With reference to any one of the first aspect to the fourth aspect or any one of the possible implementations of the first aspect to the fourth aspect, in still another possible implementation, when $Q_P$ is 1, P is 0 dB. When $Q_P$ is 2, P is 3 dB. When $Q_P$ is 3, P is 4.77 dB. When $Q_P$ is 4, P is 6 dB.

With reference to any one of the first aspect to the fourth aspect or any one of the possible implementations of the first aspect to the fourth aspect, in still another possible implementation, a number of PUSCH antenna ports ranges from 5 to 8, and the number of uplink transmission layers ranges from 1 to 4.

With reference to any one of the first aspect to the fourth aspect or any one of the possible implementations of the first aspect to the fourth aspect, in still another possible implementation, the number of PTRS ports is less than or equal to a number $N_g$ of supported antenna coherence groups.

With reference to any one of the first aspect to the fourth aspect or any one of the possible implementations of the first aspect to the fourth aspect, in still another possible implementation, a number of uplink antennas is 8, and a correspondence between $Q_P$ and $N_g$ includes at least one of the following: When $N_g$ is 1, $Q_P$ is 1. When $N_g$ is 2, $Q_P$ is 1. When $N_g$ is 2, $Q_P$ is 2. When $N_g$ is 4, $Q_P$ is 2. When $N_g$ is 4, $Q_P$ is 4.

According to a fifth aspect, a communication method is provided. The communication method includes the method according to any one of the first aspect or the implementations of the first aspect, and the method according to any one of the second aspect or the implementations of the second aspect.

According to a sixth aspect, a communication system is provided. The communication system includes the communication apparatus according to the third aspect and the communication apparatus according to the fourth aspect.

According to a seventh aspect, a computer-readable storage medium is provided. The computer-readable storage medium stores a computer program or instructions. When the program or the instructions are executed by a processor, the method according to any one of the first aspect, the second aspect, or the implementations of the first aspect or the second aspect is performed.

According to an eighth aspect, a computer program product is provided. When the computer program product is executed on a computing device, the method according to any one of the first aspect, the second aspect, or the implementations of the first aspect or the second aspect is performed.

According to a ninth aspect, a circuit is provided. The circuit is coupled to a memory. The circuit is configured to perform the method according to any one of the first aspect, the second aspect, or the implementations of the first aspect or the second aspect. The circuit may include a chip circuit.

## BRIEF DESCRIPTION OF DRAWINGS

FIG. 1 is a diagram of an architecture of a communication system to which an embodiment of this application is applied;
FIG. 2 is an example diagram of associating a PTRS port with a DMRS port according to an embodiment of this application;
FIG. 3 is a schematic flowchart of a communication method according to an embodiment of this application;
FIG. 4a to FIG. 4n are example diagrams of an 8T eight-layer precoding matrix according to an embodiment of this application;
FIG. 5a to FIG. 5g are example diagrams of a power factor according to an embodiment of this application;
FIG. 6 is a diagram of a structure of a communication apparatus according to an embodiment of this application; and
FIG. 7 is a diagram of a structure of another communication apparatus according to an embodiment of this application.

## DESCRIPTION OF EMBODIMENTS

The following describes embodiments of this application with reference to the accompanying drawings in embodiments of this application.

Embodiments of this application may be applied to various communication systems, for example, a long term evolution (long term evolution, LTE) system, LTE time division duplex (time division duplex, TDD), a 5th generation (5th generation, 5G) communication system, and a future 6th generation (6th generation, 6G) communication system.

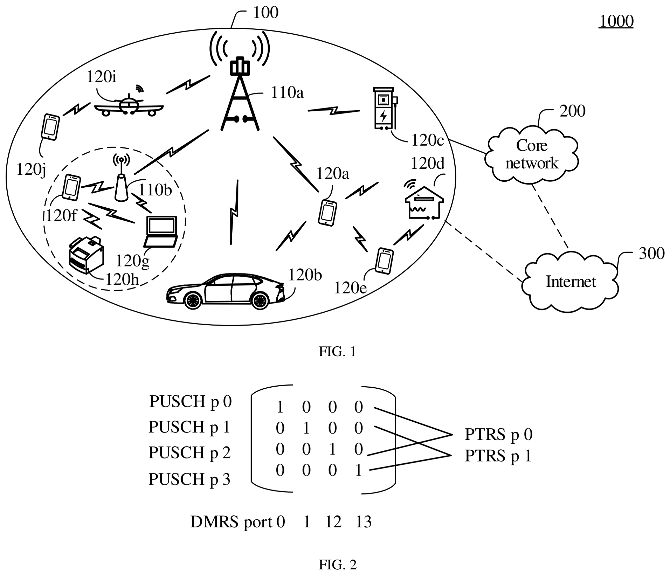

FIG. 1 is a diagram of an architecture of a communication system to which an embodiment of this application is applied. As shown in FIG. 1, the communication system 1000 includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, functions of a core network device and logical functions of the radio access network device are integrated into a same physical device, or some functions of a core network device and some functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not shown in FIG. 1.

The radio access network device may be a base station (base station), an evolved base station (evolved NodeB, eNodeB), a transmission reception point (transmission reception point, TRP), a next generation base station (next generation NodeB, gNB) in a 5th generation (5 generation, 5G) mobile communication system, a next generation base station in a 6th generation (6 generation, 6G) mobile communication system, a base station in a future mobile communication system, an access node in a Wi-Fi system, or the like; or may be a module or unit that completes some functions of a base station, for example, may be a central unit (central unit, CU), or may be a distributed unit (distributed unit, DU). The radio access network device may be a macro base station (for example, 110a in FIG. 1), may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which the base station is used as the radio access network device.

The terminal may also be referred to as a terminal device, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine type communication (machine type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The base station and the terminal may be fixed or movable. The base station and the terminal may be deployed on the land, including an indoor device, an outdoor device, a handheld device, or an in-vehicle device; may be deployed on the water; or may be deployed on an airplane, a balloon, and an artificial satellite in the air. Application scenarios of the base station and the terminal are not limited in embodiments of this application.

Roles of the base station and the terminal may be relative. For example, a helicopter or uncrewed aerial vehicle 120i in FIG. 1 may be configured as a mobile base station. For the terminal 120j that accesses the radio access network 100 via 120i, the terminal 120i is a base station. However, for the base station 110a, 120i is a terminal, that is, 110a and 120i communicate with each other by using a radio air interface protocol. Certainly, 110a and 120i may alternatively communicate with each other based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a base station function, and 120a to 120j each in FIG. 1 may be referred to as a communication apparatus having a terminal function.

Communication between a base station and a terminal, between base stations, or between terminals may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as the smart grid, industrial control, smart transportation, and the smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal establishes a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are time domain symbols.

It may be understood that in embodiments of this application, a physical downlink shared channel (physical downlink shared channel, PDSCH), a physical downlink control channel (physical downlink control channel, PDCCH), and a physical uplink shared channel (physical uplink shared channel, PUSCH) are merely examples of a downlink data channel, a downlink control channel, and an uplink data channel respectively. In different systems and different scenarios, a data channel and a control channel may have different names. This is not limited in embodiments of this application.

Embodiments of this application may involve the following concepts.

(1) Antenna coherence group

Based on the concept of the antenna coherence group, the following several codebook forms or transmission modes may be classified:

full coherent (full coherent): means that all antenna ports (antenna ports) can send data of a same layer;
partial coherent (partial coherent): means that some antenna ports can send data of a same layer; and
non-coherent (non-coherent): means that each antenna port can send data of only one layer.

The following Table 1 is used as an example. A transmission precoding matrix index (transmission precoding matrix index, TPMI) set corresponds to transmission of four uplink layers with four transmit antennas of one UE (that is, four-transmit four-layer). A precoding matrix corresponding to a precoding matrix 0 (that is, a TPMI is 0) may be understood as non-coherent transmission. Precoding matrices corresponding to a precoding matrix 1 (that is, a TPMI is 1) and a precoding matrix 2 (that is, a TPMI is 2) may be understood as partial coherent transmission. Precoding matrices corresponding to a precoding matrix 3 (that is, a TPMI is 3) and a precoding matrix 4 (that is, a TPMI is 4) may be understood as full coherent transmission. In this example, it may be intuitively understood that for a four-transmit four-layer uplink precoding matrix, one row of the precoding matrix corresponds to one PUSCH antenna port/sounding reference signal (sounding reference signal, SRS) port, and one column of the precoding matrix corresponds to one uplink transmission layer (which may also be understood as one DMRS port). When a TPMI is 0, each PUSCH is sent only at one layer. When a TPMI is 1 or 2, each PUSCH may be sent at two layers. When a TPMI is 3 or 4, each PUSCH may be sent at four layers.

Table 1 Precoding matrix $W$ using four antenna ports for four-layer transmission

| TPMI | $W$ (the TPMI increases from left to right) | | | |
|---|---|---|---|---|
| 0 to 3 | $\frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\frac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\frac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\frac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\frac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

(2) PTRS-DMRS association relationship

There is an association relationship between a PTRS port and a DMRS port. A time-frequency resource location at which a PTRS signal is sent on the PTRS port may be determined based on the associated DMRS port. A base sequence corresponding to the PTRS signal is the same as that corresponding to the DMRS signal. For example, TPMI=0 in Table 1 is used as an example. If four DMRS ports are {0, 1, 12, 13}, the precoding matrix corresponds to one PTRS port, and the PTRS port is associated with the DMRS port 0, the PTRS is sent on the DMRS port 0.

A phase tracking reference signal-demodulation reference signal association (*PTRS-DMRS association*) field in DCI may indicate the PTRS-DMRS association relationship. There are two possibilities for the indication, that is, 0-bit or 2-bit.

Table 2 PTRS-DMRS association relationship for an uplink PTRS port 0 and a PTRS port 1

| Value of an MSB | DMRS Port | Value of an LSB | DMRS Port |
|---|---|---|---|
| 0 | 1st DMRS port sharing the PTRS port 0 | 0 | 1st DMRS port sharing the PTRS port 1 |
| 1 | 2nd DMRS port sharing the PTRS port 0 | 1 | 2nd DMRS port sharing the PTRS port 1 |

Table 2 shows an example of the PTRS-DMRS association relationship between the uplink PTRS port 0 and the PTRS port 1 and an association relationship indication method. In practice, the PTRS-DMRS association relationship may not be limited to the foregoing case, and the association relationship indication method is not limited thereto. This is merely an example herein.

A most significant bit (most significant bit, MSB) of the *PTRS-DMRS association* field indicates a DMRS port sharing the PTRS port 0, and a least significant bit (least significant bit, LSB) of the *PTRS-DMRS association* field indicates a DMRS port sharing the PTRS port 1.

Alternatively, an MSB of the *PTRS-DMRS association* field may indicate a DMRS port sharing the PTRS port 1, and an LSB of the *PTRS-DMRS association* field may indicate a DMRS port sharing the PTRS port 0.

(3) $\rho_{PTRS}^{PUSCH}$   per layer per resource element (resource element, RE)

The PUSCH-to-PTRS power factor $\rho_{PTRS}^{PUSCH}$ per layer per RE is a ratio of power of one PUSCH transmission layer to power of one PTRS port per layer per RE.

The power factor may be in linear domain. For example, transmit power of an uplink transmission layer corresponding to one PTRS port is 1/4 of total power of all uplink transmission layers, and this may be understood as that power of one PUSCH transmission layer is four times relative to that of one PTRS port in linear domain.

Alternatively, the power factor may be in dB domain. For example, transmit power of an uplink transmission layer corresponding to one PTRS port is 1/4 of total power of all uplink transmission layers, and this may be understood as that power of one PUSCH transmission layer is 6 dB relative to that of one PTRS port in dB domain.

An existing protocol specifies PUSCH-to-PTRS power factors per layer per RE in a case of 4T or less than 4T and four layers or fewer layers.

When $Q_p=\{1, 2\}$ PTRS ports are scheduled for a UE in an uplink, and a number of uplink scheduling layers/a number of PUSCH layers is $n_{layer}^{PUSCH}$::

(1) If a higher layer parameter ptrs-Power (carried in higher layer signaling: phase tracking reference signal-uplink configuration (*PTRS-UplinkConfig*)) is configured for the UE, the PUSCH-to-PTRS power factor $\rho_{PTRS}^{PUSCH}$ per layer per RE is obtained according to $\rho_{PTRS}^{PUSCH} = -\alpha_{PTRS}^{PUSCH} [dB]$, where $\alpha_{PTRS}^{PUSCH}$ is obtained according to the following Table 3. The higher layer parameter ptrs-Power determines which row in Table 3 is selected (corresponding to different power factor assumptions). A PTRS coefficient factor $\beta_{PTRS}$ is obtained jointly based on $\beta_{PTRS} = 10^{-\frac{\rho_{PTRS}^{PUSCH}}{20}}$ and a *'Precoding Information and Number of Layers'* field in downlink control information (downlink control information, DCI). The DCI indicates precoding information (precoding information) and a number $n_{layer}^{PUSCH}$ of PUSCH layers in columns in Table 3.

(2) When there is no *ptrs-Power* field in a higher layer configuration *PTRS-UplinkConfig,* or a PUSCH is transmitted based on a non-codebook (non-codebook), the UE shall assume that *ptrs-Power* is set to a state '00'.

Table 3 PUSCH-to-PTRS power factor $\rho_{PTRS}^{PUSCH}$ per layer per RE in a scenario of four layers or fewer layers

| Uplink PTRS power/ $\alpha_{PTRS}^{PUSCH}$ | Number $n_{layer}^{PUSCH}$ of PUSCH layers | | | | | | | |
|---|---|---|---|---|---|---|---|---|
| | 1 | 2 | | 3 | | 4 | | |
| | All cases | Full coherent | Partial coherent, non-coherent, and non-codebook based | Full coherent | Partial coherent, non-coherent, and non-codebook based | Full coherent | Partial coherent | Non-coherent and non-codebook based |
| 00 | 0 | 3 | $3Q_p$ - 3 | 4.77 | $3Q_p$ - 3 | 6 | $3Q_p$ | $3Q_p$ - 3 |
| 01 | 0 | 3 | 3 | 4.77 | 4.77 | 6 | 6 | 6 |
| 10 | Reserved | | | | | | | |
| 11 | Reserved | | | | | | | |

For each specific value in the table, a method for determining the value complies with a specific design rule. The following provides detailed descriptions.

First, for a second row, when *ptrs-Power* is set to a state '01', it can be learned that the foregoing power factor is related only to a number of uplink layers. In this case, it may be assumed that there is only one PTRS port. As shown in Table 3, for different numbers of uplink transmission layers, the power factor may be obtained through calculation according to $P = 10 * log10(L)$, where $L$ is the number of uplink transmission layers. It can be learned that the formula is a dB-based multiple relationship between a number of uplink transmission layers and power of a PTRS actually sent in the uplink.

Specifically, for one-layer uplink PUSCH transmission, only one uplink data layer is included, and a number of PTRS ports is also 1. In this case, transmit power of an uplink transmission layer corresponding to one PTRS port is the same as total power of all uplink transmission layers. This may be understood as that power of one PUSCH transmission layer is one time that of one PTRS port in linear domain, or is 0 dB (which may be obtained through calculation according to the foregoing formula) in dB domain, that is, a corresponding value in the table is 0.

For two-layer uplink PUSCH transmission, two uplink data layers are included, and a number of PTRS ports is 1. In this case, transmit power of an uplink transmission layer corresponding to one PTRS port is 1/2 of total power of all uplink transmission layers. This may be understood as that power of one PUSCH transmission layer is two times relative to that of one PTRS port in linear domain, or is 3 dB (which may be obtained through calculation according to the foregoing formula) in dB domain, that is, a corresponding value in the table is 3.

For three-layer uplink PUSCH transmission, three uplink data layers are included, and a number of PTRS ports is 1. In this case, transmit power of an uplink transmission layer corresponding to one PTRS port is 1/3 of total power of all uplink transmission layers. This may be understood as that power of one PUSCH transmission layer is three times relative to that of one PTRS port in linear domain, or is 4.77 dB (which may be obtained through calculation according to the foregoing formula) in dB domain, that is, a corresponding value in the table is 4.77.

For four-layer uplink PUSCH transmission, four uplink data layers are included, and a number of PTRS ports is 1. In this case, transmit power of an uplink transmission layer corresponding to one PTRS port is 1/4 of total power of all uplink transmission layers. This may be understood as that power of one PUSCH transmission layer is four times relative to that of one PTRS port in linear domain, or is 6 dB (which may be obtained through calculation according to the foregoing formula) in dB domain, that is, a corresponding value in the table is 6.

Go back to a first row. A case in which *ptrs-Power* is set to the state '00' is more complex. In this case, because different codebook forms and different numbers of PTRS ports are involved, understanding needs to be performed in correspondence with each value in the table. Descriptions are separately provided herein based on different codebook forms.

First, for full coherent codebook based transmission, all PUSCH antenna ports correspond to a same antenna coherence group, and each PUSCH antenna port may separately perform full-power sending. This is similar to the case in which the *ptrs-Power* field is set to the state '01'. It can be learned that the foregoing power factor is related only to the number of uplink transmission layers. In this case, it may be assumed that there is only one PTRS port. As shown in Table 3, for different numbers of uplink transmission layers, the power factor may be obtained through calculation according to $P = 10 * log10(L)$, where $L$ is the number of uplink transmission layers. It can be learned that the formula is a dB-based multiple relationship between a number of uplink transmission layers and power of a PTRS actually sent in the uplink. It can be learned that a specific PUSCH-to-PTRS power factor corresponding to one/two/three/four layers in Table 2 is the same as that obtained when *ptrs-Power* is set to the state '01'.

Second, for non-coherent codebook based transmission, when *ptrs-Power* is set to the state '00', power of each PUSCH port cannot be increased to total transmit power of the UE (it may be understood herein that when *ptrs-Power* is set to the state '01', the power of each PUSCH port may be increased to the total transmit power, and this is also one of the most important differences between the state '00' and the state '01'; and another key difference is that assumptions about the number of PTRS ports are different, where it is assumed in the state '01' that the number of PTRS ports is 1, and the number of PTRS ports corresponding to the state '00' is a variable value: 1 or 2), and PTRS transmission can be performed only based on power corresponding to one PUSCH port.

A method for increasing power of a PTRS port is described herein by using a scenario of non-coherent codebook based transmission, a '00' row in a PTRS power algorithm, and uplink rank 4 as an example.

In this case, for a scenario in which there are a plurality of PTRS ports, the following Table 4 is used as an example. A vertical axis corresponds to a subcarrier identifier, a horizontal axis corresponds to a number of continuous OFDM symbols for a PUSCH, and a blank location may be understood as that an uplink data signal is sent. It is assumed that precoding for PUSCH transmission is a precoding matrix corresponding to a TPMI=0 in Table 1. In addition, it is assumed that DMRS port indications corresponding to four uplink transmission layers are {0, 1, 12, 13}, where 12 and 13 are DMRS ports newly added in the protocol. For a DMRS port indication method, refer to the conventional technology.

FIG. 2 is an example diagram of associating a PTRS port with a DMRS port according to an embodiment of this application. It can be learned that a PUSCH port 0 and a PUSCH port 2 share a PTRS port 0, and a PUSCH port 1 and a PUSCH port 3 share a PTRS port 1. When *ptrs-Power* is set to the state '00', it is assumed that a value of a 2-bit indication that indicates a PTRS-DMRS association relationship is "01" (corresponding to the following Table 4). In this scenario, in Table 4, the PTRS p 0 corresponding to a first RE (a subcarrier 6# and a symbol 3#) sends a PTRS through the PUSCH port 0, and precoding and a sequence of the PTRS p 0 are determined based on precoding and a sequence corresponding to a DMRS port 0. In Table 4, the PTRS p 1 corresponding to a second RE (a subcarrier 7# and the symbol 3#) sends a PTRS through the PUSCH port 3, and precoding and a sequence of the PTRS p 1 are determined based on precoding and a sequence corresponding to a DMRS port 13. It may be understood that in this scenario, the DMRS port 0 and a DMRS port 12 share the PTRS p 0, and a DMRS port 1 and the DMRS port 13 share the PTRS p 1. A DMRS port associated with a PTRS is determined based on the indicated PTRS-DMRS association relationship, and a PTRS is sent based on a sequence and a time-frequency resource that correspond to the DMRS port and a TPMI corresponding to the DMRS port.

In this case, a plurality of PTRS ports are frequency-division multiplexed on a same OFDM symbol (in Table 4, the PTRS p 0 and the PTRS p 1 are frequency-division multiplexed on the symbol 3#), and a PUSCH is not sent on subcarriers occupied by the PTRS ports (in Table 4, the PUSCH is not sent on the subcarrier 6# and the subcarrier 7#). As a result, a same PUSCH port such as the PUSCH port 0 in this example neither sends data on the first RE nor sends data on the second RE. Therefore, transmit power of the PUSCH port 0 on the second RE may be "borrowed" to increase power for sending of the PTRS p 0. This may also be understood as that a PUSCH-to-PTRS power factor per layer per RE is two times, and corresponds to an increase of 3 (3*2-3) dB when a value of $Q_p$ is 2 in Table 3. Similarly, in this case, a power increase coefficient of the PTRS port 1 is also 3 dB.

Based on this understanding, a method for determining a power factor of a PTRS in a partial coherent codebook based transmission scenario may be correspondingly understood.

Table 4 Example of a time-frequency resource for a PTRS

| Subcarrier/Symbol | 2 | 3 | 4 | 5 | 6 | 7 | 8 | 9 | 10 |
|---|---|---|---|---|---|---|---|---|---|
| 0 | 0 1 12 13 | | | | | | | | |
| 1 | 0 1 12 13 | | | | | | | | |
| 2 | 23 14 15 | | | | | | | | |
| 3 | 23 14 15 | | | | | | | | |
| 4 | 4 5 16 17 | | | | | | | | |
| 5 | 4 5 16 17 | | | | | | | | |
| 6 | 0 1 12 13 | PTRS 0 | - | - | - | - | - | - | - |
| 7 | 0 1 12 13 | PTRS 1 | - | - | - | - | - | - | - |
| 8 | 23 14 15 | | | | | | | | |
| 9 | 23 14 15 | | | | | | | | |
| 10 | 4 5 16 17 | | | | | | | | |
| 11 | 4 5 16 17 | | | | | | | | |
| 12 | 0 1 12 13 | | | | | | | | |
| 13 | 0 1 12 13 | | | | | | | | |
| 14 | 23 14 15 | | | | | | | | |
| 15 | 23 14 15 | | | | | | | | |
| 16 | 4 5 16 17 | | | | | | | | |
| 17 | 4 5 16 17 | | | | | | | | |
| 18 | 0 1 12 13 | | | | | | | | |
| 19 | 0 1 12 13 | | | | | | | | |
| 20 | 23 14 15 | | | | | | | | |
| 21 | 23 14 15 | | | | | | | | |
| 22 | 4 5 16 17 | | | | | | | | |
| 23 | 4 5 16 17 | | | | | | | | |
| 24 | 0 1 12 13 | | | | | | | | |
| 25 | 0 1 12 13 | | | | | | | | |
| 26 | 23 14 15 | | | | | | | | |
| 27 | 23 14 15 | | | | | | | | |

(continued)

| Subcarrier/Symbol | 2 | 3 | 4 | 5 | 6 | 7 | 8 | 9 | 10 |
|---|---|---|---|---|---|---|---|---|---|
| 28 | 4 5 16 17 | | | | | | | | |
| 29 | 4 5 16 17 | | | | | | | | |
| 30 | 0 1 12 13 | PTRS 0 | - | - | - | - | - | - | - |
| 31 | 0 1 12 13 | PTRS 1 | - | - | - | - | - | - | - |
| 32 | 23 14 15 | | | | | | | | |
| 33 | 23 14 15 | | | | | | | | |
| 34 | 4 5 16 17 | | | | | | | | |
| 35 | 4 5 16 17 | | | | | | | | |

However, the conventional technology does not support a PUSCH sending capability of more than 4T and/or more than four layers in an uplink. Therefore, in a scenario of more than 4T and/or more than four layers, there is no corresponding solution currently for how to determine transmit power of a PTRS, specifically, how to determine a PUSCH-to-PTRS power factor per layer per RE.

In view of this, this application provides a communication solution. A terminal obtains at least one correspondence between a power factor P and at least one of a number L of uplink transmission layers, precoding information, and a number $Q_P$ of phase tracking reference signal PTRS ports, where L ranges from 1 to 8; receives downlink control information, where the downlink control information indicates at least one of the following information: first precoding information, a first number of uplink transmission layers, and a first SRI; and determines, based on the at least one correspondence and the downlink control information, first P corresponding to at least one of the first precoding information, the first number of uplink transmission layers, and the first SRI. Therefore, in a scenario in which the number of uplink transmission layers ranges from 1 to 8, the terminal and a network device may accurately determine a power factor of a PTRS based on the at least one correspondence and the downlink control information, improving resource utilization.

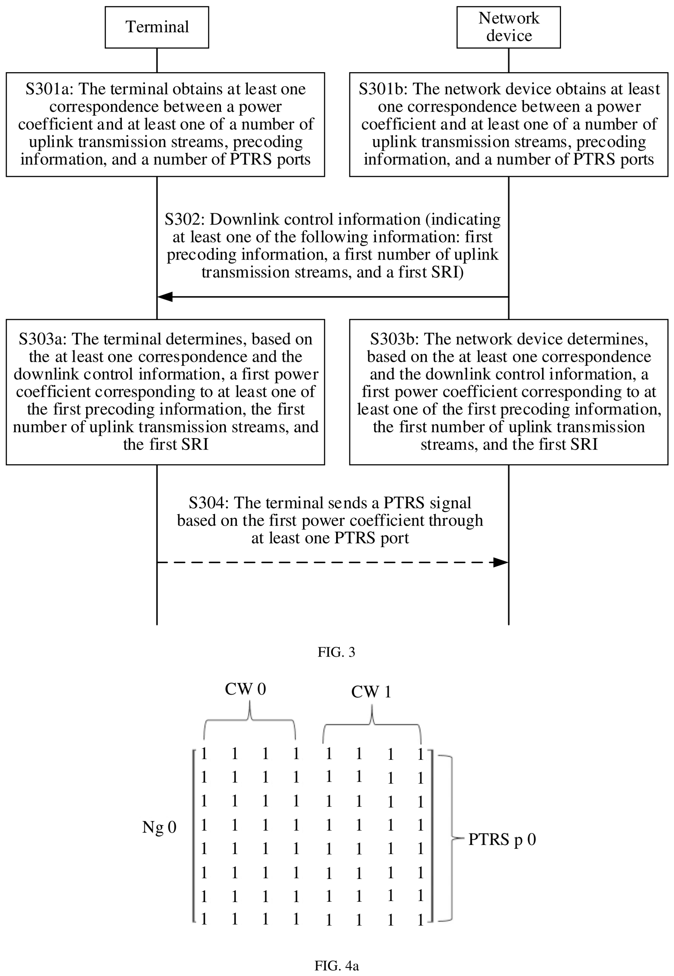

FIG. 3 is a schematic flowchart of a communication method according to an embodiment of this application. For example, the method may include the following steps.

S301a: A terminal obtains at least one correspondence between a power factor P and at least one of a number L of uplink transmission layers, precoding information, and a number $Q_P$ of PTRS ports, where P is a power ratio of a physical uplink shared channel to a PTRS on per layer per resource element, and the number of uplink transmission layers ranges from 1 to 8.

S301b: A network device obtains at least one correspondence between a power factor P and at least one of a number L of uplink transmission layers, precoding information, and a number $Q_P$ of PTRS ports.

Herein, P may be understood as the foregoing first factor $\alpha_{PTRS}^{PUSCH}$, second factor $\rho_{PTRS}^{PUSCH}$, or third factor $\beta_{PT\text{-}RS,i}$, where $\rho_{PTRS}^{PUSCH} = -\alpha_{PTRS}^{PUSCH}[\text{dB}]$, and $\beta_{PT\text{-}RS,i} = 10^{\frac{-\rho_{PTRS}^{PUSCH}}{20}}$. $a_{k,l}^{(p,\mu)} = \beta_{PT\text{-}RS,i} r_k$, $a_{k,l}^{(p,\mu)}$ is a sequence of a PTRS signal, $l$ is a time domain position corresponding to the PTRS signal, k is a frequency domain position corresponding to the PTRS signal, p is a port number, $\mu$ is a subcarrier spacing, $\beta_{PT\text{-}RS,i}$ is a power factor, and $r_k$ is a base sequence.

For 1T to 8T and one to eight layers, there is the at least one correspondence between a power factor P and at least one of a number L of uplink transmission layers, precoding information, and a number $Q_P$ of PTRS ports.

Before the at least one correspondence is determined, a possible number $Q_P$ of PTRS ports is first determined.

The number of PTRS ports may be determined through reporting by a UE or configuring by the network device by using higher layer signaling. For example, the UE may send second information to the network device, where the second information includes uplink data information such as a number of PTRS ports or a maximum number of PTRS ports supported by the UE, a number of supported Ngs, and a supported PUSCH transmission mode. For another example, the network device may send third information to the terminal, where the third information includes the number of PTRS ports configured by the network device. For example, the number of PTRS ports configured by the network device may be less than or equal to the number of PTRS ports that is supported by the UE and that is reported by the UE. In addition, generally, the number $Q_P$ of PTRS ports is not greater than the number $N_g$ of antenna coherence groups supported by the UE. For a UE that supports uplink 8T eight-layer transmission, the number of PTRS ports may be 2 or 4. The maximum number of supported PTRS ports or a maximum number of PTRS ports may be reported based on a capability of the UE. It is assumed that a number of PUSCH ports bound to one PTRS port is greater than or equal to a number of PUSCH ports corresponding to one layer. For a UE for which Ng≤2, a maximum number of supported PTRS ports or a maximum number of PTRS ports is 2. For a UE for which Ng=4, a maximum number of supported PTRS ports or a maximum number of PTRS ports may be 2 or 4. When Ng=2, data of one layer is sent through a maximum of four DMRS ports, and the maximum number of PTRS ports is less than or equal to 2. When Ng=4, data of one layer is sent through a maximum of two DMRS ports, and the maximum number of PTRS ports is less than or equal to 4.

Certainly, even if the supported Ng=4, the terminal may report that only one PTRS port is supported. In other words, as long as the number of PTRS ports is less than or equal to the number of Ngs, and the terminal supports a corresponding number of PTRS ports, such a configuration of the number of PTRS ports is reasonable.

In conclusion, for an uplink 8T terminal, there may be the following several cases for the number of PTRS ports.

Case (1): Ng=1, and the number of PTRS ports is 1.
Case (2): Ng=2, and the number of PTRS ports is 1.
Case (3): Ng=2, and the number of PTRS ports is 2.
Case (4): Ng=4, and the number of PTRS ports is 2.
Case (5): Ng=4, and the number of PTRS ports is 4.

The following separately discusses, based on the foregoing five cases for the number of PTRS ports, how to determine a PUSCH-to-PTRS power factor per layer per RE in a case of 8T and eight layers. Certainly, this is not limited to 8T in this application, and may alternatively be 1T to 7T. The following uses 8T as an example for description. This method is used for similar determining in a case of another number of Ts.

TPMI forms corresponding to three PUSCH transmission modes are first described. In an uplink eight-antenna PUSCH transmission mode, a precoding matrix may be an Nt*NL matrix, where Nt is a number of transmit antennas, and NL is a number of uplink transmission layers.

(1) Full coherent transmission mode

The following precoding matrix is used as an example. An implementation of an eight-antenna eight-layer full coherent codebook is described.

$$\frac{1}{\sqrt{\sum_{x=1}^{Nt} \sum_{y=1}^{NL} a^2_{x,y}}} \begin{bmatrix} a_{1,1} & a_{2,1} & a_{3,1} & a_{4,1} & a_{5,1} & a_{6,1} & a_{7,1} & a_{8,1} \\ a_{1,2} & a_{2,2} & a_{3,2} & a_{4,2} & a_{5,2} & a_{6,2} & a_{7,2} & a_{8,2} \\ a_{1,3} & a_{2,3} & a_{3,3} & a_{4,3} & a_{5,3} & a_{6,3} & a_{7,3} & a_{8,3} \\ a_{1,4} & a_{2,4} & a_{3,4} & a_{4,4} & a_{5,4} & a_{6,4} & a_{7,4} & a_{8,4} \\ a_{1,5} & a_{2,5} & a_{3,5} & a_{4,5} & a_{5,5} & a_{6,5} & a_{7,5} & a_{8,5} \\ a_{1,6} & a_{2,6} & a_{3,6} & a_{4,6} & a_{5,6} & a_{6,6} & a_{7,6} & a_{8,6} \\ a_{1,7} & a_{2,7} & a_{3,7} & a_{4,7} & a_{5,7} & a_{6,7} & a_{7,7} & a_{8,7} \\ a_{1,8} & a_{2,8} & a_{3,8} & a_{4,8} & a_{5,8} & a_{6,8} & a_{7,8} & a_{8,8} \end{bmatrix}$$

An element in an $x^{th}$ row and a $y^{th}$ column in the precoding matrix is represented as $a_{x,y}$. Herein, $a_{x,y}$ may be a real number whose modulus is 1, and a specific value of $a_{x,y}$ is usually {1, -1, j, -j}. $\frac{1}{\sqrt{\sum_{x=1}^{Nt} \sum_{y=1}^{NL} a^2_{x,y}}}$ is a power coefficient of the precoding matrix, and may be used to ensure same power for each PUSCH port and each precoding matrix. There is no element 0 in the Nt*NL precoding matrix for the full coherent codebook. In the following discussed codewords, an example in which a value of an element in the precoding matrix is usually 1 is used, and another value is not excluded herein.

(2) Partial coherent transmission mode

$$\frac{1}{\sqrt{\sum_{x=1}^{Nt}\sum_{y=1}^{NL}a^2{}_{x,y}}}\begin{bmatrix} a_{1,1} & a_{2,1} & a_{3,1} & a_{4,1} & 0 & 0 & 0 & 0 \\ a_{1,2} & a_{2,2} & a_{3,2} & a_{4,2} & 0 & 0 & 0 & 0 \\ a_{1,3} & a_{2,3} & a_{3,3} & a_{4,3} & 0 & 0 & 0 & 0 \\ a_{1,4} & a_{2,4} & a_{3,4} & a_{4,4} & 0 & 0 & 0 & 0 \\ 0 & 0 & 0 & 0 & a_{5,5} & a_{6,5} & a_{7,5} & a_{8,5} \\ 0 & 0 & 0 & 0 & a_{5,6} & a_{6,6} & a_{7,6} & a_{8,6} \\ 0 & 0 & 0 & 0 & a_{5,7} & a_{6,7} & a_{7,7} & a_{8,7} \\ 0 & 0 & 0 & 0 & a_{5,8} & a_{6,8} & a_{7,8} & a_{8,8} \end{bmatrix}$$

An element in an $x^{th}$ row and a $y^{th}$ column in the precoding matrix is represented as $a_{x,y}$. Herein, $a_{x,y}$ may be a real number whose modulus is 1, and a specific value of $a_{x,y}$ is usually {1, -1, j, -j}. $\frac{1}{\sqrt{\sum_{x=1}^{Nt}\sum_{y=1}^{NL}a^2{}_{x,y}}}$ is a power coefficient of the precoding matrix, and may be used to ensure same power for each PUSCH port and each precoding matrix. There is no element 0 in the Nt*NL precoding matrix for a partial coherent codebook. There is an element whose value is 0 in the precoding matrix for the partial coherent codebook. In the following discussed codewords, an example in which a value of an element in the precoding matrix is usually 1 is used, and another value is not excluded herein.

(3) Non-coherent transmission mode

$$\frac{1}{\sqrt{\sum_{x=1}^{Nt}\sum_{y=1}^{NL}a^2{}_{x,y}}}\begin{bmatrix} a_{1,1} & 0 & 0 & 0 & 0 & 0 & 0 & 0 \\ 0 & a_{2,2} & 0 & 0 & 0 & 0 & 0 & 0 \\ 0 & 0 & a_{3,3} & 0 & 0 & 0 & 0 & 0 \\ 0 & 0 & 0 & a_{4,4} & 0 & 0 & 0 & 0 \\ 0 & 0 & 0 & 0 & a_{5,5} & 0 & 0 & 0 \\ 0 & 0 & 0 & 0 & 0 & a_{6,6} & 0 & 0 \\ 0 & 0 & 0 & 0 & 0 & 0 & a_{7,7} & 0 \\ 0 & 0 & 0 & 0 & 0 & 0 & 0 & a_{8,8} \end{bmatrix}$$

An element in an $x^{th}$ row and a $y^{th}$ column in the precoding matrix is represented as $a_{x,y}$. Herein, $a_{x,y}$ may be a real number whose modulus is 1, and a specific value of $a_{x,y}$ is usually {1, -1, j, -j}. $\frac{1}{\sqrt{\sum_{x=1}^{Nt}\sum_{y=1}^{NL}a^2{}_{x,y}}}$ is a power coefficient of the precoding matrix, and may be used to ensure same power for each PUSCH port and each precoding matrix. There is an element whose value is 0 in the precoding matrix for a non-coherent codebook. In the following discussed codewords, an example in which a value of an element in the precoding matrix is usually 1 is used, and another value is not excluded herein.

For the full coherent/partial coherent/non-coherent codebook form, an order of columns in a same codeword is not limited.

In a scenario of fewer than eight layers, a codebook is a subset of the foregoing codebooks.

In this embodiment, when the network device configures one PTRS port, the PUSCH-to-PTRS power factor per layer per RE may be represented as $P$ = 10 * $log$10($Q_p$ * $L_p$), where $Q_P$ is the number of PTRS ports, and $L_p$ is a number of uplink transmission layers associated with one PTRS port. When the network device configures two or more PTRS ports, the PUSCH-to-PTRS power factor per layer per RE may be represented as $P$ = 10 * $log$10($Q_p$ * $L_{Ng}$), where $Q_P$ is the number of PTRS ports, and $L_{Ng}$ is a number of uplink transmission layers corresponding to one antenna coherence group Ng.

Case (1): Ng=1, and the number of PTRS ports is 1.

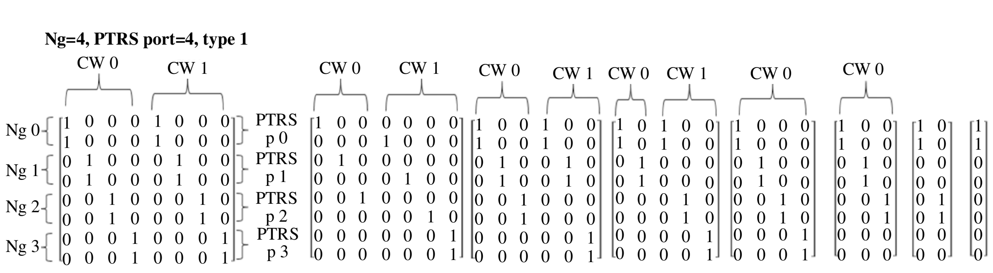

This case corresponds to a full coherent transmission scenario. In this case, the PUSCH-to-PTRS power factor per layer per RE is related only to a total number of uplink transmission layers. FIG. 4a is an example diagram of an 8T eight-layer precoding matrix according to an embodiment of this application. For each uplink antenna port (a row of a codebook), a complex number (which only uses 1 as an example herein, and includes but is not limited to another complex number value) of a same amplitude is sent at each uplink transmission layer (a column of the codebook). In this scenario, a PTRS port 0 is associated with only one uplink transmission layer, that is, only a precoding vector corresponding to a complex number in the only one layer (one column) among eight layers (eight layers are used as an example herein, and an actual number of layers may range from 1 to 8) needs to be sent. In this case, it may be understood that a full coherent antenna coherence capability means that power may be "borrowed" between different uplink antenna ports. To be specific, power corresponding to the PTRS port for the one layer may be the same as power used by the UE to send uplink data of the eight layers, or in other words, if a PTRS is sent based on power of the one uplink data layer, power of the PTRS port 0 is 1/8 of uplink transmit power, that is, a linear value of the power of the PTRS port may be increased by eight times, that is, 9 dB.

Similarly, in a case of 8T and seven layers, power corresponding to the PTRS port for the one layer may be the same as power used by the UE to send uplink data of the seven layers, or in other words, if a PTRS is sent based on power of the one uplink data layer, power of the PTRS port 0 is 1/7 of uplink transmit power, that is, a linear value of the power of the PTRS port may be increased by seven times, that is, 8.45 dB.

In a case of 8T and six layers, power corresponding to the PTRS port for the one layer may be the same as power used by the UE to send uplink data of the six layers, or in other words, if a PTRS is sent based on power of the one uplink data layer, power of the PTRS port 0 is 1/6 of uplink transmit power, that is, a linear value of the power of the PTRS port may be increased by six times, that is, 7.78 dB.

In a case of 8T and five layers, power corresponding to the PTRS port for the one layer may be the same as power used by the UE to send uplink data of the five layers, or in other words, if a PTRS is sent based on power of the one uplink data layer, power of the PTRS port 0 is 1/5 of uplink transmit power, that is, a linear value of the power of the PTRS port may be increased by five times, that is, 7 dB.

In a case of 8T and four layers, power corresponding to the PTRS port for the one layer may be the same as power used by the UE to send uplink data of the four layers, or in other words, if a PTRS is sent based on power of the one uplink data layer, power of the PTRS port 0 is 1/4 of uplink transmit power, that is, a linear value of the power of the PTRS port may be increased by four times, that is, 6 dB.

In a case of 8T and three layers, power corresponding to the PTRS port for the one layer may be the same as power used by the UE to send uplink data of the three layers, or in other words, if a PTRS is sent based on power of the one uplink data layer, power of the PTRS port 0 is 1/3 of uplink transmit power, that is, a linear value of the power of the PTRS port may be increased by three times, that is, 4.77 dB.

In a case of 8T and two layers, power corresponding to the PTRS port for the one layer may be the same as power used by the UE to send uplink data of the two layers, or in other words, if a PTRS is sent based on power of the one uplink data layer, power of the PTRS port 0 is 1/2 of uplink transmit power, that is, a linear value of the power of the PTRS port may be increased by two times, that is, 3 dB.

In a case of 8T and one layer, power corresponding to the PTRS port for the one layer may be the same as power used by the UE to send uplink data of the one layer, and a linear value of the power of the PTRS port may be increased by 0 dB.

To be specific, in the full coherent transmission scenario, a relationship between a PUSCH-to-PTRS power factor per layer per RE and a total number of uplink transmission layers is as follows.

Table 5

| Number of uplink transmission layers | $P$ (unit: dB) |
|---|---|
| 1 | 0 |
| 2 | 3 |
| 3 | 4.77 |
| 4 | 6 |
| 5 | 7 |
| 6 | 7.78 |
| 7 | 8.45 |
| 8 | 9 |

According to the foregoing descriptions, in this case, the PUSCH-to-PTRS power factor per layer per RE may be determined according to the following formula:

$$P = 10 * log10(L)$$

The formula may be understood as a special example of the formula $P = 10 * log10(Q_p * L_p)$, that is, $Q_p = 1$; or may be understood as a special example of the formula $P = 10 * log10(Q_p * L_{Ng})$, that is, $Q_P = 1$.

A method for determining a power factor in a full coherent antenna coherence form has strong reference for methods for determining a power factor in the following several cases. A main commonality is that when the number of antenna coherence groups Ng is greater than 1, understanding may also be performed in an Ng according to the full coherent antenna coherence form. Power may be "borrowed" between different layers in a same Ng, or in other words, total power in a same Ng is fixed, and when a PTRS is sent by only one PTRS port, all of the power may be allocated to the PTRS port; and when data of one or more layers is sent, the power may be evenly allocated to these data layers.

Case (2): Ng=2, and the number of PTRS ports is 1.

The PUSCH-to-PTRS power factor per layer per RE is related to a number of PUSCH layers sent by each Ng. A PTRS port considers only a constraint condition that total power in the Ng is fixed, that is, only power of a different layer in the Ng is borrowed, and power brought by a time-frequency resource occupied by the PTRS port is not additionally borrowed. It may be represented as $P = 10 * log10(L_{Ng})$. This formula may be understood as a special example of the formula $P = 10 * log10(Q_p * L_p)$, that is, $Q_p = 1$.

Case (3-1): Ng=2, and the number of PTRS ports is 2.

This case corresponds to a partial coherent transmission scenario. For example, codebooks in each Ng are fully coherent, that is, precoding matrices corresponding to all PUSCH transmission layers corresponding to the Ng do not include an element whose modulus is 0. Based on different codebook forms (including a type 1 and a type 2), the following describes the PUSCH-to-PTRS power factor per layer per RE in different cases.

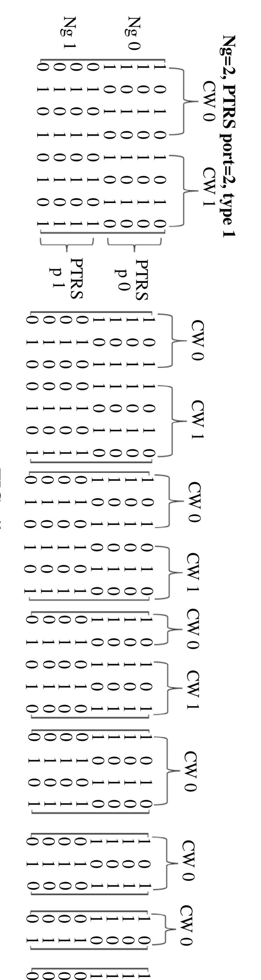

FIG. 4b shows an example of precoding matrices in a case of 8T and one to eight layers when Ng=2, the number of PTRS ports is 2, and a codebook form 1 is used.

In a case of 8T and eight layers, as shown in the first figure from the left in FIG. 4b, the UE may support a maximum of two PTRS ports. An Ng 0 includes uplink PUSCH ports 0 to 3, and an Ng 1 includes uplink PUSCH ports 4 to 7. It can be learned that power is configured at four layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, only power of a different layer in the Ng 0 is borrowed. It may be represented as $P = 10 * log10(L_{Ng0})$. If the PTRS port 0 is associated with a DMRS port 0 for a codeword (codeword, CW) 0, power of the PTRS port 0 is increased by four times relative to that of a PUSCH port, and the power increase has a linear value of four times, or is 6 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 4)=9$ dB, that is, eight times, relative to that of the PUSCH port, and the power increase has a linear value of eight times.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by eight times relative to that of a PUSCH port, and the power increase has a linear value of eight times, or is 9 dB in logarithm domain.

In a case of 8T and seven layers, as shown in the second figure from the left in FIG. 4b, the UE may support a maximum of two PTRS ports. An Ng 0 includes uplink PUSCH ports 0 to 3, and an Ng 1 includes uplink PUSCH ports 4 to 7. It can be learned that power is configured at four layers in the Ng 0, and power is configured at only three layers in the Ng 1. When the network device configures one PTRS port (for example, a PTRS port 0), the PTRS port 0 considers only a constraint condition that total power in the Ng 0 is fixed, that is, only power of a different layer in the Ng 0 is borrowed. It may be represented as $P = 10 * log10(L_{Ng0})$. In this case, power of the PTRS port 0 is increased by four times relative to that of a PUSCH port, and the power increase has a linear value of four times, or is 6 dB in logarithm domain. When the network device configures one PTRS port (for example, a PTRS port 1), the PTRS port 1 considers only a constraint condition that total power in the Ng 1 is fixed, that is, only power of a different layer in the Ng 1 is borrowed. It may be represented as $P = 10 * log10(L_{Ng1})$. If the PTRS port 1 is associated with a DMRS port 4 for a CW 1, power of the PTRS port 1 is increased by three times relative to that of a PUSCH port, and the power increase has a linear value of three times, or is 4.77 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(2 * 4) = 9$ dB, that is, eight times, relative to that of the PUSCH port, and the power increase has a linear value of eight times; and the power of the PTRS port 1 may be increased by $P = 10 * log10(2 * 3) = 7.78$ dB, that is, six times, relative to that of the PUSCH port, and the power increase has a linear value of six times.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by seven times relative to that of a PUSCH port, and the power increase has a linear value of seven times, or is 8.45 dB in logarithm domain.

In a case of 8T and six layers, as shown in the third figure from the left in FIG. 4b, the UE may support a maximum of two PTRS ports. An Ng 0 includes uplink PUSCH ports 0 to 3, and an Ng 1 includes uplink PUSCH ports 4 to 7. It can be learned that power is configured at three layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, only power of a different layer in the Ng 0 is borrowed. It may be represented as $P = 10 * log10(L_{Ng0})$. If the PTRS port 0 is associated with a DMRS port 0, power of the PTRS port 0 is increased by three times relative to that of a PUSCH port, and the power increase has a linear value of three times, or is 4.77 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 3) = 7.78$ dB, that is, six times, relative to that of the PUSCH port, and the power increase has a linear value of six times.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by six times relative to that of a PUSCH port, and the power increase has a linear value of six times, or is 7.78 dB in logarithm domain.

In a case of 8T and five layers, as shown in the fourth figure from the left in FIG. 4b, the UE may support a maximum of two PTRS ports. An Ng 0 includes uplink PUSCH ports 0 to 3, and an Ng 1 includes uplink PUSCH ports 4 to 7. It can be learned that power is configured at three layers in the Ng 0, and power is configured at only two layers in the Ng 1. When the network device configures one PTRS port (for example, a PTRS port 0), the PTRS port 0 considers only a constraint condition that total power in the Ng 0 is fixed is considered, that is, only power of a different layer in the Ng 0 is borrowed. It may be represented as $P = 10 * log10(L_{Ng0})$. In this case, power of the PTRS port 0 is increased by three times relative to that of a PUSCH port, and the power increase has a linear value of three times, or is 4.77 dB in logarithm domain. When the network device configures one PTRS port (for example, a PTRS port 1), the PTRS port 1 considers only a constraint condition that total power in the Ng 1 is fixed, that is, only power of a different layer in the Ng 1 is borrowed. It may be represented as $P = 10 * log10(L_{Ng1})$. In this case, power of the PTRS port 1 is increased by two times relative to that of a PUSCH port, and the power increase has a linear value of two times, or is 3 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(2 * 3) = 7.78$ dB, that is, six times, relative to that of the PUSCH port, and the power increase has a linear value of six times; and the power of the PTRS port 1 may be increased by $P = 10 * log10(2 * 2) = 6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by five times relative to that of a PUSCH port, and the power increase has a linear value of five times, or is 7 dB in logarithm domain.

In a case of 8T and four layers, as shown in the fifth figure from the left in FIG. 4b, the UE may support a maximum of two PTRS ports. An Ng 0 includes uplink PUSCH ports 0 to 3, and an Ng 1 includes uplink PUSCH ports 4 to 7. It can be learned that power is configured at two layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, only power of a different layer in the Ng 0 is borrowed. It may be represented as $P = 3Q_p$. In this case, power of the PTRS port 0 is increased by 3*1=4.77 dB, that is, three times, relative to that of a PUSCH port, and the power increase has a linear value of three times. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by $P = 3Q_p$=3*2=7.78 dB, that is, six times, relative to that of the PUSCH port, and the power increase has a linear value of six times.

The foregoing is a value of P in the partial coherent mode when a PTRS port can borrow power of a different layer in an Ng in which the PTRS port is located and/or power on a frequency domain resource occupied by another PTRS port in the case of 8T and four layers.

In the case of 8T and four layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by four times relative to that of a PUSCH port, and the power increase has a linear value of four times, or is 6 dB in logarithm domain.

In a case of 8T and three layers, as shown in the sixth figure from the left in FIG. 4b, the UE may support a maximum of two PTRS ports. An Ng 0 includes uplink PUSCH ports 0 to 3, and an Ng 1 includes uplink PUSCH ports 4 to 7. It can be learned that power is configured at two layers in the Ng 0, and power is configured at only one layer in the Ng 1. When the network device configures one PTRS port (for example, a PTRS port 0), the PTRS port 0 considers only a constraint condition that total power in the Ng 0 is fixed, that is, only power of a different layer in the Ng 0 is borrowed. It may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, a PTRS port 1), power of the PTRS port 1 is increased by zero times relative to that of a PUSCH port, and the power increase has a linear value of zero times, or is 0 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(2 * 2)$=6 dB, that is, four times, relative to that of the PUSCH port, and the power increase has a linear value of four times; and the power of the PTRS port 1 may be increased by $P = 10 * log10(2 * 1)$=3 dB, that is, two times, relative to that of the PUSCH port, and the power increase has a linear value of two times.

The foregoing is a value of P in the partial coherent mode when a PTRS port can borrow power of a different layer in an Ng in which the PTRS port is located and/or power on a frequency domain resource occupied by another PTRS port in the case of 8T and three layers.

In the case of 8T and three layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by three times relative to that of a PUSCH port, and the power increase has a linear value of three times, or is 4.77 dB in logarithm domain.

In a case of 8T and two layers, as shown in the seventh figure from the left in FIG. 4b, the UE may support a maximum of two PTRS ports. An Ng 0 includes uplink PUSCH ports 0 to 3, and an Ng 1 includes uplink PUSCH ports 4 to 7. It can be learned that power is configured at one layer in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, only power of a different layer in the Ng 0 is borrowed. It may be represented as $P = 3Q_p - 3$. In this case, power of the PTRS port 0 is increased by 3*1-3=0 dB, that is, zero times, relative to that of a PUSCH port, and the power increase has a linear value of zero times. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by $P = 3Q_p - 3 = 3*2-3=3$ times relative to that of the PUSCH port, and the power increase has a linear value of three times, or is 4.47 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and two layers.

In the case of 8T and two layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by two times relative to that of a PUSCH port, and the power increase has a linear value of two times, or is 3 dB in logarithm domain.

In a case of 8T and one layer, as shown in the eighth figure from the left in FIG. 4b, the UE may support a maximum of two PTRS ports. An Ng 0 includes uplink PUSCH ports 0 to 3, and an Ng 1 includes uplink PUSCH ports 4 to 7. It can be learned that power is configured at one layer in the Ng 0, and no power is configured in the Ng 1. When the network device configures a PTRS port 0, a power increase of the PTRS port 0 relative to a PUSCH port has a linear value of zero times, or is 0 dB in logarithm domain.

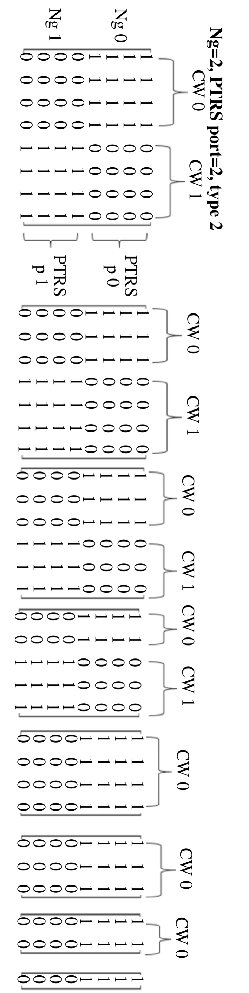

FIG. 4c shows an example of precoding matrices in a case of 8T and one to eight layers when Ng=2, the number of PTRS ports is 2, and a codebook form 2 is used.

In a case of 8T and eight layers, as shown in the first figure from the left in FIG. 4c, the UE may support a maximum of two PTRS ports. An Ng 0 includes uplink PUSCH ports 0 to 3, and an Ng 1 includes uplink PUSCH ports 4 to 7. It can be learned that power is configured at four layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, only power of a different layer in the Ng 0 is borrowed. It may be represented as $P = 10 * log10(L_{Ng0})$. In this case, power of the PTRS port 0 is increased by four times relative to that of a PUSCH port, and the power increase has a linear value of four times, or is 6 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 4)=9$ dB, that is, eight times, relative to that of the PUSCH port, and the power increase has a linear value of eight times.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by eight times relative to that of a PUSCH port, and the power increase has a linear value of eight times, or is 9 dB in logarithm domain.

In a case of 8T and seven layers, as shown in the second figure from the left in FIG. 4c, the UE may support a maximum of two PTRS ports. An Ng 0 includes uplink PUSCH ports 0 to 3, and an Ng 1 includes uplink PUSCH ports 4 to 7. It can be learned that power is configured at three layers in the Ng 0, and power is configured at four layers in the Ng 1. When the network device configures one PTRS port (for example, a PTRS port 0), the PTRS port 0 considers only a constraint condition that total power in the Ng 0 is fixed, that is, only power of a different layer in the Ng 0 is borrowed. It may be represented as $P = 10 * log10(L_{Ng0})$. In this case, power of the PTRS port 0 is increased by three times relative to that of a PUSCH port, and the power increase has a linear value of three times, or is 4.77 dB in logarithm domain. When the network device configures one PTRS port (for example, a PTRS port 1), the PTRS port 1 considers only a constraint condition that total power in the Ng 1 is fixed, that is, only power of a different layer in the Ng 1 is borrowed. It may be represented as $P = 10 * log10(L_{Ng1})$. If the PTRS port 1 is associated with a DMRS port 3 for a CW 1, power of the PTRS port 1 is increased by four times relative to that of a PUSCH port, and the power increase has a linear value of four times, or is 6 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(2 * 3) = 7.78$ dB, that is, six times, relative to that of the PUSCH port, and the power increase has a linear value of six times; and the power of the PTRS port 1 may be increased by $P = 10 * log10(2 * 4) = 9$ dB, that is, eight times, relative to that of the PUSCH port, and the power increase has a linear value of eight times.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by seven times relative to that of a PUSCH port, and the power increase has a linear value of seven times, or is 8.45 dB in logarithm domain.

In a case of 8T and six layers, as shown in the third figure from the left in FIG. 4c, the UE may support a maximum of two PTRS ports. An Ng 0 includes uplink PUSCH ports 0 to 3, and an Ng 1 includes uplink PUSCH ports 4 to 7. It can be learned that power is configured at three layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, only power of a different layer in the Ng 0 is borrowed. It may be represented as $P = 10 * log10(L_{Ng0})$. If the PTRS port 0 is associated with a DMRS port 0, power of the PTRS port 0 is increased by three times relative to that of a PUSCH port, and the power increase has a linear value of three times, or is 4.77 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 3) = 7.78$ dB, that is, six times, relative to that of the PUSCH port, and the power increase has a linear value of six times.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by six times relative to that of a PUSCH port, and the power increase has a linear value of six times, or is 7.78 dB in logarithm domain.

In a case of 8T and five layers, as shown in the fourth figure from the left in FIG. 4c, the UE may support a maximum of two PTRS ports. An Ng 0 includes uplink PUSCH ports 0 to 3, and an Ng 1 includes uplink PUSCH ports 4 to 7. It can be learned that power is configured at two layers in the Ng 0, and power is configured at three layers in the Ng 1. When the network device configures one PTRS port (for example, a PTRS port 0), the PTRS port 0 considers only a constraint condition that total power in the Ng 0 is fixed, that is, only power of a different layer in the Ng 0 is borrowed. It may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, a PTRS port 1), the PTRS port 1 considers only a constraint condition that total power in the Ng 1 is fixed, that is, only power of a different layer in the Ng 1 is borrowed. It may be represented as $P = 10 * log10(L_{Ng1})$. In this case, power of the PTRS port 1 is increased by three times relative to that of a PUSCH port, and the power increase has a linear value of three times, or is 4.77 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(2 * 2) = 6$ dB, that is, four times, relative to that of the PUSCH port, and the power increase has a linear value of four times; and the power of the PTRS port 1 may be increased by $P = 10 * log10(2 * 3)=7.78$ dB, that is, six times, relative to that of the PUSCH port, and the power increase has a linear value of six times.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by five times relative to that of a PUSCH port, and the power increase has a linear value of five times, or is 7 dB in logarithm domain.

In a case of 8T and four layers, as shown in the fifth figure from the left in FIG. 4c, the UE may support a maximum of two PTRS ports. An Ng 0 includes uplink PUSCH ports 0 to 3, and an Ng 1 includes uplink PUSCH ports 4 to 7. It can be learned that power is configured at four layers in the Ng 0, and no power is configured at any layer in the Ng 1. When the network device configures a PTRS port 0, power of the PTRS port 0 is increased by four times relative to that of a PUSCH port, and the power increase has a linear value of four times, or is 6 dB in logarithm domain.

In a case of 8T and three layers, as shown in the sixth figure from the left in FIG. 4c, the UE may support a maximum of two PTRS ports. An Ng 0 includes uplink PUSCH ports 0 to 3, and an Ng 1 includes uplink PUSCH ports 4 to 7. It can be learned that power is configured at three layers in the Ng 0, and no power is configured at any layer in the Ng 1. When the network device configures a PTRS port 0, power of the PTRS port 0 is increased by three times relative to that of a PUSCH port, and the power increase has a linear value of three times, or is 4.77 dB in logarithm domain.

In a case of 8T and two layers, as shown in the seventh figure from the left in FIG. 4c, the UE may support a maximum of two PTRS ports. An Ng 0 includes uplink PUSCH ports 0 to 3, and an Ng 1 includes uplink PUSCH ports 4 to 7. It can be learned that power is configured at two layers in the Ng 0, and no power is configured at any layer in the Ng 1. When the network device configures a PTRS port 0, power of the PTRS port 0 is increased by two times relative to that of a PUSCH port, and the power increase has a linear value of two times, or is 3 dB in logarithm domain.

In a case of 8T and one layer, as shown in the eighth figure from the left in FIG. 4c, the UE may support a maximum of two PTRS ports. An Ng 0 includes uplink PUSCH ports 0 to 3, and an Ng 1 includes uplink PUSCH ports 4 to 7. It can be learned that power is configured at one layer in the Ng 0, and no power is configured at any layer in the Ng 1. When the network device configures a PTRS port 0, power of the PTRS port 0 is increased by zero times relative to that of a PUSCH port, and the power increase has a linear value of zero times, or is 0 dB in logarithm domain.

Case (4-1): Ng=4, and the number of PTRS ports is 2.

This case corresponds to a partial coherent transmission scenario. For example, codebooks in each Ng are fully coherent, that is, precoding matrices corresponding to all PUSCH transmission layers corresponding to the Ng do not include an element whose modulus is 0. Based on different codebook forms (including a type 1 and a type 2), the following describes the PUSCH-to-PTRS power factor per layer per RE in different cases.

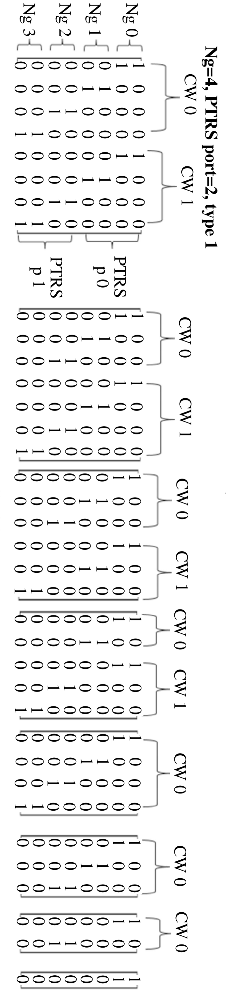

FIG. 4d shows an example of precoding matrices in a case of 8T and one to eight layers when Ng=4, the number of PTRS ports is 2, and a codebook form 1 is used.

In a case of 8T and eight layers, as shown in the first figure from the left in FIG. 4d, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 to the Ng 3. A PTRS port 0 corresponds to the Ng 0 and the Ng 1, and a PTRS port 1 corresponds to the Ng 2 and the Ng 3. The PTRS port 0 may send a PTRS on any one of a 1st to 4th DMRS ports (which are sequentially DMRS ports 0, 1, 4, and 5). If the PTRS port 0 sends the PTRS on the 1st or 3rd DMRS port, an Ng in which the PTRS port 0 is located is the Ng 0. If the PTRS port 0 sends the PTRS on the 2nd or 4th DMRS port, an Ng in which the PTRS port 0 is located is the Ng 1. Similarly, the PTRS port 1 may send a PTRS on any one of a 1st to 4th DMRS ports (which are sequentially DMRS ports 2, 3, 6, and 7). If the PTRS port 1 sends the PTRS on the 1st or 3rd DMRS port, an Ng in which the PTRS port 1 is located is the Ng 2. If the PTRS port 1 sends the PTRS on the 2nd or 4th DMRS port, an Ng in which the PTRS port 1 is located is the Ng 3. When the network device configures one PTRS port (for example, the PTRS port 0), if the Ng in which the PTRS port 0 is located is the Ng 0 or the Ng 1, the PTRS port 0 considers only a constraint condition that total power in the Ng 0 or the Ng 1 is fixed, that is, only power of a different layer in the Ng 0 or the Ng 1 is borrowed. It may be represented as $P = 10 * log10(L_{Ng0}$ or $_{Ng1})$. In this case, power of the PTRS port 0 is increased by two times relative to that of a PUSCH port, and the power increase has a linear value of two times, or is 3 dB in logarithm domain. When the network device configures two PTRS ports (the PTRS port 0 and the PTRS port 1), in addition to considering that each PTRS port borrows power of a different layer in an Ng in which the PTRS port is located (for example, the Ng in which the PTRS port 0 is located is the Ng 0 or the Ng 1, and the Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 2)$=6 dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by eight times relative to that of a PUSCH port, and the power increase has a linear value of eight times, or is 9 dB in logarithm domain.

In a case of 8T and seven layers, as shown in the second figure from the left in FIG. 4d, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, the Ng 1, and the Ng 2, and power is configured at only one layer in the Ng 3. When the network device configures one PTRS port (for example, a PTRS port 0), the PTRS port 0 considers only a constraint condition that total power in the Ng 0 or the Ng 1 is fixed, that is, only power of a different layer in the Ng 0 or the Ng 1 is borrowed. It may be represented as $P = 10 * log10(L_{Ng0}$ or $_{Ng1})$. In this case, power of the PTRS port 0 is increased by two times relative to that of a PUSCH port, and the power increase has a linear value of two times, or is 3 dB in logarithm domain. When the network device configures one PTRS port (for example, a PTRS port 1), if the PTRS port 1 is associated with a 1st or 2nd DMRS port (the PTRS port 1 may be associated with any one of DMRS ports 2, 5, and 6, where the 1st DMRS port is the DMRS port 2, the 2nd DMRS port is the DMRS port 5, and a 3rd DMRS port is the DMRS port 6), an Ng in which the PTRS port 1 is located is the Ng 2. The PTRS port 1 considers only a constraint condition that total power in the Ng 2 is fixed, that is, only power of a different layer in the Ng 2 is borrowed. It may be represented as $P = 10 * log10(L_{Ng2})$. In this case, power of the PTRS port 1 is increased by two times relative to that of a PUSCH port, and the power increase has a linear value of two times, or is 3 dB in logarithm domain. When the network device configures one PTRS port (for example, a PTRS port 1), if the PTRS port 1 is associated with a 3rd DMRS port (that is, a DMRS port 6), an Ng in which the PTRS port 1 is located is the Ng 3. The PTRS port 1 considers only a constraint condition that total power in the Ng 3 is fixed, that is, only power of a different layer in the Ng 3 is borrowed. It may be represented as $P = 10 * log10(L_{Ng3})$. In this case, power of the PTRS port 1 is increased by zero times relative to that of a PUSCH port, and the power increase has a linear value of zero times, or is 0 dB in logarithm domain. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 (the Ng in which the PTRS port 0 is located is the Ng 0 or the Ng 1) may be increased by $P = 10 * log10(2 * 2)$=6 dB, that is, four times, relative to that of the PUSCH port, and the power increase has a linear value of four times. If the Ng in which the PTRS port 1 is located is the Ng 2, the power of the PTRS port 1 may be increased by $P = 10 * log10(2 * 2)$=6 dB, that is, four times, relative to that of the PUSCH port, and the power increase has a linear value of four times. If the Ng in which the PTRS port 1 is located is the Ng 3, the power of the PTRS port 1 may be increased by $P = 10 * log10(2 * 1)$=3 dB, that is, two times, relative to that of the PUSCH port, and the power increase has a linear value of two times.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by seven times relative to that of a PUSCH port, and the power increase has a linear value of seven times, or is 8.45 dB in logarithm domain.

In a case of 8T and six layers, as shown in the third figure from the left in FIG. 4d, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 1, and power is configured at only one layer in the Ng 2 and the Ng 3. When the network device configures one PTRS port (for example, a PTRS port 0), the PTRS port 0 considers only a constraint condition that total power in the Ng 0 or the Ng 1 is fixed, that is, only power of a different layer in the Ng 0 or the Ng 1 is borrowed. It may be represented as $P = 10 * log10(L_{Ng0 \, or \, Ng1})$. In this case, power of the PTRS port 0 is increased by two times relative to that of a PUSCH port, and the power increase has a linear value of two times, or is 3 dB in logarithm domain. When the network device configures one PTRS port (for example, a PTRS port 1), the PTRS port 1 considers only a constraint condition that total power in the Ng 2 or the Ng 3 is fixed, that is, borrows only power of a different layer in the Ng 2 or the Ng 3, and the PUSCH-to-PTRS power factor may be represented as $P = 10 * log10(L_{Ng2 \, or \, Ng3})$. In this case, power of the PTRS port 1 is increased by zero times relative to that of a PUSCH port, and the power increase has a linear value of zero times, or is 0 dB in logarithm domain. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(2 * 2)=6$ dB, that is, four times, relative to that of the PUSCH port, and the power increase has a linear value of four times; and the power of the PTRS port 1 may be increased by $P = 10 * log10(2 * 1)=3$ dB, that is, two times, relative to that of the PUSCH port, and the power increase has a linear value of two times.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by six times relative to that of a PUSCH port, and the power increase has a linear value of six times, or is 7.78 dB in logarithm domain.

In a case of 8T and five layers, as shown in the fourth figure from the left in FIG. 4d, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, and power is configured at only one layer in the Ng 1 to the Ng 3. When the network device configures one PTRS port (for example, a PTRS port 0), if the PTRS port 0 is associated with a 1st or 3rd DMRS port (the PTRS port 0 may be associated with any one of DMRS ports 0, 1, and 2, where the 1st DMRS port is the DMRS port 0, a 2nd DMRS port is the DMRS port 1, and the 3rd DMRS port is the DMRS port 2), an Ng in which the PTRS port 0 is located is the Ng 0. In this case, the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, a PTRS port 0), if the PTRS port 0 is associated with a 2nd DMRS port (that is, a DMRS port 1), an Ng in which the PTRS port 0 is located is the Ng 1. The PTRS port 0 considers only a constraint condition that total power in the Ng 1 is fixed, that is, borrows only power of a different layer in the Ng 1, and the PUSCH-to-PTRS power factor may be represented as $P = 10 * log10(L_{NG1})$. In this case, power of the PTRS port 0 is increased by zero times relative to that of a PUSCH port, and the power increase has a linear value of zero times, or is 0 dB in logarithm domain. When the network device configures one PTRS port (for example, a PTRS port 1), an Ng in which the PTRS port 1 is located is the Ng 2 or the Ng 3. The PTRS port 1 considers only a constraint condition that total power in the Ng 2 or the Ng 3 is fixed, that is, borrows only power of a different layer in the Ng 2 or the Ng 3, and the PUSCH-to-PTRS power factor may be represented as $P = 10 * log10(L_{Ng2 \, or \, Ng3})$. In this case, power of the PTRS port 1 is increased by zero times relative to that of a PUSCH port, and the power increase has a linear value of zero times, or is 0 dB in logarithm domain. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 (the Ng in which the PTRS port 0 is located is the Ng 0) may be increased by $P = 10 * log10(2 * 2)=6$ dB, that is, four times, relative to that of the PUSCH port, and the power increase has a linear value of four times. If the Ng in which the PTRS port 0 is located is the Ng 1, the power of the PTRS port 0 may be increased by $P = 10 * log10(2 * 1)=3$ dB, that is, two times, relative to that of the PUSCH port, and the power increase has a linear value of two times. If the Ng in which the PTRS port 1 is located is the Ng 2 or the Ng 3, the power of the PTRS port 1 may be increased by $P = 10 * log10(2 * 1) = 3$ dB, that is, two times, relative to that of the PUSCH port, and the power increase has a linear value of two times.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by five times relative to that of a PUSCH port, and the power increase has a linear value of five times, or is 7 dB in logarithm domain.

In a case of 8T and four layers, as shown in the fifth figure from the left in FIG. 4d, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 to the Ng 3. Power of a PTRS port may be increased by $P = (3Q_p - 3)$ dB relative to that of a PUSCH port. Specifically, when the network device configures one PTRS port (a PTRS port 0 or a PTRS port 1), power of the PTRS port may be increased by $P = 3 * 1 - 3 = 0$ dB relative to that of a PUSCH port. When the network device configures two PTRS ports (a PTRS port 0 and a PTRS port 1), power of each of the PTRS port 0 and the PTRS port 1 may be increased by $P = 3 * 2 - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and four layers.

In the case of 8T and four layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by four times relative to that of a PUSCH port, and the power increase has a linear value of four times, or is 6 dB in logarithm domain.

In a case of 8T and three layers, as shown in the sixth figure from the left in FIG. 4d, the UE may support a maximum of two PTRS ports. The UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 to the Ng 2, and no power is configured at any layer in the Ng 3. Power of a PTRS port may be increased by $P = (3Q_p - 3)$ dB relative to that of a PUSCH port. Specifically, when the network device configures one PTRS port (a PTRS port 0 or a PTRS port 1), power of the PTRS port may be increased by $P = 3 * 1 - 3 = 0$ dB relative to that of a PUSCH port. When the network device configures two PTRS ports (a PTRS port 0 and a PTRS port 1), power of each of the PTRS port 0 and the PTRS port 1 may be increased by $P = 3 * 2 - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and three layers.

In the case of 8T and three layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by three times relative to that of a PUSCH port, and the power increase has a linear value of three times, or is 4.77 dB in logarithm domain.

In a case of 8T and two layers, as shown in the seventh figure from the left in FIG. 4d, the UE may support a maximum of two PTRS ports. The UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 and the Ng 2, and no power is configured at any layer in the Ng 1 and the Ng 3. Power of a PTRS port may be increased by $P = (3Q_p - 3)$ dB relative to that of a PUSCH port. Specifically, when the network device configures one PTRS port (a PTRS port 0 or a PTRS port 1), power of the PTRS port may be increased by $P = 3 * 1 - 3 = 0$ dB relative to that of a PUSCH port. When the network device configures two PTRS ports (a PTRS port 0 and a PTRS port 1), power of each of the PTRS port 0 and the PTRS port 1 may be increased by $P = 3 * 2 - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and two layers.

In the case of 8T and two layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by two times relative to that of a PUSCH port, and the power increase has a linear value of two times, or is 3 dB in logarithm domain.

In a case of 8T and one layer, as shown in the eighth figure from the left in FIG. 4d, the UE may support a maximum of two PTRS ports. Regardless of whether the network device configures one or two PTRS ports, a power increase of the PTRS port relative to a PUSCH port has a linear value of zero times, or is 0 dB in logarithm domain.

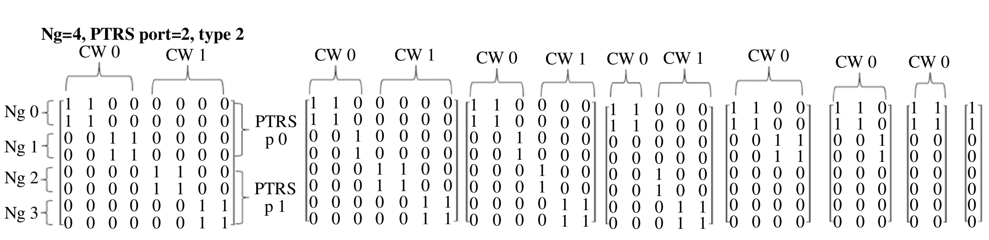

FIG. 4e shows an example of precoding matrices in a case of 8T and one to eight layers when Ng=2, the number of PTRS ports is 2, and a codebook form 2 is used.

In a case of 8T and eight layers, as shown in the first figure from the left in FIG. 4e, the UE may support a maximum of two PTRS ports. An Ng 0 includes uplink PUSCH ports 0 and 1, an Ng 1 includes uplink PUSCH ports 2 and 3, Nan g 2 includes uplink PUSCH ports 4 and 5, and an Ng 3 includes uplink PUSCH ports 6 and 7. It can be learned that power is configured at two layers in the Ng 0 to the Ng 3. A PTRS port 0 may send a PTRS on any one of a 1st to 4th DMRS ports (which are sequentially DMRS ports 0, 1, 2, and 3). If the PTRS port 0 sends the PTRS on the 1st or 2nd DMRS port, an Ng in which the PTRS port 0 is located is the Ng 0. If the PTRS port 0 sends the PTRS on the 3rd or 4th DMRS port, an Ng in which the PTRS port 0 is located is the Ng 1. Similarly, a PTRS port 1 may send a PTRS on any one of a 1st to 4th DMRS ports (which are sequentially DMRS ports 4, 5, 6, and 7). If the PTRS port 1 sends the PTRS on the 1st or 2nd DMRS port, an Ng in which the PTRS port 1 is located is the Ng 2. If the PTRS port 1 sends the PTRS on the 3rd or 4th DMRS port, an Ng in which the PTRS port 1 is located is the Ng 3. When the network device configures one PTRS port (for example, the PTRS port 0), if the Ng in which the PTRS port 0 is located is the Ng 0 or the Ng 1, the PTRS port 0 considers only a constraint condition that total power in the Ng 0 or the Ng 1 is fixed, that is, borrows only power of a different layer in the Ng 0 or the Ng 1, and the PUSCH-to-PTRS power factor may be represented as $P = 10 * log10(L_{Ng0\,or\,Ng1})$. In this case, power of the PTRS port 0 is increased by two times relative to that of a PUSCH port, and the power increase has a linear value of two times, or is 3 dB in logarithm domain. When the network device configures two PTRS ports (the PTRS port 0 and the PTRS port 1), in addition to considering that each PTRS port borrows power of a different layer in an Ng in which the PTRS port is located (for example, the Ng in which the PTRS port 0 is located is the Ng 0 or the Ng 1, and the Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 2) = 6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by eight times relative to that of a PUSCH port, and the power increase has a linear value of eight times, or is 9 dB in logarithm domain.

In a case of 8T and seven layers, as shown in the second figure from the left in FIG. 4e, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 2, and power is configured at only one layer in the Ng 1 and the Ng 3. A PTRS port 0 may send a PTRS on any one of a 1st to 3rd DMRS ports (which are sequentially DMRS ports 0, 1, and 2). If the PTRS port 0 sends the PTRS on the 1st or 2nd DMRS port, an Ng in which the PTRS port 0 is located is the Ng 0. If the PTRS port 0 sends the PTRS on the 3rd DMRS port, an Ng in which the PTRS port 0 is located is the Ng 1. A PTRS port 1 may send a PTRS on any one of a 1st to 4th DMRS ports (which are sequentially DMRS ports 3, 4, 5, and 6). If the PTRS port 1 sends the PTRS on the 1st or 2nd DMRS port, an Ng in which the PTRS port 1 is located is the Ng 2. If the PTRS port 1 sends the PTRS on the 3rd or 4th DMRS port, an Ng in which the PTRS port 1 is located is the Ng 3. When the network device configures one PTRS port (for example, the PTRS port 0), if the PTRS port 0 is associated with the 1st or 2nd DMRS port, the Ng in which the PTRS port 0 is located is the Ng 0. The PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, the PTRS port 0), if the PTRS port 0 is associated with the 3rd DMRS port, the Ng in which the PTRS port 0 is located is the Ng 1. The PTRS port 0 considers only a constraint condition that total power in the Ng 1 is fixed, that is, borrows only power of a different layer in the Ng 1, and the PUSCH-to-PTRS power factor may be represented as $P = 10 * log10(L_{Ng1})$. In this case, power of the PTRS port 0 is increased by zero times relative to that of a PUSCH port, and the power increase has a linear value of zero times, or is 0 dB in logarithm domain. When the network device configures one PTRS port (for example, the PTRS port 1), if the PTRS port 1 is associated with the 1st or 2nd DMRS port, the Ng in which the PTRS port 1 is located is the Ng 2. The PTRS port 1 considers only a constraint condition that total power in the Ng 2 is fixed, that is, borrows only power of a different layer in the Ng 2, and the PUSCH-to-PTRS power factor may be represented as $P = 10 * log10(L_{Ng2})$. In this case, power of the PTRS port 1 is increased by two times relative to that of a PUSCH port, and the power increase has a linear value of two times, or is 3 dB in logarithm domain. When the network device configures one PTRS port (for example, the PTRS port 1), if the PTRS port 1 is associated with the 3rd or 4th DMRS port, the Ng in which the PTRS port 1 is located is the Ng 3. The PTRS port 1 considers only a constraint condition that total power in the Ng 3 is fixed, that is, borrows only power of a different layer in the Ng 3, and the PUSCH-to-PTRS power factor may be represented as $P = 10 * log10(L_{Ng3})$. In this case, power of the PTRS port 1 is increased by two times relative to that of a PUSCH port, and the power increase has a linear value of two times, or is 3 dB in logarithm domain. When the network device configures two PTRS ports (the PTRS port 0 and the PTRS port 1), in addition to considering that each PTRS port borrows power of a different layer in an Ng in which the PTRS port is located (for example, the Ng in which the PTRS port 0 is located is the Ng 0 or the Ng 1, and the Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, if the Ng in which the PTRS port 0 is located is the Ng 0, the power of the PTRS port 0 may be increased by $P = 10 * log10(2 * 2) = 6$ dB, that is, four times, relative to that of the PUSCH port, and the power increase has a linear value of four times. If the Ng in which the PTRS port 0 is located is the Ng 1, the power of the PTRS port 0 may be increased by $P = 10 * log10(2 * 1) = 3$ dB, that is, two times, relative to that of the PUSCH port, and the power increase has a linear value of two times. The power of the PTRS port 1 (the Ng in which the PTRS port 1 is located is the Ng 2 or the Ng 3) may be increased by $P = 10 * log10(2 * 2) = 6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by seven times relative to that of a PUSCH port, and the power increase has a linear value of seven times, or is 8.45 dB in logarithm domain.

In a case of 8T and six layers, as shown in the third figure from the left in FIG. 4e, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 3, and power is configured at only one layer in the Ng 1 and the Ng 2. A PTRS port 0 may send a PTRS on any one of a 1st to 3rd DMRS ports (which are sequentially DMRS ports 0, 1, and 2). If the PTRS port 0 sends the PTRS on the 1st or 2nd DMRS port, an Ng in which the PTRS port 0 is located is the Ng 0. If the PTRS port 0 sends the PTRS on the 3rd DMRS port, an Ng in which the PTRS port 0 is located is the Ng 1. A PTRS port 1 may send a PTRS on any one of a 1st to 3rd DMRS ports (which are sequentially DMRS ports 3, 4, and 5). If the PTRS port 1 sends the PTRS on the 1st DMRS port, an Ng in which the PTRS port 1 is located is the Ng 2. If the PTRS port 1 sends the PTRS on the 2nd or 3rd DMRS port, an Ng in which the PTRS port 1 is located is the Ng 3. When the network device configures one PTRS port (for example, the PTRS port 0), if the PTRS port 0 is associated with the 1st or 2nd DMRS port, the Ng in which the PTRS port 0 is located is the Ng 0. The PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, the PTRS port 0), if the PTRS port 0 is associated with the 3rd DMRS port, the Ng in which the PTRS port 0 is located is the Ng 1. The PTRS port 0 considers only a constraint condition that total power in the Ng 1 is fixed, that is, borrows only power of a different layer in the Ng 1, and the PUSCH-to-PTRS power factor may be represented as $P = 10 * log10(L_{Ng1})$. In this case, power of the PTRS port 0 is increased by zero times relative to that of a PUSCH port, and the power increase has a linear value of zero times, or is 0 dB in logarithm domain. When the network device configures one PTRS port (for example, the PTRS port 1), if the PTRS port 1 is associated with the 1st DMRS port, the Ng in which the PTRS port 1 is located is the Ng 2. The PTRS port 1 considers only a constraint condition that total power in the Ng 2 is fixed, that is, borrows only power of a different layer in the Ng 2, and the PUSCH-to-PTRS power factor may be represented as $P = 10 * log10(L_{Ng2})$. In this case, power of the PTRS port 1 is increased by zero times relative to that of a PUSCH port, and the power increase has a linear value of zero times, or is 0 dB in logarithm domain. When the network device configures one PTRS port (for example, the PTRS port 1), if the PTRS port 1 is associated with the 2nd or 3rd DMRS port, the Ng in which the PTRS port 1 is located is the Ng 3. The PTRS port 1 considers only a constraint condition that total power in the Ng 3 is fixed, that is, borrows only power of a different layer in the Ng 3, and the PUSCH-to-PTRS power factor may be represented as $P = 10 * log10(L_{Ng3})$. In this case, power of the PTRS port 1 is increased by two times relative to that of a PUSCH port, and the power increase has a linear value of two times, or is 3 dB in logarithm domain. When the network device configures two PTRS ports (the PTRS port 0 and the PTRS port 1), in addition to considering that each PTRS port borrows power of a different layer in an Ng in which the PTRS port is located (for example, the Ng in which the PTRS port 0 is located is the Ng 0 or the Ng 1, and the Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, if the Ng in which the PTRS port 0 is located is the Ng 0, the power of the PTRS port 0 may be increased by $P = 10 * log10(2 * 2)=6$ dB, that is, four times, relative to that of the PUSCH port, and the power increase has a linear value of four times. If the Ng in which the PTRS port 0 is located is the Ng 1, the power of the PTRS port 0 may be increased by $P = 10 * log10(2 * 1)=3$ dB, that is, two times, relative to that of the PUSCH port, and the power increase has a linear value of two times. If the Ng in which the PTRS port 1 is located is the Ng 2, the power of the PTRS port 1 may be increased by $P = 10 * log10(2 * 1)=3$ dB, that is, two times, relative to that of the PUSCH port, and the power increase has a linear value of two times. If the Ng in which the PTRS port 1 is located is the Ng 3, the power of the PTRS port 1 may be increased by $P = 10 * log10(2 * 2)=6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by six times relative to that of a PUSCH port, and the power increase has a linear value of six times, or is 7.78 dB in logarithm domain.

In a case of 8T and five layers, as shown in the fourth figure from the left in FIG. 4e, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 3, power is configured at only one layer in the Ng 2, and no power is configured in the Ng 1. A PTRS port 0 may send a PTRS on any one of 1st and 2nd DMRS ports (which are sequentially DMRS ports 0 and 1). If the PTRS port 0 sends the PTRS on the 1st or 2nd DMRS port, an Ng in which the PTRS port 0 is located is the Ng 0. If the PTRS port 0 does not send the PTRS, an Ng in which the PTRS port 0 is located is the Ng 1. A PTRS port 1 may send a PTRS on any one of a 1st to 3rd DMRS ports (which are sequentially DMRS ports 2, 3, and 4). If the PTRS port 1 sends the PTRS on the 1st DMRS port, an Ng in which the PTRS port 1 is located is the Ng 2. If the PTRS port 1 sends the PTRS on the 2nd or 3rd DMRS port, an Ng in which the PTRS port 1 is located is the Ng 3. When the network device configures one PTRS port (for example, the PTRS port 0), if the PTRS port 0 is associated with the 1st or 2nd DMRS port, the Ng in which the PTRS port 0 is located is the Ng 0. In this case, the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, the PTRS port 1), if the PTRS port 1 is associated with the 1st DMRS port, the Ng in which the PTRS port 1 is located is the Ng 2. The PTRS port 1 considers only a constraint condition that total power in the Ng 2 is fixed, that is, borrows only power of a different layer in the Ng 2, and the PUSCH-to-PTRS power factor may be represented as $P = 10 * log10(L_{Ng2})$. In this case, power of the PTRS port 1 is increased by zero times relative to that of a PUSCH port, and the power increase has a linear value of zero times, or is 0 dB in logarithm domain. When the network device configures one PTRS port (for example, the PTRS port 1), if the PTRS port 1 is associated with the 2nd or 3rd DMRS port, the Ng in which the PTRS port 1 is located is the Ng 3. The PTRS port 1 considers only a constraint condition that total power in the Ng 3 is fixed, that is, borrows only power of a different layer in the Ng 3, and the PUSCH-to-PTRS power factor may be represented as $P = 10 * log10(L_{Ng3})$. In this case, power of the PTRS port 1 is increased by two times relative to that of a PUSCH port, and the power increase has a linear value of two times, or is 3 dB in logarithm domain. When the network device configures two PTRS ports (the PTRS port 0 and the PTRS port 1), in addition to considering that each PTRS port borrows power of a different layer in an Ng in which the PTRS port is located (for example, the Ng in which the PTRS port 0 is located is the Ng 0 or the Ng 1, and the Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 (the Ng in which the PTRS port 0 is located is the Ng 0) may be increased by $P = 10 * log10(2 * 2)=6$ dB, that is, four times, relative to that of the PUSCH port, and the power increase has a linear value of four times. If the Ng in which the PTRS port 1 is located is the Ng 2, the power of the PTRS port 1 may be increased by $P = 10 * log10(2 * 1)=3$

dB, that is, two times, relative to that of the PUSCH port, and the power increase has a linear value of two times. If the Ng in which the PTRS port 1 is located is the Ng 3, the power of the PTRS port 1 may be increased by $P = 10 * log10(2 * 2)=6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by five times relative to that of a PUSCH port, and the power increase has a linear value of five times, or is 7 dB in logarithm domain.

In a case of 8T and four layers, as shown in the fifth figure from the left in FIG. 4e, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 1, and no power is configured at any layer in the Ng 2 and the Ng 3. Therefore, when the network device configures a PTRS port 0, power of the PTRS port 0 may be increased by $P = 3Q_p - 3=3*2-3=3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and four layers.

In the case of 8T and four layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by four times relative to that of a PUSCH port, and the power increase has a linear value of four times, or is 6 dB in logarithm domain.

In a case of 8T and three layers, as shown in the sixth figure from the left in FIG. 4e, the UE may support a maximum of two PTRS ports. The UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, power is configured at one layer in the Ng 1, and no power is configured at any layer in the Ng 2 and the Ng 3. Power of a PTRS port may be increased by $P = (3Q_p - 3)$ dB relative to that of a PUSCH port. Specifically, when the network device configures one PTRS port (for example, a PTRS port 0), power of the PTRS port 0 may be increased by $P = 3 * 2 - 3=3$ dB relative to that of a PUSCH port. When the network device configures two PTRS ports (a PTRS port 0 and a PTRS port 1), power of the PTRS port 0 may be increased by $P = 3 * 2 - 3=3$ dB relative to that of a PUSCH port. If the PTRS port 1 is associated with a 1st DMRS port (a DMRS port 0), power of the PTRS port 1 may be increased by $P = 3 * 1 - 3=0$ dB relative to that of a PUSCH port. If the PTRS port 1 is associated with a 2nd or 3rd DMRS port (a DMRS port 1 or a DMRS port 2), power of the PTRS port 1 may be increased by $P = 3 * 2 - 3=3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and three layers.

In the case of 8T and three layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by three times relative to that of a PUSCH port, and the power increase has a linear value of three times, or is 4.77 dB in logarithm domain.

In a case of 8T and two layers, as shown in the seventh figure from the left in FIG. 4e, the UE may support a maximum of two PTRS ports. The UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers only in the Ng 0, and no power is configured at any layer in the Ng 1 to the Ng 3. Therefore, power of a PTRS port 0 may be increased by $P = 3Q_p - 3=3*2-3=3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and two layers.

In the case of 8T and two layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by two times relative to that of a PUSCH port, and the power increase has a linear value of two times, or is 3 dB in logarithm domain.

In a case of 8T and one layer, as shown in the eighth figure from the left in FIG. 4e, the UE may support a maximum of two PTRS ports. Regardless of whether the network device configures one or two PTRS ports, a power increase of the PTRS port relative to a PUSCH port has a linear value of zero times, or is 0 dB in logarithm domain.

Case (5-1): Ng=4, and the number of PTRS ports is 4.

This case corresponds to a partial coherent transmission scenario. For example, codebooks in each Ng are fully coherent, that is, precoding matrices corresponding to all PUSCH transmission layers corresponding to the Ng do not include an element whose modulus is 0. Based on different codebook forms (including a type 1 and a type 2), the following describes the PUSCH-to-PTRS power factor per layer per RE in different cases.

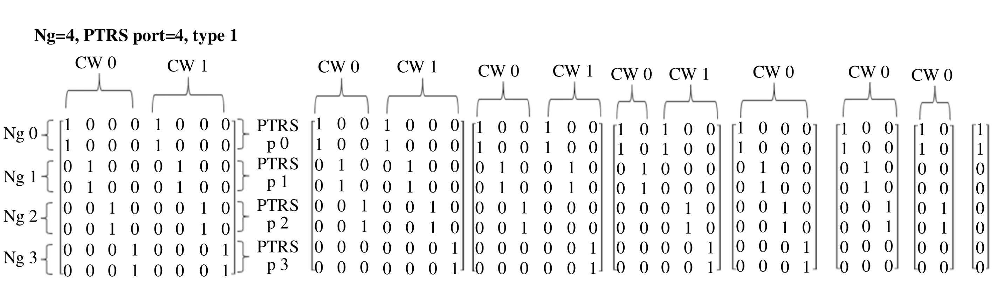

In a case of 8T and eight layers, as shown in the first figure from the left in FIG. 4f, the UE may support a maximum of four PTRS ports. Power is configured at two layers in each Ng. When the network device configures one PTRS port (for example, any one of a PTRS port 0, a PTRS port 1, a PTRS port 2, and a PTRS port 3, where the PTRS port 0 is used as an example herein), the PTRS port 0 considers only a constraint condition that total power in an Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures two PTRS ports (any two of a PTRS port 0, a PTRS port 1, a PTRS port 2, and a PTRS port 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 2)=6$ dB, that is, four times, relative to that of the PUSCH port, and the power increase has a linear value of four times. When the network device configures three PTRS ports (any three of a PTRS port 0, a PTRS port 1, a PTRS port 2, and a PTRS port3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 2 all perform transmission, PTRS power of each of the PTRS port 0, the PTRS port 1, and the PTRS port 2 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0, the PTRS port 1, and the PTRS port 2 may be increased by $P = 10 * log10(3 * 2)=7.78$ dB, that is, six times, relative to that of the PUSCH port, and the power increase has a linear value of six times. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0, the PTRS port 1, the PTRS port 2, and the PTRS port 3 may be increased by $P = 10 * log10(4 * 2)=9$ dB, that is, eight times, relative to that of the PUSCH port, and the power increase has a linear value of eight times.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by eight times relative to that of a PUSCH port, and the power increase has a linear value of eight times, or is 9 dB in logarithm domain.

In a case of 8T and seven layers, as shown in the second figure from the left in FIG. 4f, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, the Ng 1, and the Ng 2, and power is configured at only one layer in the Ng 3. When the network device configures one PTRS port (for example, any one of a PTRS port 0, a PTRS port 1, and a PTRS port 2, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures a PTRS port 3, the PTRS port 3 considers only a constraint condition that total power in the Ng 3 is fixed, that is, borrows only power of a different layer in the Ng 3, and the PUSCH-to-PTRS power factor may be represented as $P = 10 * log10(L_{Ng3})$. In this case, power of the PTRS port 3 is increased by zero times relative to that of a PUSCH port, and the power increase has a linear value of zero times, or is 0 dB in logarithm domain. When the network device configures two PTRS ports (any two of a PTRS port 0, a PTRS port 1, and a PTRS port 2), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 2) = 6$ dB, that is, four times, relative to that of the PUSCH port, and the power increase has a linear value of four times. When the network device configures two PTRS ports (a PTRS port 3 and any one of a PTRS port 0, a PTRS port 1, and a PTRS port 2), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 3 perform transmission, PTRS power of each of the PTRS port 0 and the PTRS port 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 3 may be increased by $P = 10 * log10(2 * 1) = 3$ dB, that is, two times, relative to that of the PUSCH port, and the power increase has a linear value of two times; and the power of the PTRS port 0 may be increased by $P = 10 * log10(2 * 2) = 6$ dB, that is, four times, relative to that of the PUSCH port, and the power increase has a linear value of four times. When the network device configures three PTRS ports (a PTRS port 0, a PTRS port 1, and a PTRS port 2), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 2 all perform transmission, PTRS power of each of the PTRS port 0, the PTRS port 1, and the PTRS port 2 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0, the PTRS port 1, and the PTRS port 2 may be increased by $P = 10 * log10(3 * 2) = 7.78$ dB, that is, six times, relative to that of the PUSCH port, and the power increase has a linear value of six times. When the network device configures three PTRS ports (a PTRS port 3 and any two of a PTRS port 0, a PTRS port 1, and a PTRS port 2), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 3 all perform transmission, PTRS power of each of the PTRS port 0, the PTRS port 1, and the PTRS port 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 3 may be increased by $P = 10 * log10(3 * 1) = 4.77$ dB, that is, three times, relative to that of the PUSCH port, and the power increase has a linear value of three times; and the power of each of the PTRS port 0 and the PTRS port 1 may be increased by $P = 10 * log10(3 * 2) = 7.78$ dB, that is, six times, relative to that of the PUSCH port, and the power increase has a linear value of six times. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0, the PTRS port 1, and the PTRS port 2 may be increased by $P = 10 * log10(4 * 2) = 9$ dB, that is, eight times, relative to that of the PUSCH port, and the power increase has a linear value of eight times; and the power of the PTRS port 3 may be increased by $P = 10 * log10(4 * 1) = 6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by seven times relative to that of a PUSCH port, and the power increase has a linear value of seven times, or is 8.45 dB in logarithm domain.

In a case of 8T and six layers, as shown in the third figure from the left in FIG. 4f, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 1, and power is configured at only one layer in the Ng 2 and the Ng 3. When the network device configures one PTRS port (for example, any one of a PTRS port 0 and a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, any one of a PTRS port 2 and a PTRS port 3, where the PTRS port 3 is used as an example herein), the PTRS port 3 considers only a constraint condition that total power in the Ng 3 is fixed, that is, borrows only power of a different layer in the Ng 3, and the PUSCH-to-PTRS power factor may be represented as $P = 10 * log10(L_{Ng3})$. In this case, power of the PTRS port 3 is increased by zero times relative to that of a PUSCH port, and the power increase has a linear value of zero times, or is 0 dB in logarithm domain. When the network device configures two PTRS ports (for example, a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 2) = 6$ dB, that is, four times, relative to that of the PUSCH port, and the power increase has a linear value of four times. When the network device configures two PTRS ports (for example, a PTRS port 2 and a PTRS port 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 2 and the PTRS port 3 perform transmission, PTRS power of each of the PTRS port 2 and the PTRS port 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 2 and the PTRS port 3 may be increased by $P = 10 * log10(2 * 1) = 3$ dB, that is, two times, relative to that of the PUSCH port, and the power increase has a linear value of two times. When the network device configures three PTRS ports (any three of PTRS ports 0 to 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 3 all perform transmission, PTRS power of each of the PTRS port 0, the PTRS port 1, and the PTRS port 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 3 may be increased by $P = 10 * log10(3 * 1) = 4.77$ dB, that is, three times, relative to that of the PUSCH port, and the power increase has a linear value of three times; and the power of each of the PTRS port 0 and the PTRS port 1 may be increased by $P = 10 * log10(3 * 2) = 7.78$ dB, that is, six times, relative to that of the PUSCH port, and the power increase has a linear value of six times. For another example, if the PTRS port 0, the PTRS port 2, and the PTRS port 3 all perform transmission, power of each of the PTRS port 2 and the PTRS port 3 may be increased by $P = 10 * log10(3 * 1) = 4.77$ dB, that is, three times, relative to that of a PUSCH port, and the power increase has a linear value of three times; and power of the PTRS port 0 may be increased by $P = 10 * log10(3 * 2) = 7.78$ dB, that is, six times, relative to that of a PUSCH port, and the power increase has a linear value of six times. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(4 * 2) = 9$ dB, that is, eight times, relative to that of the PUSCH port, and the power increase has a linear value of eight times; and the power of each of the PTRS port 2 and the PTRS port 3 may be increased by $P = 10 * log10(4 * 1) = 6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by six times relative to that of a PUSCH port, and the power increase has a linear value of six times, or is 7.78 dB in logarithm domain.

In a case of 8T and five layers, as shown in the fourth figure from the left in FIG. 4f, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, and power is configured at only one layer in the Ng 1 to the Ng 3. When the network device configures one PTRS port (for example, a PTRS port 0), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, any one of a PTRS port 1, a PTRS port 2, and a PTRS port 3, where the PTRS port 3 is used as an example herein), the PTRS port 3 considers only a constraint condition that total power in the Ng 3 is fixed, that is, borrows only power of a different layer in the Ng 3, and the PUSCH-to-PTRS power factor may be represented as $P = 10 * log10(L_{Ng3})$. In this case, power of the PTRS port 3 is increased by zero times relative to that of a PUSCH port, and the power increase has a linear value of zero times, or is 0 dB in logarithm domain. When the network device configures two PTRS ports (for example, a PTRS port 0 and any one of PTRS ports 1 to 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(2 * 2) = 6$ dB, that is, four times, relative to that of the PUSCH port, and the power increase has a linear value of four times; and the power of the PTRS port 1 may be increased by $P = 10 * log10(2 * 1) = 2$ times relative to that of the PUSCH port, and the power increase has a linear value of two times, or is 3 dB in logarithm domain. When the network device configures three PTRS ports (any three of PTRS ports 0 to 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 3 all perform transmission, PTRS power of each of the PTRS port 0, the PTRS port 1, and the PTRS port 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 1 and the PTRS port 3 may be increased by $P = 10 * log10(3 * 1) = 4.77$ dB, that is, three times, relative to that of the PUSCH port, and the power increase has a linear value of three times; and the power of the PTRS port 0 may be increased by $P = 10 * log10(3 * 2) = 7.78$ dB, that is, six times, relative to that of the PUSCH port, and the power increase has a linear value of six times. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(4 * 2) = 9$ dB, that is, eight times, relative to that of the PUSCH port, and the power increase has a linear value of eight times; and the power of each of the PTRS port 1, the PTRS port 2, and the PTRS port 3 may be increased by $P = 10 * log10(4 * 1) = 6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by five times relative to that of a PUSCH port, and the power increase has a linear value of five times, or is 7 dB in logarithm domain.

In a case of 8T and four layers, as shown in the fifth figure from the left in FIG. 4f, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 to the Ng 3. When the network device configures one PTRS port (any one of PTRS ports 0 to 3, where the PTRS port 0 is used as an example), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by zero times relative to that of a PUSCH port, and the power increase has a linear value of zero times, or is 0 dB in logarithm domain. When the network device configures two PTRS ports (any two of PTRS ports 0 to 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 1) = 2$ times relative to that of the PUSCH port, and the power increase has a linear value of two times, or is 3 dB in logarithm domain. When the network device configures three PTRS ports (any three of PTRS ports 0 to 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 3 all perform transmission, PTRS power of each of the PTRS port 0, the PTRS port 1, and the PTRS port 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0, the PTRS port 1, and the PTRS port 3 may be increased by $P = 10 * log10(3 * 1) = 4.77$ dB, that is, three times, relative to that of the PUSCH port, and the power increase has a linear value of three times. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS ports 0 to 3 may be increased by $P = 10 * log10(4 * 1) = 6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and four layers.

In the case of 8T and four layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by four times relative to that of a PUSCH port, and the power increase has a linear value of four times, or is 6 dB in logarithm domain.

In a case of 8T and three layers, as shown in the sixth figure from the left in FIG. 4f, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 to the Ng 2, and no power is configured at any layer in the Ng 3. When the network device configures one PTRS port (any one of PTRS ports 0 to 2, where the PTRS port 0 is used as an example), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by zero times relative to that of a PUSCH port, and the power increase has a linear value of zero times, or is 0 dB in logarithm domain. When the network device configures two PTRS ports (any two of PTRS ports 0 to 2), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 1) = 2$ times relative to that of the PUSCH port, and the power increase has a linear value of two times, or is 3 dB in logarithm domain. When the network device configures three PTRS ports (PTRS ports 0 to 2), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 2 all perform transmission, PTRS power of each of the PTRS port 0, the PTRS port 1, and the PTRS port 2 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS ports 0 to 2 may be increased by $P = 10 * log10(3 * 1) = 4.77$ dB, that is, three times, relative to that of the PUSCH port, and the power increase has a linear value of three times.

The foregoing is a value of P in the partial coherent mode when a PTRS port can borrow power of a different layer in an Ng in which the PTRS port is located and/or power on a frequency domain resource occupied by another PTRS port in the case of 8T and three layers.

In the case of 8T and three layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by three times relative to that of a PUSCH port, and the power increase has a linear value of three times, or is 4.77 dB in logarithm domain.

In a case of 8T and two layers, as shown in the seventh figure from the left in FIG. 4f, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 and the Ng 2, and no power is configured at any layer in the Ng 1 and the Ng 3. When the network device configures one PTRS port (a PTRS port 0 or a PTRS port 2, where the PTRS port 0 is used as an example), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$ or $P = 3Q_P - 3 = 3 * 1 - 3 = 0 dB$. In this case, power of the PTRS port 0 is increased by zero times relative to that of a PUSCH port, and the power increase has a linear value of zero times, or is 0 dB in logarithm domain. When the network device configures two PTRS ports (a PTRS port 0 and a PTRS port 2), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 2 perform transmission, PTRS power of each of the PTRS port 0 and the PTRS port 2 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$ or $P = 3Q_P - 3 = 3 * 2 - 3 = 3 dB$. To be specific, the power of each of the PTRS port 0 and the PTRS port 2 may be increased by $P = 10 * log10(2 * 1) = 2$ times relative to that of the PUSCH port, and the power increase has a linear value of two times, or is 3 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and two layers.

In the case of 8T and two layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by two times relative to that of a PUSCH port, and the power increase has a linear value of two times, or is 3 dB in logarithm domain.

In a case of 8T and one layer, as shown in the eighth figure from the left in FIG. 4f, the UE may support a maximum of four PTRS ports. In the figure, power is configured at one layer only in an Ng 0, and no power is configured in an Ng 1 to an Ng 3. In this case, a power increase of a PTRS port 0 relative to a PUSCH port has a linear value of zero times, or is 0 dB in logarithm domain.

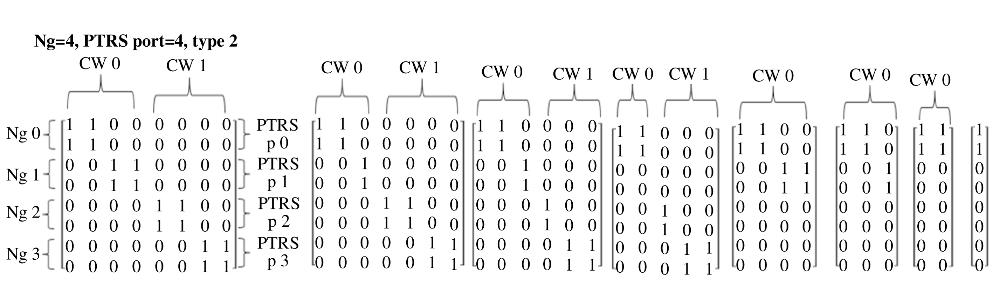

FIG. 4g shows an example of precoding matrices in a case of 8T and one to eight layers when Ng=4, the number of PTRS ports is 4, and a codebook form 2 is used.

In a case of 8T and eight layers, as shown in the first figure from the left in FIG. 4g, the UE may support a maximum of four PTRS ports. Power is configured at two layers in each Ng. When the network device configures one PTRS port (for example, any one of a PTRS port 0, a PTRS port 1, a PTRS port 2, and a PTRS port 3, where the PTRS port 0 is used as an example herein), the PTRS port 0 considers only a constraint condition that total power in an Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures two PTRS ports (any two of a PTRS port 0, a PTRS port 1, a PTRS port 2, and a PTRS port 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 2) = 6$ dB, that is, four times, relative to that of the PUSCH port, and the power increase has a linear value of four times. When the network device configures three PTRS ports (any three of a PTRS port 0, a PTRS port 1, a PTRS port 2, and a PTRS port 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 2 all perform transmission, PTRS power of each of the PTRS port 0, the PTRS port 1, and the PTRS port 2 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0, the PTRS port 1, and the PTRS port 2 may be increased by $P = 10 * log10(3 * 2)=7.78$ dB, that is, six times, relative to that of the PUSCH port, and the power increase has a linear value of six times. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0, the PTRS port 1, the PTRS port 2, and the PTRS port 3 may be increased by $P = 10 * log10(4 * 2)=9$ dB, that is, eight times, relative to that of the PUSCH port, and the power increase has a linear value of eight times.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by eight times relative to that of a PUSCH port, and the power increase has a linear value of eight times, or is 9 dB in logarithm domain.

In a case of 8T and seven layers, as shown in the second figure from the left in FIG. 4g, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, the Ng 2, and the Ng 3, and power is configured at only one layer in the Ng 1. When the network device configures one PTRS port (for example, any one of a PTRS port 0, a PTRS port 2, and a PTRS port 3, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures a PTRS port 1, the PTRS port 1 considers only a constraint condition that total power in the Ng 1 is fixed, that is, borrows only power of a different layer in the Ng 1, and the PUSCH-to-PTRS power factor may be represented as $P = 10 * log10(L_{Ng1})$. In this case, power of the PTRS port 1 is increased by zero times relative to that of a PUSCH port, and the power increase has a linear value of zero times, or is 0 dB in logarithm domain. When the network device configures two PTRS ports (any two of PTRS ports 0 to 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 (the case is the same for the PTRS port 2 or 3) may be increased by $P = 10 * log10(2 * 2)=6$ dB, that is, four times, relative to that of the PUSCH port, and the power increase has a linear value of four times; and the power of the PTRS port 1 may be increased by $P = 10 * log10(2 * 1)=2$ times relative to that of the PUSCH port, and the power increase has a linear value of two times, or is 3 dB in logarithm domain. When the network device configures three PTRS ports (any three of PTRS ports 0 to 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 2 all perform transmission, PTRS power of each of the PTRS port 0, the PTRS port 1, and the PTRS port 2 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 2 (which may alternatively be the PTRS port 0 and the PTRS port 3, or the PTRS port 2 and the PTRS port 3) may be increased by $P = 10 * log10(3 * 2)=7.78$ dB, that is, six times, relative to that of the PUSCH port, and the power increase has a linear value of six times; and the power of the PTRS port 1 may be increased by $P = 10 * log10(3 * 1)=4.77$ dB, that is, three times, relative to that of the PUSCH port, and the power increase has a linear value of three times. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0, the PTRS port 2, and the PTRS port 3 may be increased by $P = 10 * log10(4 * 2)=9$ dB, that is, eight times, relative to that of the PUSCH port, and the power increase has a linear value of eight times; and the power of the PTRS port 1 may be increased by $P = 10 * log10(4 * 1)=6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by seven times relative to that of a PUSCH port, and the power increase has a linear value of seven times, or is 8.45 dB in logarithm domain.

In a case of 8T and six layers, as shown in the third figure from the left in FIG. 4g, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 3, and power is configured at only one layer in the Ng 1 and the Ng 2. When the network device configures one PTRS port (for example, any one of a PTRS port 0 and a PTRS port 3, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, any one of a PTRS port 1 and a PTRS port 2, where the PTRS port 1 is used as an example herein), the PTRS port 1 considers only a constraint condition that total power in the Ng 1 is fixed, that is, borrows only power of a different layer in the Ng 1, and the PUSCH-to-PTRS power factor may be represented as $P = 10 * log10(L_{Ng3})$. In this case, power of the PTRS port 1 is increased by zero times relative to that of a PUSCH port, and the power increase has a linear value of zero times, or is 0 dB in logarithm domain. When the network device configures two PTRS ports (for example, any two of PTRS ports 0 to 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 (which may alternatively be the PTRS port 3) and the PTRS port 1 (which may alternatively be the PTRS port 2) perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(2 * 2)=6$ dB, that is, four times, relative to that of the PUSCH port, and the power increase has a linear value of four times; and the power of the PTRS port 1 may be increased by $P = 10 * log10(2 * 1)$ =2 times relative to that of the PUSCH port, and the power increase has a linear value of two times, or is 3 dB in logarithm domain. When the network device configures three PTRS ports (any three of PTRS ports 0 to 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1 (which may alternatively be the PTRS port 2), and the PTRS port 3 all perform transmission, PTRS power of each of the PTRS port 0, the PTRS port 1, and the PTRS port 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 1 may be increased by $P = 10 * log10(3 * 1)=4.77$ dB, that is, three times, relative to that of the PUSCH port, and the power increase has a linear value of three times; and the power of each of the PTRS port 0 and the PTRS port 3 may be increased by $P = 10 * log10(3 * 2)=7.78$ dB, that is, six times, relative to that of the PUSCH port, and the power increase has a linear value of six times. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 3 may be increased by $P = 10 * log10(4 * 2)=9$ dB, that is, eight times, relative to that of the PUSCH port, and the power increase has a linear value of eight times; and the power of each of the PTRS port 1 and the PTRS port 2 may be increased by $P = 10 * log10(4 * 1)=6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by six times relative to that of a PUSCH port, and the power increase has a linear value of six times, or is 7.78 dB in logarithm domain.

In a case of 8T and five layers, as shown in the fourth figure from the left in FIG. 4g, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 3, power is configured at only one layer in the Ng 2, and no power is configured at any layer in the Ng 1. When a PTRS port configured by the network device includes a PTRS port 1, power of the PTRS port 1 is increased by zero times relative to that of a PUSCH port. When the network device configures one PTRS port (for example, a PTRS port 0 or a PTRS port 3, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, a PTRS port 2), the PTRS port 2 considers only a constraint condition that total power in the Ng 2 is fixed, that is, borrows only power of a different layer in the Ng 2, and the PUSCH-to-PTRS power factor may be represented as $P = 10 * log10(L_{Ng2})$. In this case, power of the PTRS port 2 is increased by zero times relative to that of a PUSCH port, and the power increase has a linear value of zero times, or is 0 dB in logarithm domain. When the network device configures two PTRS ports (for example, a PTRS port 0 and a PTRS port 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 3 perform transmission, PTRS power of each of the PTRS port 0 and the PTRS port 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 3 may be increased by $P = 10 * log10(2 * 2) = 6$ dB, that is, four times, relative to that of the PUSCH port, and the power increase has a linear value of four times. When the network device configures two PTRS ports (for example, a PTRS port 0 (which may alternatively be a PTRS port 3) and a PTRS port 2), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 2 perform transmission, PTRS power of each of the PTRS port 0 and the PTRS port 2 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(2 * 2) = 6$ dB, that is, four times, relative to that of the PUSCH port, and the power increase has a linear value of four times; and the power of the PTRS port 2 may be increased by $P = 10 * log10(2 * 1) = 2$ times relative to that of the PUSCH port, and the power increase has a linear value of two times, or is 3 dB in logarithm domain. When the network device configures three PTRS ports (a PTRS port 0, a PTRS port 2, and a PTRS port 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 2, and the PTRS port 3 all perform transmission, PTRS power of each of the PTRS port 0, the PTRS port 2, and the PTRS port 3 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 3 may be increased by $P = 10 * log10(3 * 2) = 7.78$ dB, that is, six times, relative to that of the PUSCH port, and the power increase has a linear value of six times; and the power of the PTRS port 2 may be increased by $P = 10 * log10(3 * 1) = 4.77$ dB, that is, three times, relative to that of the PUSCH port, and the power increase has a linear value of three times.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by five times relative to that of a PUSCH port, and the power increase has a linear value of five times, or is 7 dB in logarithm domain.

In a case of 8T and four layers, as shown in the fifth figure from the left in FIG. 4g, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 1, and no power is configured at any layer in the Ng 2 and the Ng 3. When a PTRS port configured by the network device includes a PTRS port 2 and/or a PTRS port 3, power of each of the PTRS port 2 and the PTRS port 3 is increased by zero times relative to that of a PUSCH port. When the network device configures one PTRS port (any one of a PTRS port 0 and a PTRS port 1, where the PTRS port 0 is used as an example), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of each of the PTRS port 0 and the PTRS port 1 may be increased by $P = 10 * log10(2 * 2)=6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and four layers.

In the case of 8T and four layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by four times relative to that of a PUSCH port, and the power increase has a linear value of four times, or is 6 dB in logarithm domain.

In a case of 8T and three layers, as shown in the sixth figure from the left in FIG. 4g, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, power is configured at only one layer in the Ng 1, and no power is configured at any layer in the Ng 2 and the Ng 3. When a PTRS port configured by the network device includes a PTRS port 2 and/or a PTRS port 3, power of each of the PTRS port 2 and the PTRS port 3 is increased by zero times relative to that of a PUSCH port. When the network device configures one PTRS port (for example, a PTRS port 0), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$. In this case, power of the PTRS port 0 is increased by two times relative to that of a PUSCH port, and the power increase has a linear value of two times, or is 3 dB in logarithm domain. When the network device configures one PTRS port (for example, a PTRS port 1 the PTRS port 1 considers only a constraint condition that total power in the Ng 1 is fixed, that is, borrows only power of a different layer in the Ng 1, and the PUSCH-to-PTRS power factor may be represented as $P = 10 * log10(L_{Ng1})$. In this case, power of the PTRS port 1 is increased by zero times relative to that of a PUSCH port, and the power increase has a linear value of zero times, or is 0 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 10 * log10(Q_p * L_p)$. To be specific, the power of the PTRS port 0 may be increased by $P = 10 * log10(2 * 2)=6$ dB, that is, four times, relative to that of the PUSCH port, and the power increase has a linear value of four times; and the power of the PTRS port 1 may be increased by $P = 10 * log10(2 * 1)=2$ times relative to that of the PUSCH port, and the power increase has a linear value of two times, or is 3 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and three layers.

In the case of 8T and three layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by three times relative to that of a PUSCH port, and the power increase has a linear value of three times, or is 4.77 dB in logarithm domain.

In a case of 8T and two layers, as shown in the seventh figure from the left in FIG. 4g, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, and no power is configured at any layer in the Ng 1 to the Ng 3. When a PTRS port configured by the network device includes at least one of PTRS ports 1 to 3, power of each of the PTRS ports 1 to 3 is increased by zero times relative to that of a PUSCH port. When the network device configures one PTRS port (for example, a PTRS port 0), the PTRS port 0 considers only a constraint condition that total power in the Ng 0 is fixed, that is, borrows only power of a different layer in the Ng 0, and the PUSCH-to-PTRS power factor may be represented as $P = 10 * log10(L_{Ng0})$ or $P = 3Q_P - 3 = 3 * 1 - 3 = 0dB$. In this case, power of the PTRS port 0 is increased by zero times relative to that of a PUSCH port, and the power increase has a linear value of zero times, or is 0 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and two layers.

In the case of 8T and two layers, when a PTRS port cannot borrow power of a different layer in an Ng in which the PTRS port is located and/or power on a frequency domain resource occupied by another PTRS port, in the partial coherent mode, power of a PTRS port 0 may be increased by two times relative to that of a PUSCH port, and the power increase has a linear value of two times, or is 3 dB in logarithm domain.

In a case of 8T and one layer, as shown in the eighth figure from the left in FIG. 4g, the UE may support a maximum of four PTRS ports. In the figure, power is configured at one layer only in an Ng 0, and no power is configured in an Ng 1 to an Ng 3. In this case, a power increase of a PTRS port 0 relative to a PUSCH port has a linear value of zero times, or is 0 dB in logarithm domain.

The foregoing describes, with reference to FIG. 4b to FIG. 4g, how to determine the power factor in the partial coherent transmission mode in one codebook form. In the codebooks shown in FIG. 4b to FIG. 4g, codebooks in each Ng are fully coherent.

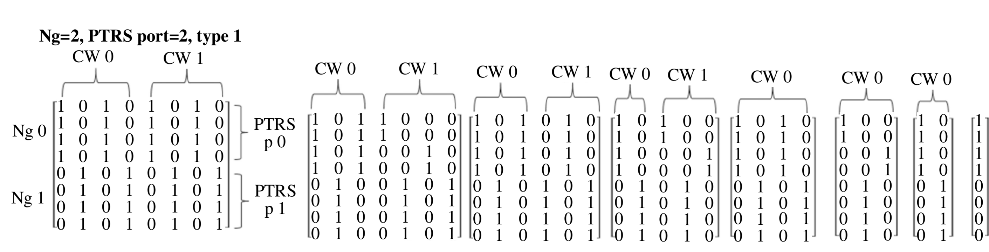

The following describes, with reference to FIG. 4h to FIG. 4m, how to determine the power factor in the partial coherent transmission mode in another codebook form. In codebooks shown in FIG. 4h to FIG. 4m, power in each Ng is the same, different PUSCH ports are preferentially used in one Ng, and different Ngs are preferentially used.

Case (3-2): Ng=2, and the number of PTRS ports is 2.

This case corresponds to a partial coherent transmission scenario. Power in each Ng is the same, different PUSCH ports are preferentially used in one Ng, and different Ngs are preferentially used. Based on different codebook forms (including a type 1 and a type 2), the following describes the PUSCH-to-PTRS power factor per layer per RE in different cases.

FIG. 4h shows an example of precoding matrices in a case of 8T and one to eight layers when Ng=2, the number of PTRS ports is 2, and a codebook form 1 is used.

In a case of 8T and eight layers, as shown in the first figure from the left in FIG. 4h, the UE may support a maximum of two PTRS ports. An Ng 0 includes uplink PUSCH ports 0 to 3, and an Ng 1 includes uplink PUSCH ports 4 to 7. It can be learned that power is configured at four layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P + 3$. In this case, power of the PTRS port 0 is increased by 6 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 3Q_P + 3$. To be specific, the power of each of the PTRS port 0 and the PTRS port 1 may be increased 9 dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by eight times relative to that of a PUSCH port, and the power increase has a linear value of eight times, or is 9 dB in logarithm domain.

In a case of 8T and seven layers, as shown in the second figure from the left in FIG. 4h, the UE may support a maximum of two PTRS ports. An Ng 0 includes uplink PUSCH ports 0 to 3, and an Ng 1 includes uplink PUSCH ports 4 to 7.

It can be learned that power is configured at three layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P + 1.77$. In this case, power of the PTRS port 0 is increased by 4.77 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 3Q_P + 1.77$. To be specific, the power of each of the PTRS port 0 and the PTRS port 1 may be increased 7.77 dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by seven times relative to that of a PUSCH port, and the power increase has a linear value of seven times, or is 8.45 dB in logarithm domain.

In a case of 8T and six layers, as shown in the third figure from the left in FIG. 4h, the UE may support a maximum of two PTRS ports. An Ng 0 includes uplink PUSCH ports 0 to 3, and an Ng 1 includes uplink PUSCH ports 4 to 7. It can be learned that power is configured at three layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P + 1.77$. In this case, power of the PTRS port 0 is increased by 4.77 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 3Q_P + 1.77$. To be specific, the power of each of the PTRS port 0 and the PTRS port 1 may be increased 7.77 dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by six times relative to that of a PUSCH port, and the power increase has a linear value of six times, or is 7.78 dB in logarithm domain.

In a case of 8T and five layers, as shown in the fourth figure from the left in FIG. 4h, the UE may support a maximum of two PTRS ports. An Ng 0 includes uplink PUSCH ports 0 to 3, and an Ng 1 includes uplink PUSCH ports 4 to 7. It can be learned that power is configured at two layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P$. In this case, power of the PTRS port 0 is increased by 3 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 3Q_P$. To be specific, the power of each of the PTRS port 0 and the PTRS port 1 may be increased 6 dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by five times relative to that of a PUSCH port, and the power increase has a linear value of five times, or is 7 dB in logarithm domain.

In a case of 8T and four layers, as shown in the fifth figure from the left in FIG. 4h, the UE may support a maximum of two PTRS ports. An Ng 0 includes uplink PUSCH ports 0 to 3, and an Ng 1 includes uplink PUSCH ports 4 to 7. It can be learned that power is configured at two layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P$. In this case, power of the PTRS port 0 is increased by 3 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 3Q_P$. To be specific, the power of each of the PTRS port 0 and the PTRS port 1 may be increased 6 dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and four layers.

In the case of 8T and four layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by four times relative to that of a PUSCH port, and the power increase has a linear value of four times, or is 6 dB in logarithm domain.

In a case of 8T and three layers, as shown in the sixth figure from the left in FIG. 4h, the UE may support a maximum of two PTRS ports. An Ng 0 includes uplink PUSCH ports 0 to 3, and an Ng 1 includes uplink PUSCH ports 4 to 7. It can be learned that power is configured at one layer in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P - 3$. In this case, power of the PTRS port 0 is increased by 0 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 3Q_P - 3$. To be specific, the power of each of the PTRS port 0 and the PTRS port 1 may be increased $P = 3Q_P - 3 = 3$ dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and three layers.

In the case of 8T and three layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by three times relative to that of a PUSCH port, and the power increase has a linear value of three times, or is 4.77 dB in logarithm domain.

In a case of 8T and two layers, as shown in the seventh figure from the left in FIG. 4h, the UE may support a maximum of two PTRS ports. An Ng 0 includes uplink PUSCH ports 0 to 3, and an Ng 1 includes uplink PUSCH ports 4 to 7. It can be learned that power is configured at one layer in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P - 3$. In this case, power of the PTRS port 0 is increased by 0 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, a formula for determining a power factor of a PTRS port is $P = 3Q_P - 3$. To be specific, the power of each of the PTRS port 0 and the PTRS port 1 may be increased $P = 3Q_P - 3 = 3$ dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and two layers.

In the case of 8T and two layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by two times relative to that of a PUSCH port, and the power increase has a linear value of two times, or is 3 dB in logarithm domain.

In a case of 8T and one layer, as shown in the eighth figure from the left in FIG. 4h, the UE may support a maximum of two PTRS ports. An Ng 0 includes uplink PUSCH ports 0 to 3, and an Ng 1 includes uplink PUSCH ports 4 to 7. It can be learned that power is configured at one layer in the Ng 0, and no power is configured in the Ng 1. When the network device configures a PTRS port 0, a power increase of the PTRS port 0 relative to a PUSCH port has a linear value of zero times, or is 0 dB in logarithm domain.

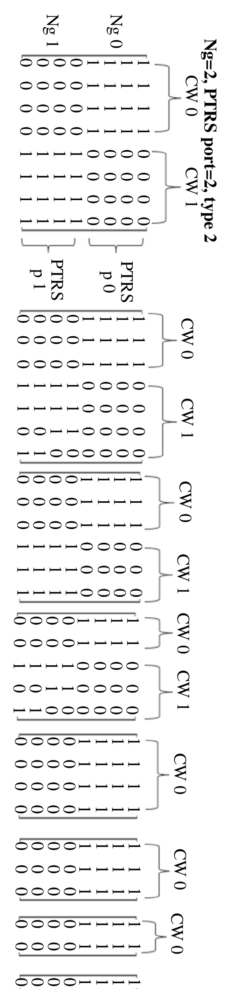

FIG. 4i shows an example of precoding matrices in a case of 8T and one to eight layers when Ng=2, the number of PTRS ports is 2, and a codebook form 2 is used.

In a case of 8T and eight layers, as shown in the first figure from the left in FIG. 4i, the UE may support a maximum of two PTRS ports. An Ng 0 includes uplink PUSCH ports 0 to 3, and an Ng 1 includes uplink PUSCH ports 4 to 7. It can be learned that power is configured at four layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P + 3$. In this case, power of the PTRS port 0 is increased by 6 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased $P = 3Q_P + 3 = 9$ dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by eight times relative to that of a PUSCH port, and the power increase has a linear value of eight times, or is 9 dB in logarithm domain.

In a case of 8T and seven layers, as shown in the second figure from the left in FIG. 4i, the UE may support a maximum of two PTRS ports. An Ng 0 includes uplink PUSCH ports 0 to 3, and an Ng 1 includes uplink PUSCH ports 4 to 7. It can be learned that power is configured at three layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P + 1.77$. In this case, power of the PTRS port 0 is increased by 4.77 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased $P = 3Q_P + 1.77 = 7.77$ dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by seven times relative to that of a PUSCH port, and the power increase has a linear value of seven times, or is 8.45 dB in logarithm domain.

In a case of 8T and six layers, as shown in the third figure from the left in FIG. 4i, the UE may support a maximum of two PTRS ports. An Ng 0 includes uplink PUSCH ports 0 to 3, and an Ng 1 includes uplink PUSCH ports 4 to 7. It can be learned that power is configured at three layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P + 1.77$. In this case, power of the PTRS port 0 is increased by 4.77 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased $P = 3Q_P + 1.77 = 7.77$ dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by six times relative to that of a PUSCH port, and the power increase has a linear value of six times, or is 7.78 dB in logarithm domain.

In a case of 8T and five layers, as shown in the fourth figure from the left in FIG. 4i, the UE may support a maximum of two PTRS ports. An Ng 0 includes uplink PUSCH ports 0 to 3, and an Ng 1 includes uplink PUSCH ports 4 to 7. It can be learned that power is configured at two layers in both the Ng 0 and the Ng 1. When the network device configures one PTRS port (a PTRS port 0 or a PTRS port 1, where the PTRS port 0 is used as an example herein), the PTRS port 0 considers only a constraint condition that total power in the Ng 0 is fixed, that is, borrows only power of a different layer in the Ng 0, and the PUSCH-to-PTRS power factor may be represented as $P = 3Q_P$. In this case, power of the PTRS port 0 is increased by 3 dB relative to that of a PUSCH port. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased $P = 3Q_P = 6$ dB relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by five times relative to that of a PUSCH port, and the power increase has a linear value of five times, or is 7 dB in logarithm domain.

In a case of 8T and four layers, as shown in the fifth figure from the left in FIG. 4i, the UE may support a maximum of two PTRS ports. An Ng 0 includes uplink PUSCH ports 0 to 3, and an Ng 1 includes uplink PUSCH ports 4 to 7. It can be learned that power is configured at four layers in the Ng 0, and no power is configured at any layer in the Ng 1. When the network device configures a PTRS port 0, power of the PTRS port 0 is increased by $P = 3Q_P = 3$ dB relative to that of a PUSCH port.

In a case of 8T and three layers, as shown in the sixth figure from the left in FIG. 4i, the UE may support a maximum of two PTRS ports. An Ng 0 includes uplink PUSCH ports 0 to 3, and an Ng 1 includes uplink PUSCH ports 4 to 7. It can be learned that power is configured at three layers in the Ng 0, and no power is configured at any layer in the Ng 1. When the network device configures a PTRS port 0, power of the PTRS port 0 is increased by $P = 3Q_P - 3 = 3dB$ relative to that of a PUSCH port.

In a case of 8T and two layers, as shown in the seventh figure from the left in FIG. 4i, the UE may support a maximum of two PTRS ports. An Ng 0 includes uplink PUSCH ports 0 to 3, and an Ng 1 includes uplink PUSCH ports 4 to 7. It can be learned that power is configured at two layers in the Ng 0, and no power is configured at any layer in the Ng 1. When the network device configures a PTRS port 0, power of the PTRS port 0 is increased by $P = 3Q_P - 3 = 3dB$ relative to that of a PUSCH port.

In a case of 8T and one layer, as shown in the eighth figure from the left in FIG. 4i, the UE may support a maximum of two PTRS ports. An Ng 0 includes uplink PUSCH ports 0 to 3, and an Ng 1 includes uplink PUSCH ports 4 to 7. It can be learned that power is configured at one layer in the Ng 0, and no power is configured at any layer in the Ng 1. When the network device configures a PTRS port 0, power of the PTRS port 0 is increased by zero times relative to that of a PUSCH port, and the power increase has a linear value of zero times, or is 0 dB in logarithm domain.

Case (4-2): Ng=4, and the number of PTRS ports is 2.

This case corresponds to a partial coherent transmission scenario. Power in each Ng is the same, different PUSCH ports are preferentially used in one Ng, and different Ngs are preferentially used. Based on different codebook forms (including a type 1 and a type 2), the following describes the PUSCH-to-PTRS power factor per layer per RE in different cases.

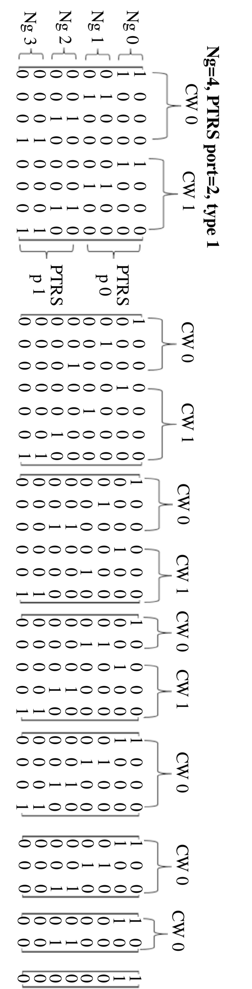

FIG. 4j shows an example of precoding matrices in a case of 8T and one to eight layers when Ng=4, the number of PTRS ports is 2, and a codebook form 1 is used.

In a case of 8T and eight layers, as shown in the first figure from the left in FIG. 4j, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 to the Ng 3. A PTRS port 0 corresponds to the Ng 0 and the Ng 1, and a PTRS port 1 corresponds to the Ng 2 and the Ng 3. When the network device configures one PTRS port (the PTRS port 0 or the PTRS port 1, where the PTRS port 0 is used as an example herein), if an Ng in which the PTRS port 0 is located is the Ng 0 or the Ng 1, the PTRS port 0 considers only a constraint condition that total power in the Ng 0 or the Ng 1 is fixed, that is, borrows only power of a different layer in the Ng 0 or the Ng 1, and the PUSCH-to-PTRS power factor may be represented as $P = 10 * log10(L_{Ng0 \text{ or } Ng1})$. In this case, power of the PTRS port 0 is increased by P = 3$Q_P$ = 3dB relative to that of a PUSCH port. When the network device configures two PTRS ports (the PTRS port 0 and the PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by P = 3$Q_P$ = 6dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by eight times relative to that of a PUSCH port, and the power increase has a linear value of eight times, or is 9 dB in logarithm domain.

In a case of 8T and seven layers, as shown in the second figure from the left in FIG. 4j, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 to the Ng 2, and power is configured at only one layer in the Ng 3. When the network device configures one PTRS port (a PTRS port 0 or a PTRS port 1, where the PTRS port 0 is used as an example herein), the PTRS port 0 considers only a constraint condition that total power in the Ng 0 or the Ng 1 is fixed, that is, borrows only power of a different layer in the Ng 0 or the Ng 1, and the PUSCH-to-PTRS power factor may be represented as P = 3$Q_P$ - 3. In this case, power of the PTRS port 0 is increased by 0 dB relative to that of a PUSCH port. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by $P = 3Q_P$ - 3=3 dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by seven times relative to that of a PUSCH port, and the power increase has a linear value of seven times, or is 8.45 dB in logarithm domain.

In a case of 8T and six layers, as shown in the third figure from the left in FIG. 4j, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in both the Ng 0 and the Ng 1, and power is configured at one layer in both the Ng 2 and the Ng 3. When the network device configures one PTRS port (a PTRS port 0 or a PTRS port 1, where the PTRS port 0 is used as an example herein), the PTRS port 0 considers only a constraint condition that total power in the Ng 0 or the Ng 1 is fixed, that is, borrows only power of a different layer in the Ng 0 or the Ng 1, and the PUSCH-to-PTRS power factor may be represented as $P = 3Q_P - 3$. In this case, power of the PTRS port 0 is increased by 0 dB relative to that of a PUSCH port. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by $P = 3Q_P - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by six times relative to that of a PUSCH port, and the power increase has a linear value of six times, or is 7.78 dB in logarithm domain.

In a case of 8T and five layers, as shown in the fourth figure from the left in FIG. 4j, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, and power is configured at one layer in the Ng 1 to the Ng 3. When the network device configures one PTRS port (a PTRS port 0 or a PTRS port 1, where the PTRS port 0 is used as an example herein), the PTRS port 0 considers only a constraint condition that total power in the Ng 0 or the Ng 1 is fixed, that is, borrows only power of a different layer in the Ng 0 or the Ng 1, and the PUSCH-to-PTRS power factor may be represented as $P = 3Q_P - 3$. In this case, power of the PTRS port 0 is increased by 0 dB relative to that of a PUSCH port. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by $P = 3Q_P - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by five times relative to that of a PUSCH port, and the power increase has a linear value of five times, or is 7 dB in logarithm domain.

In a case of 8T and four layers, as shown in the fifth figure from the left in FIG. 4j, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at one layer in the Ng 0 to the Ng 3. When the network device configures one PTRS port (a PTRS port 0 or a PTRS port 1, where the PTRS port 0 is used as an example herein), the PTRS port 0 considers only a constraint condition that total power in the Ng 0 or the Ng 1 is fixed, that is, borrows only power of a different layer in the Ng 0 or the Ng 1, and the PUSCH-to-PTRS power factor may be represented as $P = 3Q_P - 3$. In this case, power of the PTRS port 0 is increased by 0 dB relative to that of a PUSCH port. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by $P = 3Q_P - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and four layers.

In the case of 8T and four layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by four times relative to that of a PUSCH port, and the power increase has a linear value of four times, or is 6 dB in logarithm domain.

In a case of 8T and three layers, as shown in the sixth figure from the left in FIG. 4j, the UE may support a maximum of two PTRS ports. The UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 to the Ng 2, and no power is configured at any layer in the Ng 3. Power of a PTRS port may be increased by $P = (3Q_p - 3)$ dB relative to that of a PUSCH port. Specifically, when the network device configures one PTRS port (a PTRS port 0 or a PTRS port 1), power of the PTRS port may be increased by $P = 3 * 1 - 3 = 0$ dB relative to that of a PUSCH port. When the network device configures two PTRS ports (a PTRS port 0 and a PTRS port 1), power of each of the PTRS port 0 and the PTRS port 1 may be increased by $P = 3 * 2 - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and three layers.

In the case of 8T and three layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by three times relative to that of a PUSCH port, and the power increase has a linear value of three times, or is 4.77 dB in logarithm domain.

In a case of 8T and two layers, as shown in the seventh figure from the left in FIG. 4j, the UE may support a maximum of two PTRS ports. The UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 and the Ng 2, and no power is configured at any layer in the Ng 1 and the Ng 3. Power of a PTRS port may be increased by $P = (3Q_p - 3)$ dB relative to that of a PUSCH port. Specifically, when the network device configures one PTRS port (a PTRS port 0 or a PTRS port 1), power of the PTRS port may be increased by $P = 3 * 1 - 3 = 0$ dB relative to that of a PUSCH port. When the network device configures two PTRS ports (a PTRS port 0 and a PTRS port 1), power of each of the PTRS port 0 and the PTRS port 1 may be increased by $P = 3 * 2 - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and two layers.

In the case of 8T and two layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by two times relative to that of a PUSCH port, and the power increase has a linear value of two times, or is 3 dB in logarithm domain.

In a case of 8T and one layer, as shown in the eighth figure from the left in FIG. 4j, the UE may support a maximum of two PTRS ports. Regardless of whether the network device configures one or two PTRS ports, a power increase of the PTRS port relative to a PUSCH port has a linear value of zero times, or is 0 dB in logarithm domain.

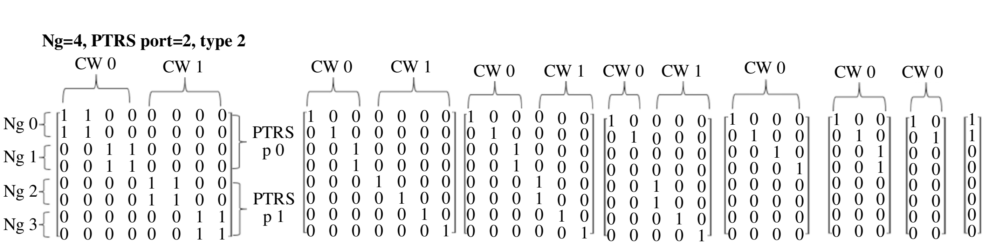

FIG. 4k shows an example of precoding matrices in a case of 8T and one to eight layers when Ng=2, the number of PTRS ports is 2, and a codebook form 2 is used.

In a case of 8T and eight layers, as shown in the first figure from the left in FIG. 4k, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 to the Ng 3. When the network device configures one PTRS port (a PTRS port 0 or a PTRS port 1, where the PTRS port 0 is used as an example herein), if an Ng in which the PTRS port 0 is located is the Ng 0 or the Ng 1, the PTRS port 0 considers only a constraint condition that total power in the Ng 0 or the Ng 1 is fixed, that is, borrows only power of a different layer in the Ng 0 or the Ng 1, and the PUSCH-to-PTRS power factor may be represented as $P = 3Q_p$. In this case, power of the PTRS port 0 is increased by 3 dB relative to that of a PUSCH port. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by $P = 3Q_p = 6$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by eight times relative to that of a PUSCH port, and the power increase has a linear value of eight times, or is 9 dB in logarithm domain.

In a case of 8T and seven layers, as shown in the second figure from the left in FIG. 4k, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at one layer in the Ng 0, the Ng 2, and the Ng 3, and power is configured at only one layer in the Ng 1. When the network device configures one PTRS port (a PTRS port 0 or a PTRS port 1, where the PTRS port 0 is used as an example herein), if an Ng in which the PTRS port 0 is located is the Ng 0 or the Ng 1, the PTRS port 0 considers only a constraint condition that total power in the Ng 0 or the Ng 1 is fixed, that is, borrows only power of a different layer in the Ng 0 or the Ng 1, and the PUSCH-to-PTRS power factor may be represented as $P = 3Q_p$ - 3. In this case, power of the PTRS port 0 is increased by 0 dB relative to that of a PUSCH port. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by $P = 3Q_p$ - 3=3 dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by seven times relative to that of a PUSCH port, and the power increase has a linear value of seven times, or is 8.45 dB in logarithm domain.

In a case of 8T and six layers, as shown in the third figure from the left in FIG. 4k, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 3, and power is configured at one layer in the Ng 1 and the Ng 2. When the network device configures one PTRS port (a PTRS port 0 or a PTRS port 1, where the PTRS port 0 is used as an example herein), if an Ng in which the PTRS port 0 is located is the Ng 0 or the Ng 1, the PTRS port 0 considers only a constraint condition that total power in the Ng 0 or the Ng 1 is fixed, that is, borrows only power of a different layer in the Ng 0 or the Ng 1, and the PUSCH-to-PTRS power factor may be represented as $P = 3Q_p$ - 3. In this case, power of the PTRS port 0 is increased by 0 dB relative to that of a PUSCH port. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0 or the Ng 1, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by $P = 3Q_p$ - 3=3 dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by six times relative to that of a PUSCH port, and the power increase has a linear value of six times, or is 7.78 dB in logarithm domain.

In a case of 8T and five layers, as shown in the fourth figure from the left in FIG. 4k, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 3, power is configured at one layer in the Ng 2, and no power is configured at any layer in the Ng 1. When the network device configures one PTRS port (a PTRS port 0 or a PTRS port 1, where the PTRS port 0 is used as an example herein), if an Ng in which the PTRS port 0 is located is the Ng 0, the PTRS port 0 considers only a constraint condition that total power in the Ng 0 is fixed, that is, borrows only power of a different layer in the Ng 0, and the PUSCH-to-PTRS power factor may be represented as $P = 3Q_p - 3$. In this case, power of the PTRS port 0 is increased by 0 dB relative to that of a PUSCH port. When the network device configures two PTRS ports (a PTRS port 0 and a PTRS port 1), in addition to considering that each PTRS port borrows power of a different layer in an Ng in which the PTRS port is located (for example, an Ng in which the PTRS port 0 is located is the Ng 0, and an Ng in which the PTRS port 1 is located is the Ng 2 or the Ng 3), the PUSCH-to-PTRS power factor per layer per RE further depends on a sending status of the other PTRS port. To be specific, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by $P = 3Q_p - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by five times relative to that of a PUSCH port, and the power increase has a linear value of five times, or is 7 dB in logarithm domain.

In a case of 8T and four layers, as shown in the fifth figure from the left in FIG. 4k, the UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 1, and no power is configured at any layer in the Ng 2 and the Ng 3. Therefore, when the network device configures a PTRS port 0, power of the PTRS port 0 may be increased by $P = 3Q_p - 3 = 3*2 - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and four layers.

In the case of 8T and four layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by four times relative to that of a PUSCH port, and the power increase has a linear value of four times, or is 6 dB in logarithm domain.

In a case of 8T and three layers, as shown in the sixth figure from the left in FIG. 4k, the UE may support a maximum of two PTRS ports. The UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, power is configured at one layer in the Ng 1, and no power is configured at any layer in the Ng 2 and the Ng 3. Power of a PTRS port may be increased by $P = (3Q_p - 3)$ dB relative to that of a PUSCH port. Specifically, when the network device configures one PTRS port (for example, a PTRS port 0), power of the PTRS port 0 may be increased by $P = 3 * 2 - 3 = 3$ dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and three layers.

In the case of 8T and three layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by three times relative to that of a PUSCH port, and the power increase has a linear value of three times, or is 4.77 dB in logarithm domain.

In a case of 8T and two layers, as shown in the seventh figure from the left in FIG. 4k, the UE may support a maximum of two PTRS ports. The UE may support a maximum of two PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers only in the Ng 0, and no power is configured at any layer in the Ng 1 to the Ng 3. Therefore, power of a PTRS port 0 may be increased by $P = 3Q_p - 3 = 3*2 - 3 = 3$

dB relative to that of a PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and two layers.

In the case of 8T and two layers, when a PTRS port cannot borrow power of a different layer in an Ng in which the PTRS port is located and/or power on a frequency domain resource occupied by another PTRS port, in the partial coherent mode, power of each of a PTRS port 0 and a PTRS port 1 may be increased by two times relative to that of a PUSCH port, and the power increase has a linear value of two times, or is 3 dB in logarithm domain.

In a case of 8T and one layer, as shown in the eighth figure from the left in FIG. 4k, the UE may support a maximum of two PTRS ports. Regardless of whether the network device configures one or two PTRS ports, a power increase of the PTRS port relative to a PUSCH port has a linear value of zero times, or is 0 dB in logarithm domain.

Case (5-2): Ng=4, and the number of PTRS ports is 4.

This case corresponds to a partial coherent transmission scenario. Power in each Ng is the same, different PUSCH ports are preferentially used in one Ng, and different Ngs are preferentially used. Based on different codebook forms (including a type 1 and a type 2), the following describes the PUSCH-to-PTRS power factor per layer per RE in different cases.

In a case of 8T and eight layers, as shown in the first figure from the left in FIG. 4i, the UE may support a maximum of four PTRS ports. Power is configured at two layers in each Ng. When the network device configures one PTRS port (for example, any one of a PTRS port 0, a PTRS port 1, a PTRS port 2, and a PTRS port 3, where the PTRS port 0 is used as an example herein), the PTRS port 0 considers only a constraint condition that total power in an Ng 0 is fixed, that is, borrows only power of a different layer in the Ng 0. In this case, power of the PTRS port 0 is increased by two times relative to that of a PUSCH port, and the power increase has a linear value of two times, or is 3 dB in logarithm domain. When the network device configures two PTRS ports (any two of a PTRS port 0, a PTRS port 1, a PTRS port 2, and a PTRS port 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by four times relative to that of the PUSCH port, and the power increase has a linear value of four times, or is 6 dB in logarithm domain. When the network device configures three PTRS ports (any three of a PTRS port 0, a PTRS port 1, a PTRS port 2, and a PTRS port 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 2 all perform transmission, PTRS power of each of the PTRS port 0, the PTRS port 1, and the PTRS port 2 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, and the PTRS port 2 may be increased by six times relative to that of the PUSCH port, and the power increase has a linear value of six times, or is 7.78 dB in logarithm domain. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, the PTRS port 2, and the PTRS port 3 may be increased by eight times relative to that of the PUSCH port, and the power increase has a linear value of eight times, or is 9 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by eight times relative to that of a PUSCH port, and the power increase has a linear value of eight times, or is 9 dB in logarithm domain.

In a case of 8T and seven layers, as shown in the second figure from the left in FIG. 4i, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 to the Ng 2, and power is configured at only one layer in the Ng 3. When the network device configures one PTRS port (for example, any one of a PTRS port 0, a PTRS port 1, a PTRS port 2, and a PTRS port 3, where the PTRS port 0 is used as an example herein), the PTRS port 0 considers only a constraint condition that total power in the Ng 0 is fixed, that is, borrows only power of a different layer in the Ng 0. In this case, power of the PTRS port 0 is increased by zero times relative to that of a PUSCH port, and the power increase has a linear value of zero times, or is 0 dB in logarithm domain. When the network device configures two PTRS ports (any two of a PTRS port 0, a PTRS port 1, a PTRS port 2, and a PTRS port 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain. When the network device configures three PTRS ports (any three of a PTRS port 0, a PTRS port 1, a PTRS port 2, and a PTRS port 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 2 all perform transmission, PTRS power of each of the PTRS port 0, the PTRS port 1, and the PTRS port 2 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, and the PTRS port 2 may be increased by three times relative to that of the PUSCH port, and the power increase has a linear value of three times, or is 4.77 dB in logarithm domain. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, the PTRS port 2, and the PTRS port 3 may be increased by four times relative to that of the PUSCH port, and the power increase has a linear value of four times, or is 6 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by seven times relative to that of a PUSCH port, and the power increase has a linear value of seven times, or is 8.45 dB in logarithm domain.

In a case of 8T and six layers, as shown in the third figure from the left in FIG. 4i, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 1, and power is configured at only one layer in the Ng 2 and the Ng 3. When the network device configures one PTRS port (for example, any one of a PTRS port 0 and a PTRS port 1, where the PTRS port 0 is used as an example herein), the PTRS port 0 considers only a constraint condition that total power in the Ng 0 is fixed, that is, borrows only power of a different layer in the Ng 0. In this case, power of the PTRS port 0 is increased by two times relative to that of a PUSCH port, and the power increase has a linear value of two times, or is 3 dB in logarithm domain. When the network device configures one PTRS port (for example, any one of a PTRS port 2 and a PTRS port 3, where the PTRS port 3 is used as an example herein), the PTRS port 3 considers only a constraint condition that total power in the Ng 3 is fixed, that is, borrows only power of a different layer in the Ng 3. In this case, power of the PTRS port 3 is increased by zero times relative to that of a PUSCH port, and the power increase has a linear value of zero times, or is 0 dB in logarithm domain. When the network device configures two PTRS ports (for example, a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain. When the network device configures two PTRS ports (for example, a PTRS port 2 and a PTRS port 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 2 and the PTRS port 3 perform transmission, PTRS power of each of the PTRS port 2 and the PTRS port 3 may be increased by borrowing power that is of a PUSCH port associated with a PTRS of the PTRS port on a frequency domain resource occupied by the other PTRS port and that is not used to send data and a PTRS. In this case, the power of each of the PTRS port 2 and the PTRS port 3 may be increased by two times relative to that of the PUSCH port, and the power increase has a linear value of two times, or is 3 dB in logarithm domain. When the network device configures three PTRS ports (any three of PTRS ports 0 to 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 3 all perform transmission, PTRS power of each of the PTRS port 0, the PTRS port 1, and the PTRS port 3 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, and the PTRS port 3 may be increased by three times relative to that of the PUSCH port, and the power increase has a linear value of three times, or is 4.77 dB in logarithm domain. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, the power of each of the PTRS ports 0 to 3 may be increased by four times relative to that of the PUSCH port, and the power increase has a linear value of four times, or is 6 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by six times relative to that of a PUSCH port, and the power increase has a linear value of six times, or is 7.78 dB in logarithm domain.

In a case of 8T and five layers, as shown in the fourth figure from the left in FIG. 4i, the UE may support a maximum of four PTRS ports. An Ng 0 includes uplink PUSCH ports 0 and 1, an Ng 1 includes uplink PUSCH ports 2 and 3, Ng 2 includes uplink PUSCH ports 4 and 5, and an Ng 3 includes uplink PUSCH ports 6 and 7. It can be learned that power is configured at two layers in the Ng 0, and power is configured at only one layer in the Ng 1 to the Ng 3. When the network device configures one PTRS port (for example, a PTRS port 0), the PTRS port 0 considers only a constraint condition that total power in the Ng 0 is fixed, that is, borrows only power of a different layer in the Ng 0. In this case, power of the PTRS port 0 is increased by two times relative to that of a PUSCH port, and the power increase has a linear value of two times, or is 3 dB in logarithm domain. When the network device configures one PTRS port (for example, any one of a PTRS port 1, a PTRS port 2, and a PTRS port 3, where the PTRS port 3 is used as an example herein), the PTRS port 3 considers only a constraint condition that total power in the Ng 3 is fixed, that is, borrows only power of a different layer in the Ng 3. In this case, power of the PTRS port 3 is increased by zero times relative to that of a PUSCH port, and the power increase has a linear value of zero times, or is 0 dB in logarithm domain. When the network device configures two PTRS ports (for example, a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain. When the network device configures two PTRS ports (for example, a PTRS port 2 and a PTRS port 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 2 and the PTRS port 3 perform transmission, PTRS power of each of the PTRS port 2 and the PTRS port 3 may be increased by borrowing power that is of a PUSCH port associated with a PTRS of the PTRS port on a frequency domain resource occupied by the other PTRS port and that is not used to send data and a PTRS. In this case, the power of each of the PTRS port 2 and the PTRS port 3 may be increased by two times relative to that of the PUSCH port, and the power increase has a linear value of two times, or is 3 dB in logarithm domain. When the network device configures three PTRS ports (any three of PTRS ports 0 to 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 3 all perform transmission, PTRS power of each of the PTRS port 0, the PTRS port 1, and the PTRS port 3 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, and the PTRS port 3 may be increased by three times relative to that of the PUSCH port, and the power increase has a linear value of three times, or is 4.77 dB in logarithm domain. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, the power of each of the PTRS ports 0 to 3 may be increased by four times relative to that of the PUSCH port, and the power increase has a linear value of four times, or is 6 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by five times relative to that of a PUSCH port, and the power increase has a linear value of five times, or is 7 dB in logarithm domain.

In a case of 8T and four layers, as shown in the fifth figure from the left in FIG. 4i, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 to the Ng 3. When the network device configures one PTRS port (any one of PTRS ports 0 to 3, where the PTRS port 0 is used as an example), the PTRS port 0 considers only a constraint condition that total power in the Ng 0 is fixed, that is, borrows only power of a different layer in the Ng 0. In this case, power of the PTRS port 0 is increased by zero times relative to that of a PUSCH port, and the power increase has a linear value of zero times, or is 0 dB in logarithm domain. When the network device configures two PTRS ports (any two of PTRS ports 0 to 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain. When the network device configures three PTRS ports (any three of PTRS ports 0 to 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 3 perform transmission, PTRS power of each of the PTRS port 0, the PTRS port 1, and the PTRS port 3 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, and the PTRS port 3 may be increased by three times relative to that of the PUSCH port, and the power increase has a linear value of three times, or is 4.77 dB in logarithm domain. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, the power of each of the PTRS ports 0 to 3 may be increased by $P = 10 * log10(4 * 1) = 6$ dB, that is, four times, relative to that of the PUSCH port, and the power increase has a linear value of four times.

The foregoing is a value of P in the partial coherent mode when a PTRS port can borrow power of a different layer in an Ng in which the PTRS port is located and/or power on a frequency domain resource occupied by another PTRS port in the case of 8T and four layers.

In the case of 8T and four layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by four times relative to that of a PUSCH port, and the power increase has a linear value of four times, or is 6 dB in logarithm domain.

In a case of 8T and three layers, as shown in the sixth figure from the left in FIG. 4i, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 to the Ng 2, and no power is configured at any layer in the Ng 3. When the network device configures one PTRS port (any one of PTRS ports 0 to 2, where the PTRS port 0 is used as an example), the PTRS port 0 considers only a constraint condition that total power in the Ng 0 is fixed, that is, borrows only power of a different layer in the Ng 0. In this case, power of the PTRS port 0 is increased by zero times relative to that of a PUSCH port, and the power increase has a linear value of zero times, or is 0 dB in logarithm domain. When the network device configures two PTRS ports (any two of PTRS ports 0 to 2), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain. When the network device configures three PTRS ports (PTRS ports 0 to 2), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 2 all perform transmission, PTRS power of each of the PTRS port 0, the PTRS port 1, and the PTRS port 2 may be increased by borrowing power that is of a PUSCH port associated with a PTRS of the PTRS port on a frequency domain resource occupied by the other PTRS port and that is not used to send data and a PTRS. In this case, the power of each of the PTRS ports 0 to 2 may be increased by three times relative to that of the PUSCH port, and the power increase has a linear value of three times, or is 4.77 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and three layers.

In the case of 8T and three layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by three times relative to that of a PUSCH port, and the power increase has a linear value of three times, or is 4.77 dB in logarithm domain.

In a case of 8T and two layers, as shown in the seventh figure from the left in FIG. 4i, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at only one layer in the Ng 0 and the Ng 2, and no power is configured at any layer in the Ng 1 and the Ng 3. When the network device configures one PTRS port (a PTRS port 0 or a PTRS port 2, where the PTRS port 0 is used as an example), the PTRS port 0 considers only a constraint condition that total power in the Ng 0 is fixed, that is, borrows only power of a different layer in the Ng 0, and the PUSCH-to-PTRS power factor may be represented as $P = 3Q_P - 3 = 3 * 1 - 3 = 0 dB$. In this case, power of the PTRS port 0 is increased by zero times relative to that of a PUSCH port, and the power increase has a linear value of zero times, or is 0 dB in logarithm domain. When the network device configures two PTRS ports (a PTRS port 0 and a PTRS port 2), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 2 perform transmission, PTRS power of each of the PTRS port 0 and the PTRS port 2 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 2 may be increased by $P = 3Q_P - 3 = 3 * 2 - 3 = 3 dB$ relative to that of the PUSCH port.

The foregoing is a value of P in the partial coherent mode when a PTRS port can borrow power of a different layer in an Ng in which the PTRS port is located and/or power on a frequency domain resource occupied by another PTRS port in the case of 8T and two layers.

In the case of 8T and two layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by two times relative to that of a PUSCH port, and the power increase has a linear value of two times, or is 3 dB in logarithm domain.

In a case of 8T and one layer, as shown in the eighth figure from the left in FIG. 4i, the UE may support a maximum of four PTRS ports. In the figure, power is configured at one layer only in an Ng 0, and no power is configured in an Ng 1 to an Ng 3. In this case, a power increase of a PTRS port 0 relative to a PUSCH port has a linear value of zero times, or is 0 dB in logarithm domain.

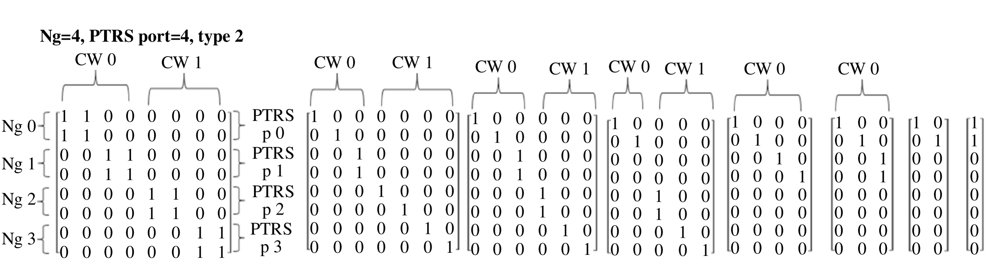

FIG. 4m shows an example of precoding matrices in a case of 8T and one to eight layers when Ng=4, the number of PTRS ports is 4, and a codebook form 2 is used.

In a case of 8T and eight layers, as shown in the first figure from the left in FIG. 4m, the UE may support a maximum of four PTRS ports. Power is configured at two layers in each Ng. When the network device configures one PTRS port (for example, any one of a PTRS port 0, a PTRS port 1, a PTRS port 2, and a PTRS port 3, where the PTRS port 0 is used as an example herein), the PTRS port 0 considers only a constraint condition that total power in an Ng 0 is fixed, that is, borrows only power of a different layer in the Ng 0. In this case, power of the PTRS port 0 is increased by two times relative to that of a PUSCH port, and the power increase has a linear value of two times, or is 3 dB in logarithm domain. When the network device configures two PTRS ports (any two of a PTRS port 0, a PTRS port 1, a PTRS port 2, and a PTRS port 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain. When the network device configures three PTRS ports (any three of a PTRS port 0, a PTRS port 1, a PTRS port 2, and a PTRS port 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 2 all perform transmission, PTRS power of each of the PTRS port 0, the PTRS port 1, and the PTRS port 2 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, and the PTRS port 2 may be increased by three times relative to that of the PUSCH port, and the power increase has a linear value of three times, or is 4.77 dB in logarithm domain. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, the PTRS port 2, and the PTRS port 3 may be increased by four times relative to that of the PUSCH port, and the power increase has a linear value of four times, or is 6 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and eight layers.

In the case of 8T and eight layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by eight times relative to that of a PUSCH port, and the power increase has a linear value of eight times, or is 9 dB in logarithm domain.

In a case of 8T and seven layers, as shown in the second figure from the left in FIG. 4m, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, the Ng 2, and the Ng 3, and power is configured at only one layer in the Ng 1. When the network device configures one PTRS port (for example, any one of PTRS ports 0 to 3, where the PTRS port 0 is used as an example herein), the PTRS port 0 considers only a constraint condition that total power in the Ng 0 is fixed, that is, borrows only power of a different layer in the Ng 0. In this case, power of the PTRS port 0 is increased by zero times relative to that of a PUSCH port, and the power increase has a linear value of zero times, or is 0 dB in logarithm domain. When the network device configures two PTRS ports (any two of PTRS ports 0 to 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain. When the network device configures three PTRS ports (any three of PTRS ports 0 to 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 2 all perform transmission, PTRS power of each of the PTRS port 0, the PTRS port 1, and the PTRS port 2 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, and the PTRS port 2 may be increased by three times relative to that of the PUSCH port, and the power increase has a linear value of three times, or is 4.77 dB in logarithm domain. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, the PTRS port 2, and the PTRS port 3 may be increased by four times relative to that of the PUSCH port, and the power increase has a linear value of four times, or is 6 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and seven layers.

In the case of 8T and seven layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by seven times relative to that of a PUSCH port, and the power increase has a linear value of seven times, or is 8.45 dB in logarithm domain.

In a case of 8T and six layers, as shown in the third figure from the left in FIG. 4m, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at one layer in the Ng 0 to the Ng 2, and power is configured at two layers in the Ng 3. When the network device configures one PTRS port (for example, any one of PTRS ports 0 to 3, where the PTRS port 0 is used as an example herein), the PTRS port 0 considers only a constraint condition that total power in the Ng 0 is fixed, that is, borrows only power of a different layer in the Ng 0. In this case, power of the PTRS port 0 is increased by zero times relative to that of a PUSCH port, and the power increase has a linear value of zero times, or is 0 dB in logarithm domain. When the network device configures two PTRS ports (for example, any two of PTRS ports 0 to 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain. When the network device configures three PTRS ports (any three of PTRS ports 0 to 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 1, and the PTRS port 3 all perform transmission, PTRS power of each of the PTRS port 0, the PTRS port 1, and the PTRS port 3 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 1, and the PTRS port 3 may be increased by three times relative to that of the PUSCH port, and the power increase has a linear value of three times, or is 4.77 dB in logarithm domain. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, the power of each of the PTRS ports 0 to 3 may be increased by four times relative to that of the PUSCH port, and the power increase has a linear value of four times, or is 6 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and six layers.

In the case of 8T and six layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by six times relative to that of a PUSCH port, and the power increase has a linear value of six times, or is 7.78 dB in logarithm domain.

In a case of 8T and five layers, as shown in the fourth figure from the left in FIG. 4m, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 3, power is configured at one layer in the Ng 2, and no power is configured at any layer in the Ng 1. When a PTRS port configured by the network device includes a PTRS port 1, power of the PTRS port 1 is increased by zero times relative to that of a PUSCH port. When the network device configures one PTRS port (for example, any one of a PTRS port 0, a PTRS port 2, and a PTRS port 3, where the PTRS port 0 is used as an example herein), the PTRS port 0 considers only a constraint condition that total power in the Ng 0 is fixed, that is, borrows only power of a different layer in the Ng 0. In this case, power of the PTRS port 0 is increased by zero times relative to that of a PUSCH port, and the power increase has a linear value of zero times, or is 0 dB in logarithm domain. When the network device configures two PTRS ports (for example, any two of a PTRS port 0, a PTRS port 2, and a PTRS port 3), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain. When the network device configures three PTRS ports (a PTRS port 0, a PTRS port 2, and a PTRS port 3), in addition to considering that each PTRS port borrows power of a different layer in an Ng in which the PTRS port is located, the PUSCH-to-PTRS power factor per layer per RE further depends on sending statuses of the other two PTRS ports. For example, if the PTRS port 0, the PTRS port 2, and the PTRS port 3 all perform transmission, PTRS power of each of the PTRS port 0, the PTRS port 2, and the PTRS port 3 may be increased by borrowing power that is of a PUSCH port associated with a PTRS of the PTRS port on a frequency domain resource occupied by the other PTRS port and that is not used to send data and a PTRS. In this case, the power of each of the PTRS port 0, the PTRS port 2, and the PTRS port 3 may be increased by three times relative to that of the PUSCH port, and the power increase has a linear value of three times, or is 4.77 dB in logarithm domain. When the network device configures four PTRS ports, in addition to considering that each PTRS port borrows power of a different layer in an Ng in which the PTRS port is located, the PUSCH-to-PTRS power factor per layer per RE further depends on sending statuses of the other three PTRS ports. For example, if PTRS ports 0 to 3 all perform transmission, PTRS power of each of the PTRS ports 0 to 3 may be increased by borrowing power that is of a PUSCH port associated with a PTRS of the PTRS port on a frequency domain resource occupied by the other PTRS port and that is not used to send data and a PTRS. In this case, the power of each of the PTRS ports 0 to 3 may be increased by four times relative to that of the PUSCH port, and the power increase has a linear value of four times, or is 6 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and five layers.

In the case of 8T and five layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by five times relative to that of a PUSCH port, and the power increase has a linear value of five times, or is 7 dB in logarithm domain.

In a case of 8T and four layers, as shown in the fifth figure from the left in FIG. 4m, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0 and the Ng 1, and no power is configured at any layer in the Ng 2 and the Ng 3. When a PTRS port configured by the network device includes a PTRS port 2 and/or a PTRS port 3, power of each of the PTRS port 2 and the PTRS port 3 is increased by zero times relative to that of a PUSCH port. When the network device configures one PTRS port (any one of a PTRS port 0 and a PTRS port 1, where the PTRS port 0 is used as an example), the PTRS port 0 considers only a constraint condition that total power in the Ng 0 is fixed, that is, borrows only power of a different layer in the Ng 0. In this case, power of the PTRS port 0 is increased by two times relative to that of a PUSCH port, and the power increase has a linear value of two times, or is 3 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and four layers.

In the case of 8T and four layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by four times relative to that of a PUSCH port, and the power increase has a linear value of four times, or is 6 dB in logarithm domain.

In a case of 8T and three layers, as shown in the sixth figure from the left in FIG. 4m, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, power is configured at one layer in the Ng 1, and no power is configured at any layer in the Ng 2 and the Ng 3. When a PTRS port configured by the network device includes a PTRS port 2 and/or a PTRS port 3, power of each of the PTRS port 2 and the PTRS port 3 is increased by zero times relative to that of a PUSCH port. When the network device configures one PTRS port (any one of a PTRS port 0 and a PTRS port 1, where the PTRS port 0 is used as an example), the PTRS port 0 considers only a constraint condition that total power in the Ng 0 is fixed, that is, borrows only power of a different layer in the Ng 0. In this case, power of the PTRS port 0 is increased by two times relative to that of a PUSCH port, and the power increase has a linear value of two times, or is 3 dB in logarithm domain. When the network device configures two PTRS ports (a PTRS port 0 and a PTRS port 1), in addition to considering that each PTRS port borrows power of a different layer in an Ng in which the PTRS port is located, the PUSCH-to-PTRS power factor per layer per RE further depends on a sending status of the other PTRS port. For example, if both the PTRS port 0 and the PTRS port 1 perform transmission, PTRS power of each of the PTRS port 0 and the PTRS port 1 may be increased by borrowing power that is of a PUSCH port associated with a PTRS of the PTRS port on a frequency domain resource occupied by the other PTRS port and that is not used to send data and a PTRS. In this case, the power of each of the PTRS port 0 and the PTRS port 1 may be increased by two times relative to that of the PUSCH port, and the power increase has a linear value of two times, or is 3 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and three layers.

In the case of 8T and three layers, when a PTRS port cannot borrow power of a different layer in an Ng in which the PTRS port is located and/or power on a frequency domain resource occupied by another PTRS port, in the partial coherent mode, power of each of PTRS ports 0 to 3 may be increased by three times relative to that of a PUSCH port, and the power increase has a linear value of three times, or is 4.77 dB in logarithm domain.

In a case of 8T and two layers, as shown in the seventh figure from the left in FIG. 4m, the UE may support a maximum of four PTRS ports. An Ng 0 includes uplink PUSCH ports 0 and 1, an Ng 1 includes uplink PUSCH ports 2 and 3, an Ng 2 includes uplink PUSCH ports 4 and 5, and an Ng 3 includes uplink PUSCH ports 6 and 7. It can be learned that power is configured at two layers in the Ng 0, and no power is configured at any layer in the Ng 1 to the Ng 3. When a PTRS port configured by the network device includes at least one of PTRS ports 1 to 3, power of each of the PTRS ports 1 to 3 is increased by zero times relative to that of a PUSCH port. When the network device configures one PTRS port (for example, a PTRS port 0), the PTRS port 0 considers only a constraint condition that total power in the Ng 0 is fixed, that is, borrows only power of a different layer in the Ng 0, and the PUSCH-to-PTRS power factor may be represented as $P = 3Q_P - 3 = 3 * 1 - 3 = 0dB$. In this case, power of the PTRS port 0 is increased by zero times relative to that of a PUSCH port, and the power increase has a linear value of zero times, or is 0 dB in logarithm domain.

The foregoing is a value of P in the partial coherent mode when a PTRS port can borrow power of a different layer in an Ng in which the PTRS port is located and/or power on a frequency domain resource occupied by another PTRS port in the case of 8T and two layers.

In the case of 8T and two layers, when a PTRS port cannot borrow power of a different layer in an Ng in which the PTRS port is located and/or power on a frequency domain resource occupied by another PTRS port, in the partial coherent mode, power of a PTRS port 0 may be increased by two times relative to that of a PUSCH port, and the power increase has a linear value of two times, or is 3 dB in logarithm domain.

In a case of 8T and one layer, as shown in the eighth figure from the left in FIG. 4m, the UE may support a maximum of four PTRS ports. In the figure, power is configured at one layer only in an Ng 0, and no power is configured in an Ng 1 to an Ng 3. In this case, a power increase of a PTRS port 0 relative to a PUSCH port has a linear value of zero times, or is 0 dB in logarithm domain.

Based on the partial coherent transmission mode in Case (3-1) to Case (5-1) and Case (3-2) to Case (5-2), the PUSCH-to-PTRS power factor per layer per RE may be obtained, as shown in Table 6.

Table 6

| $Q_p * L_{N_g}$ | $P$ (unit: dB) |
|---|---|
| 1 | 0 |
| 2 | 3 |
| 3 | 4.77 |
| 4 | 6 |

(continued)

| $Q_p * L_{Ng}$ | $P$ (unit: dB) |
|---|---|
| 5 | 7 |
| 6 | 7.78 |
| 7 | 8.45 |
| 8 | 9 |

Corresponding to each piece of $Q_p * L_p$ or $Q_p * L_{Ng}$, a corresponding power factor may be obtained by searching Table 5.

After the methods for determining a power factor in the full coherent transmission scenario and the partial coherent transmission scenario are described, the following describes a method for determining a power factor in a non-coherent transmission scenario.

Case (6): Non-coherent PUSCH transmission mode

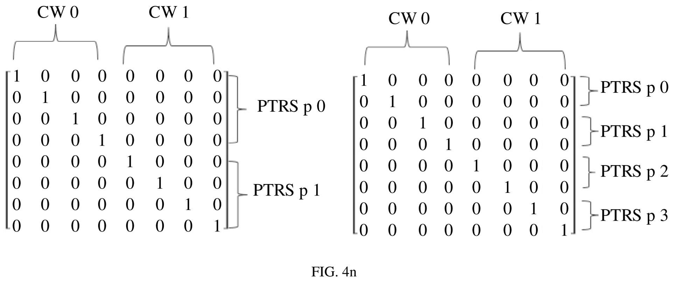

In the non-coherent PUSCH transmission mode, the PUSCH-to-PTRS power factor per layer per RE is related only to the number of PTRS ports. FIG. 4n is an example diagram of still another 8Teight-layer precoding matrix according to an embodiment of this application. The left figure shows a case in which Ng=1 and the number of PTRS ports is 2, and the right figure shows a case in which Ng=1 and the number of PTRS ports is 4. It may be understood that when non-coherent PUSCH transmission is performed, all PUSCH ports do not have a capability of "borrowing" power, that is, there is no difference for each PUSCH port between power for sending an uplink transmission data layer and power for sending a PTRS. In this case, the power factor is related only to a number of time-frequency resources occupied by a PTRS in a same OFDM symbol. Because a subcarrier for sending the PTRS cannot be used to send data, in this case, for the PTRS, power of the PUSCH port on a time-frequency resource for sending of another PTRS port may be "borrowed", to increase power of a PTRS port corresponding to the PUSCH port. A specific example is shown in Table 4.

The left figure in FIG. 4n is used as an example, where Ng=1, and the number of PTRS ports is 2. PUSCH ports 0 to 3 share a PTRS port 0, and PUSCH ports 4 to 7 share a PTRS port 1. When the network device configures two PTRS ports (the PTRS port 0 and the PTRS port 1), power of the PUSCH ports 0 to 3 on a first RE (a subcarrier 7# and a symbol 3#) may be borrowed for sending of the PTRS port 0 on a second RE (a subcarrier 6# and a symbol 3#), and power of the PUSCH ports 4 to 7 on the second RE (the subcarrier 6# and the symbol 3#) may be borrowed for sending of the PTRS port 1 on the first RE (the subcarrier 7# and the symbol 3#). In this case, the power of each of the PTRS port 0 and PTRS port 1 may be increased by two times relative to that of the PUSCH port (because a PUSCH is not sent on a time-frequency resource occupied by the other PTRS port), and the power increase has a linear value of two times, or is 3 dB in logarithm domain.

The right figure in FIG. 4n is used as an example, where Ng=1, and the number of PTRS ports is 4. PUSCH ports 0 and 1 share a PTRS port 0, PUSCH ports 2 and 3 share a PTRS port 1, PUSCH ports 4 and 5 share a PTRS port 2, and PUSCH ports 6 and 7 share a PTRS port 3. A principle is the same as that used when Ng=1 and the number of PTRS ports is 2. When the network device configures four PTRS ports (the PTRS ports 0 to 3), power of each of the PTRS ports 0 to 3 may be increased by four times relative to that of the PUSCH port (because a PUSCH is not sent on a time-frequency resource occupied by another PTRS port), and the power increase has a linear value of four times, or is 6 dB in logarithm domain.

Similarly, in the non-coherent transmission scenario, when the number of PTRS ports is 3, power of each of PTRS ports 0 to 2 may be increased by three times relative to that of a PUSCH port, and the power increase has a linear value of three times, or is 4.77 dB in logarithm domain.

In the non-coherent transmission scenario, when the number of PTRS ports is 1, the PTRS port 0 may have an increase of 0 dB relative to the PUSCH port.

In the non-coherent transmission scenario, the PUSCH-to-PTRS power factor per layer per RE may be represented as the following formula:

$$P = 10 * log10(Q_p)$$

The formula may be understood as a special example of the formula $P = 10 * log10(Q_p * L_p)$, that is, $L_p = 1$; or may be understood as a special example of the formula $P = 10 * log10(Q_p * L_{Ng})$, that is, $L_{Ng} = 1$.

Alternatively,
in the non-coherent transmission scenario, the PUSCH-to-PTRS power factor per layer per RE may be represented as

$(3Q_P - 3)$dB.

Therefore, a relationship between a PUSCH-to-PTRS power factor per layer per RE and a number of PTRS ports in the non-coherent transmission mode may be obtained, as shown in Table 7.

Table 7

| $Q_p$ | $P$ (unit: dB) |
|---|---|
| 1 | 0 |
| 2 | 3 |
| 3 | 4.77 |
| 4 | 6 |

It may be understood that in a non-codebook based transmission scenario, for the PUSCH-to-PTRS power factor per layer per RE, refer to the foregoing non-coherent transmission mode.

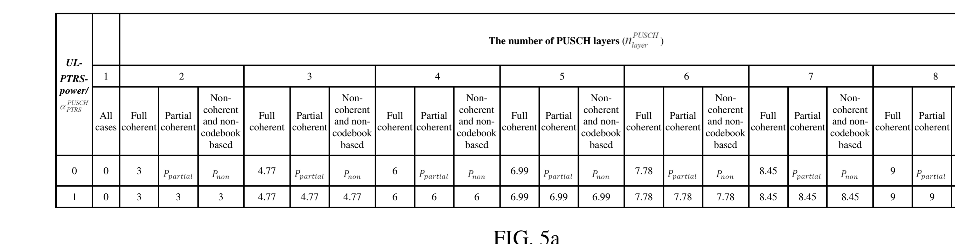

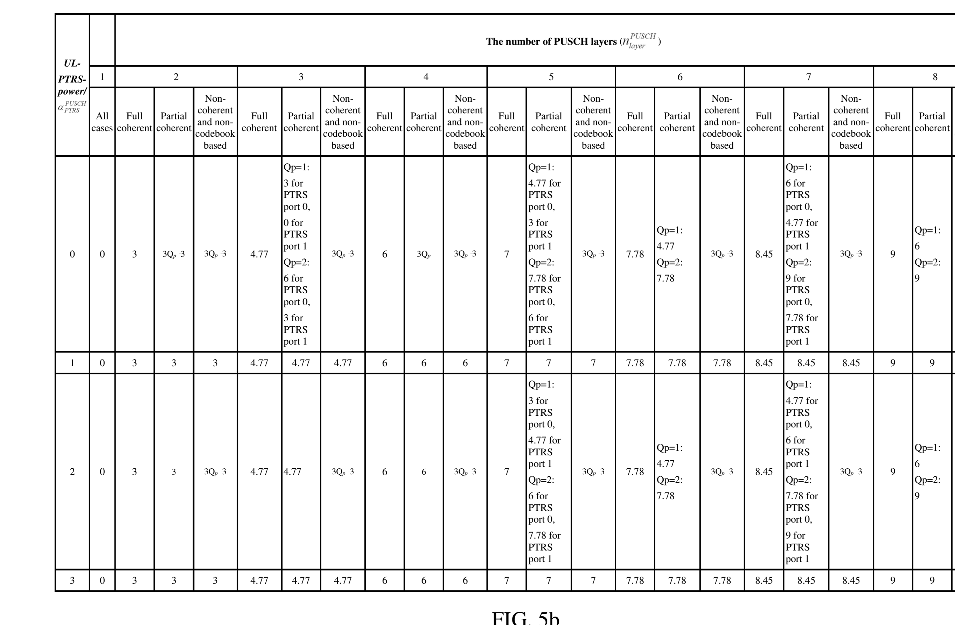

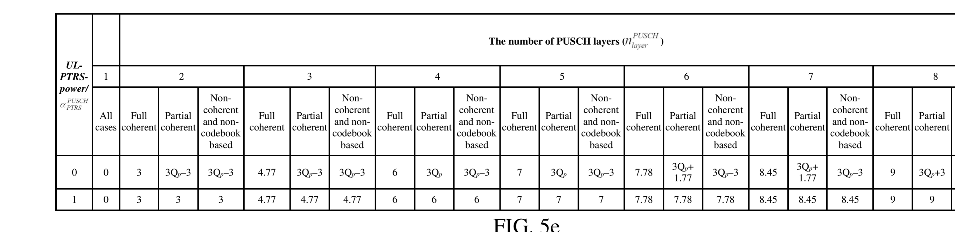

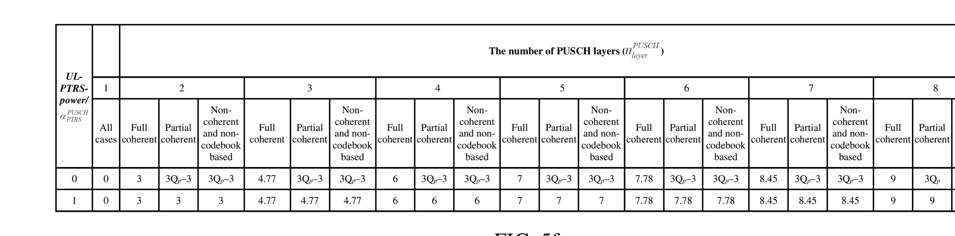

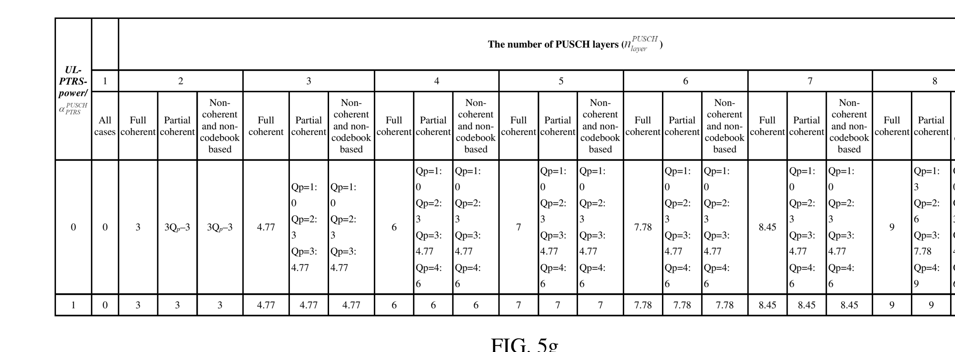

Based on the foregoing various transmission scenarios, power factors in different transmission scenarios may be obtained, as shown in FIG. 5a to FIG. 5g. FIG. 5b to FIG. 5d respectively correspond to the power factors in the transmission scenarios in Case (3-1) to Case (5-1), and FIG. 5e to FIG. 5g respectively correspond to the power factors in the transmission scenarios in Case (3-2) to Case (5-2).

As shown in FIG. 5a, at least one correspondence (a row in the table) between a power factor and at least one (a column in the table) of a number of uplink transmission layers, precoding information, and a number of PTRS ports in various transmission scenarios. The table may be pre-stored in the terminal and the network device before delivery, or may be configured in the terminal and the network device in an operation, administration and maintenance (operation, administration and maintenance, OAM) manner. The terminal and the network device may obtain at least one of the number of uplink transmission layers, the precoding information, and the number of PTRS ports, and may obtain the at least one correspondence between a power factor and at least one of a number of uplink transmission layers, precoding information, and a number of PTRS ports by querying the table. The number of uplink transmission layers may be preconfigured before delivery, or may be configured by the network device. The precoding information may also be preconfigured before delivery, or may be configured by the network device. The precoding information indicates a used codebook form (full coherent, partial coherent, or non-coherent) or non-codebook based transmission (for example, the precoding information includes two bits, where "00" represents full coherent transmission, "01" represents partial coherent transmission, "10" represents non-coherent transmission, and "11" represents non-codebook based transmission). The number of PTRS ports may be reported by the terminal or configured by the network device. For details, refer to the foregoing descriptions.

FIG. 5a shows an example in which two sets of correspondences (two rows in the table) are included. Each set of correspondences includes at least one correspondence between a power factor and at least one of a number of uplink transmission layers, precoding information, and a number of PTRS ports. The terminal and the network device may obtain the at least one correspondence (one row in the table) between a power factor and at least one of a number of uplink transmission layers, precoding information, and a number of PTRS ports.

In an implementation, the network device may send first information to the terminal, where the first information indicates the at least one correspondence (one row in the table). For example, the first information may be a ptrs-Power field in the higher layer configuration PTRS-UplinkConfig. The ptrs-Power field may be 1-bit. When a value of the ptrs-Power field is "0", the ptrs-Power field indicates the at least one correspondence corresponding to the first row in the table. When the value of the ptrs-Power field is "1", the ptrs-Power field indicates the at least one correspondence corresponding to the second row in the table.

In another implementation, the terminal and the network device may pre-obtain the at least one correspondence (one row in the table) between a power factor and at least one of a number of uplink transmission layers, precoding information, and a number of PTRS ports. For example, the at least one correspondence is stored in the terminal and the network device before delivery. For another example, when the higher layer configuration PTRS-UplinkConfig does not include the ptrs-Power field, or the terminal and the network device transmit the PUSCH based on a non-codebook, the terminal and the network device use the at least one correspondence corresponding to the second row in the table by default.

In FIG. 5a, in the first row in the table, in the partial coherent transmission mode, the non-coherent transmission mode, or the non-codebook based transmission mode, the value of P is associated with at least one of a number $L_P$ of uplink transmission layers corresponding to one PTRS port among the $Q_P$ PTRS ports and a number $L_{Ng}$ of uplink transmission layers corresponding to one antenna coherence group. Specifically, in the partial coherent transmission mode, the value of P is $P_{partial}$, and for specific values of P corresponding to different numbers of layers, refer to Table 6. In the non-coherent transmission mode or the non-codebook based transmission mode, the value of P is $P_{non}$, and for specific values of P corresponding to different numbers of layers, refer to Table 7.

Alternatively, FIG. 5b to FIG. 5d respectively show values of P in a case of different numbers of Ngs and different codebook forms in the transmission scenarios in Case (3-1) to Case (5-1). The values are similar to those in Table 3 provided in the existing protocol, and can be better compatible with the existing protocol.

FIG. 5b shows an example of PUSCH-to-PTRS power factors per layer per RE under different numbers of uplink transmission layers, different precoding information, and/or different numbers of PTRS ports in a case of Ng=2, the number of PTRS ports being 2, and two codebook forms. The first row in the table corresponds to values of P in different transmission modes in the case of Ng=2, the number of PTRS ports being 2, and the codebook form 1, and a PTRS port can borrow power of a different layer in an Ng in which the PTRS port is located and/or power on a frequency domain resource occupied by another PTRS port. The second row in the table corresponds to values of P in different transmission modes in the case of Ng=2, the number of PTRS ports being 2, and the codebook form 1, and a PTRS port cannot borrow power of a different layer in an Ng in which the PTRS port is located and/or power on a frequency domain resource occupied by another PTRS port. The third row in the table corresponds to values of P in different transmission modes in the case of Ng=2, the number of PTRS ports being 2, and the codebook form 2, and a PTRS port can borrow power of a different layer in an Ng in which the PTRS port is located and/or power on a frequency domain resource occupied by another PTRS port. The fourth row in the table corresponds to values of P in different transmission modes in the case of Ng=2, the number of PTRS ports being 2, and the codebook form 2, and a PTRS port cannot borrow power of a different layer in an Ng in which the PTRS port is located and/or power on a frequency domain resource occupied by another PTRS port.

A row in the table may be indicated by using the first information.

For different Ngs and different types of DMRSs, PUSCH-to-PTRS power factors per layer per RE under different numbers of uplink transmission layers, different precoding information, and/or different numbers of PTRS ports may be different tables. An Ng and a DMRS type may be indicated by using higher layer signaling, to determine a corresponding table. Then, the determined table is searched for a specific row based on a number of uplink transmission layers, precoding information, and/or a number of PTRS ports.

In FIG. 5b, in the full coherent transmission mode or some partial coherent transmission modes, a specific power factor is found based on a number of uplink transmission layers, precoding information, and/or a number of PTRS ports. In some partial coherent transmission modes, the non-coherent transmission mode, or the non-codebook based transmission mode, a found power factor is a function related to the number $Q_p$ of PTRS ports, and a specific power factor further needs to be determined based on the function. For example, Ng=2, the DMRS type is the type 1, and the number of uplink transmission layers is 2. In the non-coherent transmission mode and the non-codebook based transmission mode, the power factor is $3Q_p-3$. For another example, Ng=2, the DMRS type is the type 1, and the number of uplink transmission layers is 5. In the partial coherent transmission mode, when $Q_p = 1$, that is, one PTRS port corresponds to two Ngs, and the PTRS port is associated with $1^{st}$ and $2^{nd}$ DMRS ports, a power factor of the PTRS port is 3 dB; or when the PTRS port is associated with a $3^{rd}$ to $5^{th}$ DMRS ports, a power factor of the PTRS port is 4.77 dB. When $Q_p = 2$, that is, two PTRS ports correspond to two Ngs, and the PTRS port is associated with $1^{st}$ and $2^{nd}$ DMRS ports, a power factor of the PTRS port is 6 dB; or when the PTRS port is associated with a $3^{rd}$ to $5^{th}$ DMRS ports, a power factor of the PTRS port is 7.78 dB.

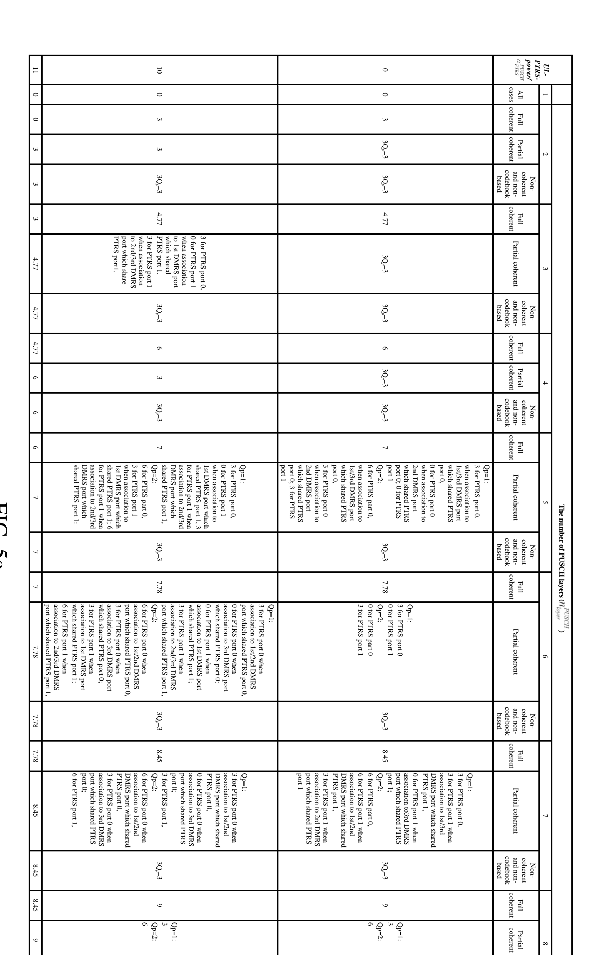

FIG. 5c shows an example of PUSCH-to-PTRS power factors per layer per RE under different numbers of uplink transmission layers, different precoding information, and/or different numbers of PTRS ports in a case of Ng=4, the number of PTRS ports being 2, and two codebook forms. The first row in the table corresponds to values of P in different transmission modes in the case of Ng=4, the number of PTRS ports being 2, and the codebook form 1, and a PTRS port can borrow power of a different layer in an Ng in which the PTRS port is located and/or power on a frequency domain resource occupied by another PTRS port. The second row in the table corresponds to values of P in different transmission modes in the case of Ng=4, the number of PTRS ports being 2, and the codebook form 2, and a PTRS port can borrow power of a different layer in an Ng in which the PTRS port is located and/or power on a frequency domain resource occupied by another PTRS port. The third row in the table corresponds to values of P in different transmission modes in the case of Ng=4, the number of PTRS ports being 2, and the codebook form 1 or the type 2, and a PTRS port cannot borrow power of a different layer in an Ng in which the PTRS port is located and/or power on a frequency domain resource occupied by another PTRS port.

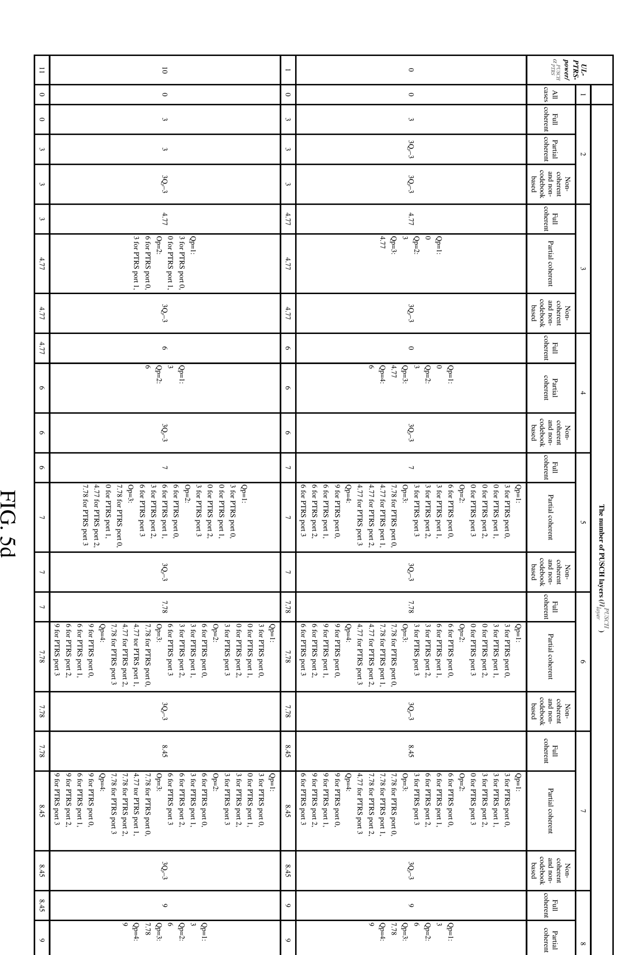

FIG. 5d shows an example of PUSCH-to-PTRS power factors per layer per RE under different numbers of uplink transmission layers, different precoding information, and/or different numbers of PTRS ports in a case of Ng=4, the number of PTRS ports being 4, and two codebook forms. The first row in the table corresponds to values of P in different transmission modes in the case of Ng=4, the number of PTRS ports being 4, and the codebook form 1, and a PTRS port can borrow power of a different layer in an Ng in which the PTRS port is located and/or power on a frequency domain resource occupied by another PTRS port. The second row in the table corresponds to values of P in different transmission modes in the case of Ng=4, the number of PTRS ports being 4, and the codebook form 1, and a PTRS port cannot borrow power of a different layer in an Ng in which the PTRS port is located and/or power on a frequency domain resource occupied by another PTRS port. The third row in the table corresponds to values of P in different transmission modes in the case of Ng=4, the number of PTRS ports being 4, and the codebook form 2, and a PTRS port can borrow power of a different layer in an Ng in which the PTRS port is located and/or power on a frequency domain resource occupied by another PTRS port. The fourth row in the table corresponds to values of P in different transmission modes in the case of Ng=4, the number of PTRS ports being 4, and the codebook form 2, and a PTRS port cannot borrow power of a different layer in an Ng in which the PTRS port is located and/or power on a frequency domain resource occupied by another PTRS port.

FIG. 5e to FIG. 5g respectively show values of P in a case of different numbers of Ngs and different codebook forms in the transmission scenarios in Case (3-2) to Case (5-2). The values are similar to those in Table 3 provided in the existing protocol, and can be better compatible with the existing protocol. Different from FIG. 5b to FIG. 5d, in the transmission scenarios in Case (3-2) to Case (5-2), corresponding power factors in different codebook forms are the same.

It may be understood that the values of P shown in FIG. 5a to FIG. 5g are merely some implementations under the idea of this application, and another value may be further included.

In this embodiment, the full coherent transmission mode means that a codebook based transmission mode is used for PUSCH transmission, and precoding for PUSCH transmission is a full coherent codeword.

The partial coherent transmission mode means that the codebook based transmission mode is used for PUSCH transmission, and precoding for PUSCH transmission is a partial coherent codeword.

The non-coherent transmission mode means that the codebook based transmission mode is used for PUSCH transmission, and precoding for PUSCH transmission is a non-coherent codeword.

The non-codebook based transmission mode means that the non-codebook based transmission mode is used for PUSCH transmission, and precoding for PUSCH transmission is obtained based on an SRI.

For example, in this embodiment of this application, a row of a precoding matrix included in one antenna coherence group is not specifically limited. To be specific, for example, for an 8T eight-layer precoding matrix, one $N_g$ includes four rows of the precoding matrix, and the four rows may be any four rows of the precoding matrix.

For example, a value "0" of an element in the precoding matrix indicates 0, and " 1" indicates that there is a value, where the value is not limited to 1, or may be another value.

For example, a correspondence between an antenna coherence group $N_g$ and a PUSCH port represents only one form. The form herein means that each $N_g$ is bound to a specific number of PUSCH ports, and does not represent a specific serial number and sequence of each PUSCH port (the serial number and the sequence of the PUSCH port are not limited, and only the binding relationship between $N_g$ and the PUSCH is limited).

For example, each value of P in Table 4a to Table 4h is a specific value in a current precoding matrix form without distinguishing a specific PTRS port number. In other words, PTRS port numbers are interchangeable.

S302: The network device sends downlink control information (downlink control information, DCI) to the terminal.

Correspondingly, the terminal receives the downlink control information.

The downlink control information indicates at least one of the following information: first precoding information, a first number of uplink transmission layers, and a first sounding reference signal indicator (SRS resource indicator, SRI).

After the terminal and the network device determine the at least one correspondence (one row in the table) between a power factor and at least one of a number of uplink transmission layers, precoding information, and a number of PTRS ports, the terminal may further receive the DCI sent by the network device. The DCI indicates at least one of the following information: the first precoding information, the first number of uplink transmission layers, and the first SRI (one column in the table).

For example, in a codebook based transmission scenario, the DCI may indicate the first precoding information and the first number of uplink transmission layers. For example, the DCI indicates partial coherent transmission, and indicates that the number of uplink transmission layers is 8.

For example, in the non-codebook based transmission scenario, the DCI may indicate the first SRI.

S303a: The terminal determines, based on the at least one correspondence and the downlink control information, first P corresponding to at least one of the first precoding information, the first number of uplink transmission layers, and the first SRI.

After obtaining the at least one correspondence (one row in the table) and the DCI (one column in the table), the terminal may determine the first P (one element in the table) corresponding to at least one of the first precoding information, the first number of uplink transmission layers, and the first SRI.

Further, as described above, the value of P is associated with at least one of the number $L_P$ of uplink transmission layers corresponding to one PTRS port and the number $L_{Ng}$ of uplink transmission layers corresponding to one antenna coherence group. Specifically, the value of P may satisfy $P = 10 * log10(Q_p * L_p)$ or $P = 10 * log10(Q_p * L_{Ng})$.

Based on different precoding information, there are the following several implementations for the value of P.

In an implementation, in the full coherent transmission mode, the number $Q_p$ of PTRS ports is 1, and the value of P is associated only with L.

For example, the value satisfies $P = 10 * log_{10}(L)$.

For example, when L is 1, P is 0 dB;

when L is 2, P is 3 dB;
when L is 3, P is 4.77 dB;
when L is 4, P is 6 dB;
when L is 5, P is 6.99 dB;
when L is 6, P is 7.78 dB;
when L is 7, P is 8.45 dB; and
when L is 8, P is 9 dB.

For example, if the at least one correspondence obtained by the terminal and the network device is the first row in the table in FIG. 5a, and the network device indicates, by using the DCI, that the full coherent transmission mode is used and the number of uplink transmission layers is 8, the terminal and the network device may determine, based on the at least one correspondence and the downlink control information, that the first P is 9 dB.

In another implementation, in the partial coherent transmission mode, the value of P is associated with a first parameter, and the first parameter is a product of $Q_P$ and $L_P$, or the first parameter is a product of $Q_P$ and $L_{Ng}$.

For example, the value satisfies $P = 10 * log10(Q_p * L_p)$ or $P = 10 * log10(Q_p * L_{Ng})$.

For example, when the first parameter is 1, P is 0 dB;

when the first parameter is 2, P is 3 dB;
when the first parameter is 3, P is 4.77 dB;
when the first parameter is 4, P is 6 dB;
when the first parameter is 5, P is 7 dB;
when the first parameter is 6, P is 7.78 dB;
when the first parameter is 7, P is 8.45 dB; and
when the first parameter is 8, P is 9 dB.

For example, if the at least one correspondence obtained by the terminal and the network device is the first row in the table in FIG. 5a, the first parameter is 2, and the network device indicates, by using the DCI, that the partial coherent transmission mode is used and the number of uplink transmission layers is 8, the terminal and the network device may determine, based on the at least one correspondence (Table 5 and FIG. 5a) and the downlink control information, that the first P is 3 dB.

In still another implementation, in the non-coherent transmission mode, L = 1, and the value of P is associated only with $Q_P$.

For example, the value satisfies $P = 10 * \log_{10}(Q_p)$.

For example, when $Q_P$ is 1, $P$ is 0 dB;

when $Q_P$ is 2, $P$ is 3 dB;
when $Q_P$ is 3, $P$ is 4.77 dB; and
when $Q_P$ is 4, $P$ is 6 dB.

For example, if the at least one correspondence obtained by the terminal and the network device is the first row in the table in FIG. 5a, $Q_P$ is 2, and the network device indicates, by using the DCI, that the non-coherent transmission mode is used and the number of uplink transmission layers is 8, the terminal and the network device may determine, based on the at least one correspondence (Table 6 and FIG. 5a) and the downlink control information, that the first P is 3 dB.

S303b: The network device determines, based on the at least one correspondence and the downlink control information, first P corresponding to at least one of the first precoding information, the first number of uplink transmission layers, and the first SRI.

The network device may determine, in a manner the same as that used by the terminal in step S303a, the first P corresponding to at least one of the first precoding information, the first number of uplink transmission layers, and the first SRI.

Further, the method may further include the following step (represented by a dashed line in the figure).

S304: The terminal sends a PTRS signal based on the first *P* through at least one PTRS port.

Correspondingly, the network device receives the PTRS signal based on the first *P* through at least one PTRS port.

After determining the first P corresponding to at least one of the first precoding information, the first number of uplink transmission layers, and the first SRI, the terminal may send the PTRS signal to the network device based on the first P through the at least one PTRS port. The at least one PTRS port uses same power. The terminal and the network device may accurately determine a power factor of the PTRS based on the at least one correspondence and the downlink control information, improving resource utilization.

According to the communication method provided in this embodiment of this application, in a scenario in which the number of uplink transmission layers ranges from 1 to 8, the terminal and the network device may accurately determine the power factor of the PTRS based on the at least one correspondence and the downlink control information, improving the resource utilization.

It may be understood that, to implement functions in the foregoing embodiments, the network device and the terminal include corresponding hardware structures and/or software modules for performing the functions. A person skilled in the art should be easily aware that the units and the steps of the method in the examples described with reference to embodiments disclosed in this application may be implemented in a form of hardware or a combination of hardware and computer software in this application. Whether a function is performed by hardware or hardware driven by computer software depends on particular application scenarios and design constraint conditions of the technical solutions.

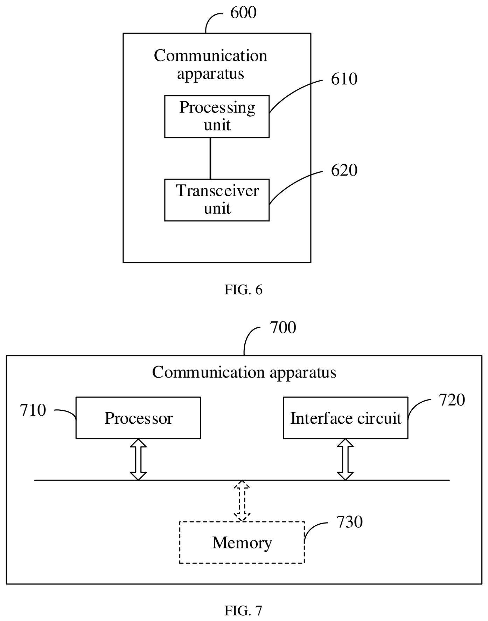

FIG. 6 and FIG. 7 each are a diagram of a structure of a possible communication apparatus according to an embodiment of this application. These communication apparatuses may be configured to implement functions of the terminal or the network device in the foregoing method embodiments, and therefore can also implement beneficial effects of the foregoing method embodiments. In embodiments of this application, the communication apparatus may be one of the terminals 120a to 120j shown in FIG. 1, may be the network device 110a or 110b shown in FIG. 1, or may be a module (for example, a chip) used in the terminal or the network device.

As shown in FIG. 6, a communication apparatus 600 includes a processing unit 610 and a transceiver unit 620. The communication apparatus 600 is configured to implement a function of the terminal or the network device in the method embodiment shown in FIG. 3.

When the communication apparatus 600 is configured to implement the function of the terminal in the method embodiment shown in FIG. 3, the transceiver unit 620 is configured to perform operations performed by the terminal in steps S302 and S304 in the embodiment shown in FIG. 3, and the processing unit 610 is configured to perform steps S301a and S303a in the embodiment shown in FIG. 3.

When the communication apparatus 600 is configured to implement the function of the network device in the method embodiment shown in FIG. 3, the transceiver unit 620 is configured to perform operations performed by the network device in steps S302 and S304 in the embodiment shown in FIG. 3, and the processing unit 610 is configured to perform steps S301b and S303b in the embodiment shown in FIG. 3.

For more detailed descriptions of the processing unit 610 and the transceiver unit 620, directly refer to the related descriptions in the method embodiment shown in FIG. 3. Details are not described herein again.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, store input data required by the processor 710 to run instructions, or store data generated after the processor 710 runs instructions.

When the communication apparatus 700 is configured to implement the method shown in FIG. 3, the processor 710 is configured to implement a function of the processing unit 610, and the interface circuit 720 is configured to implement a function of the transceiver unit 620.

When the communication apparatus is a chip used in a terminal, the chip in the terminal implements the function of the terminal in the foregoing method embodiment. The chip in the terminal receives information from another module (for example, a radio frequency module or an antenna) in the terminal, where the information is sent by the network device to the terminal. Alternatively, the chip in the terminal sends information to another module (for example, a radio frequency module or an antenna) in the terminal, where the information is sent by the terminal to the network device.

When the communication apparatus is a chip used in the network device, the chip in the network device implements the function of the network device in the foregoing method embodiment. The chip in the network device receives information from another module (for example, a radio frequency module or an antenna) in the network device, where the information is sent by the terminal to the network device. Alternatively, the chip in the network device sends information to another module (for example, a radio frequency module or an antenna) in the network device, where the information is sent by the network device to the terminal.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, the storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the network device or a terminal device. Certainly, the processor and the storage medium may alternatively exist as discrete components in the network device or a terminal device.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "At least one of the following: ..." or a similar expression represents any one listed item or a combination of any number of items among listed items. For example, "at least one of the following: A, B, and C" or "at least one of the following: A, B, or C" may indicate the following cases: A exists alone, B exists alone, C exists alone, both A and B exist, both B and C exist, both A and C exist, and A, B, and C exist, where A, B, and C can be singular or plural. The term "and/or" describes an association relationship between associated objects, and indicates that three relationships may exist. For example, A and/or B may indicate the following cases: A exists alone, both A and B exist, and B exists alone, where A and B may be singular or plural. In the text descriptions of this application, the character "/" generally represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, wherein the method comprises:

   obtaining at least one correspondence between a power factor P and at least one of a number L of uplink transmission layers, precoding information, and a number $Q_P$ of phase tracking reference signal PTRS ports, wherein P is a power ratio of a PTRS to a physical uplink shared channel PUSCH per layer per resource element, and the number of uplink transmission layers ranges from 1 to 8;
   receiving downlink control information, wherein the downlink control information indicates at least one of the following information: first precoding information, a first number of uplink transmission layers, and a first sounding reference signal resource indicator SRI; and
   determining, based on the at least one correspondence and the downlink control information, first P corresponding to at least one of the first precoding information, the first number of uplink transmission layers, and the first SRI.

2. The method according to claim 1, wherein the method further comprises:
   sending a PTRS signal based on the first P through at least one PTRS port.

3. A communication method, wherein the method comprises:

   obtaining at least one correspondence between a power factor P and at least one of a number L of uplink transmission layers, precoding information, and a number $Q_P$ of phase tracking reference signal PTRS ports, wherein P is a power ratio of a PTRS to a physical uplink shared channel per layer per resource element, and the number of uplink transmission layers ranges from 1 to 8;

sending downlink control information, wherein the downlink control information indicates at least one of the following information: first precoding information, a first number of uplink transmission layers, and a first SRI; and

determining, based on the at least one correspondence and the downlink control information, first P corresponding to at least one of the first precoding information, the first number of uplink transmission layers, and the first SRI.

4. The method according to claim 3, wherein the method further comprises:

receiving a PTRS signal based on the first P through at least one PTRS port.

5. The method according to any one of claims 1 to 4, wherein in a same PUSCH transmission mode, when $L_1<L_2$ is satisfied, $P_1 \leq P_2$, wherein $L_1$ and $L_2$ correspond to different numbers of uplink transmission layers, $P_1$ is a power factor corresponding to $L_1$, and $P_2$ is a power factor corresponding to $L_2$;

the PUSCH transmission mode comprises at least one of the following: a full coherent transmission mode, a partial coherent transmission mode, a non-coherent transmission mode, and a non-codebook based transmission mode; and

the first precoding information corresponds to at least one PUSCH transmission mode.

6. The method according to any one of claims 1 to 5, wherein in any one of the partial coherent transmission mode, the non-coherent transmission mode, and the non-codebook based transmission mode, a same PTRS port corresponds to different P in a case of same L and different numbers of PTRS ports.

7. The method according to any one of claims 1 to 6, wherein in the partial coherent transmission mode, different PTRS ports correspond to different P in a case of same L.

8. The method according to any one of claims 1 to 7, wherein the PTRS port comprises a first PTRS port and a second PTRS port, the first PTRS port is associated with a first demodulation reference signal DMRS port, the first PTRS port corresponds to a first power factor, the second PTRS port is associated with a second DMRS port, and the second PTRS port corresponds to a second power factor.

9. The method according to any one of claims 1 to 8, wherein

when a value of L is 2, 4, 6, or 8, a value of P is associated with a value of $Q_P$; and
when the value of L is 3, 5, or 7, the value of P is associated with $Q_P$ and the PTRS port.

10. The method according to any one of claims 1 to 8, wherein

when a value of L is 2, 3, or 4, a value of P is associated with $Q_P$;
when the value of L is 6, the value of P is associated with $Q_P$ and the PTRS port; and
when the value of L is 5 or 7, the value of P is associated with $Q_P$, the PTRS port, and a DMRS port associated with the PTRS port.

11. The method according to any one of claims 1 to 5, wherein during partial coherent transmission:

a value of L is 2, and a value of P is $P_{L2}$;
the value of L is 3, and the value of P is $P_{L3}$;
the value of L is 4, and the value of P is $P_{L4}$;
the value of L is 5, and the value of P is $P_{L5}$;
the value of L is 6, and the value of P is $P_{L6}$;
the value of L is 7, and the value of P is $P_{L7}$;
$P_{L2}=P_{L3}$, $P_{L4}=P_{L5}$, and $P_{L6}=P_{L7}$; and
$P_{L2}$, $P_{L3}$, $P_{L4}$, $P_{L5}$, $P_{L6}$, and $P_{L7}$ respectively represent power factors used when L is 2, 3, 4, 5, 6, and 7.

12. The method according to claim 11, wherein $P_{L2}<P_{L4}<P_{L6}$.

13. The method according to claim 11 or 12, wherein

the value of L is 1, and the value of P is $P_{L1}$;
the value of L is 8, and the value of P is $P_{L8}$; and

$$P_{L1} < P_{L2} < P_{L4} < P_{L6} < P_{L8}.$$

**14.** The method according to any one of claims 11 to 13, wherein

a value of $P_{L2}$ is $3Q_P\text{-}3$;
a value of $P_{L4}$ is $3Q_P$; and
a value of $P_{L6}$ is $3Q_P\text{+}1.77$.

**15.** The method according to claim 13, wherein a value of $P_{L8}$ is $3Q_P\text{+}3$.

**16.** The method according to any one of claims 1 to 5, wherein during partial coherent transmission:

a value of L is 2, and a value of P is $P'_{L2}$;
the value of L is 3, and the value of P is $P'_{L3}$;
the value of L is 4, and the value of P is $P'_{L4}$;
the value of L is 5, and the value of P is $P'_{L5}$;
the value of L is 6, and the value of P is $P'_{L6}$;
the value of L is 7, and the value of P is $P'_{L7}$;
$P'_{L2} = P'_{L3} = P'_{L4} = P'_{L5} = P'_{L6} = P'_{L7}$; and
$P'_{L2}$, $P'_{L3}$, $P'_{L4}$, $P'_{L5}$, $P'_{L6}$, and $P'_{L7}$ respectively represent power factors used when L is 2, 3, 4, 5, 6, and 7.

**17.** The method according to claim 16, wherein

the value of L is 1, and the value of P is $P'_{L1}$;
the value of L is 8, and the value of P is $P'_{L8}$; and

$$P'_{L1} < P'_{L2} < P'_{L8}.$$

**18.** The method according to claim 16 or 17, wherein a value of $P'_{L2}$ is $3Q_P\text{-}3$.

**19.** The method according to claim 18, wherein a value of $P'_{L8}$ is $3Q_P$.

**20.** The method according to any one of claims 1 to 5, wherein during partial coherent transmission:

a value of L is 4, and a value of P is $P''_{L4}$;
the value of L is 5, and the value of P is $P''_{L5}$;
the value of L is 6, and the value of P is $P''_{L6}$;
the value of L is 7, and the value of P is $P''_{L7}$;
the value of L is 8, and the value of P is $P''_{L8}$; and
$P''_{L4} = P''_{L5} = P''_{L6} = P''_{L7} = P''_{L8}$.

**21.** The method according to claim 20, wherein a value of $P''_{L4}$ is as follows:

when $Q_P = 1$, $P''_{L4} = 0$;
when $Q_P = 2$, $P''_{L4} = 3$;
when $Q_P = 3$, $P''_{L4} = 4.77$; and
when $Q_P = 4$, $P''_{L4} = 6$.

**22.** The method according to any one of claims 1 to 5, wherein during partial coherent transmission:

a value of L is 2, and a value of P is $P''_{L2}$; and
a value of $P''_{L2}$ is $3Q_P - 3$.

**23.** The method according to any one of claims 1 to 5, wherein during partial coherent transmission:

a value of L is 3, and a value of P" is $P_{L3}$; and
a value of $P''_{L3}$ is as follows:

when $Q_P=1$, $P''_{L3}=0$;
when $Q_P=2$, $P''_{L3}=3$; and
when $Q_P=3$, $P''_{L3}=4.77$.

24. The method according to any one of claims 1 to 23, wherein the value of P is associated with at least one of a number $L_P$ of uplink transmission layers corresponding to one PTRS port among the $Q_P$ PTRS ports and a number $L_{Ng}$ of uplink transmission layers corresponding to one antenna coherence group.

25. The method according to any one of claims 1 to 24, wherein the value of P is associated with a first parameter, and the first parameter is a product of $Q_P$ and $L_P$, or the first parameter is a product of $Q_P$ and $L_{Ng}$.

26. The method according to claim 25, wherein the value satisfies:

$$P = 10 * log_{10}(Q_p * L_p), \text{ or } P = 10 * log_{10}(Q_p * L_{Ng}).$$

27. The method according to claim 26, wherein in the full coherent transmission mode, the value of P is associated with L.

28. The method according to claim 27, wherein $Q_p = 1$, and the value satisfies:

$$P = 10 * log_{10}(L).$$

29. The method according to claim 27 or 28, wherein

when L is 1, P is 0 dB;
when L is 2, P is 3 dB;
when L is 3, P is 4.77 dB;
when L is 4, P is 6 dB;
when L is 5, P is 6.99 dB;
when L is 6, P is 7.78 dB;
when L is 7, P is 8.45 dB; and
when L is 8, P is 9 dB.

30. The method according to claim 25 or 26, wherein in the partial coherent transmission mode, when the first parameter is 1, P is 0 dB;

when the first parameter is 2, P is 3 dB;
when the first parameter is 3, P is 4.77 dB;
when the first parameter is 4, P is 6 dB;
when the first parameter is 5, P is 7 dB;
when the first parameter is 6, P is 7.78 dB;
when the first parameter is 7, P is 8.45 dB; and
when the first parameter is 8, P is 9 dB.

31. The method according to claim 26, wherein **in** the non-coherent transmission mode, the value of P is associated with $Q_P$.

32. The method according to claim 31, wherein $L_p = 1$, or $L_{Ng} = 1$, and the value satisfies:

$$P = 10 * log_{10}(Q_p).$$

33. The method according to claim 31 or 32, wherein

when $Q_P$ is 1, P is 0 dB;

when $Q_P$ is 2, P is 3 dB;
when $Q_P$ is 3, P is 4.77 dB; and
when $Q_P$ is 4, P is 6 dB.

34. The method according to any one of claims 1 to 33, wherein a number of PUSCH antenna ports ranges from 5 to 8, and the number of uplink transmission layers ranges from 1 to 4.

35. The method according to any one of claims 1 to 34, wherein the number of PTRS ports is less than or equal to a number $N_g$ of supported antenna coherence groups.

36. The method according to any one of claims 1 to 35, wherein the number of uplink antennas is 8, and a correspondence between $Q_P$ and $N_g$ comprises at least one of the following:

    when $N_g$ is 1, $Q_P$ is 1;
    when $N_g$ is 2, $Q_P$ is 1;
    when $N_g$ is 2, $Q_P$ is 2;
    when $N_g$ is 4, $Q_P$ is 2; and
    when $N_g$ is 4, $Q_P$ is 4.

37. The method according to any one of claims 1 to 35, wherein P is at least one of the following: a first factor $\alpha_{PTRS}^{PUSCH}$, a second factor $\rho_{PTRS}^{PUSCH}$, and a third factor $\beta_{PT\text{-}RS,i}$, wherein $\rho_{PTRS}^{PUSCH} = -\alpha_{PTRS}^{PUSCH}\,[\text{dB}]$, and $\beta_{PT\text{-}RS,i} = 10^{\frac{-\rho_{PTRS}^{PUSCH}}{20}}$; and

    $a_{k,l}^{(p,\mu)} = \beta_{PT\text{-}RS,i}\, r_k$ wherein $a_{k,l}^{(p,\mu)}$ is a sequence of the PTRS signal, $l$ is a time domain position corresponding to the PTRS signal, $k$ is a frequency domain position corresponding to the PTRS signal, p is a port number, $\mu$ is a subcarrier spacing, $\beta_{PT\text{-}RS,i}$ is a power factor, and $r_k$ is a base sequence.

38. A communication apparatus, comprising a module configured to perform the method according to any one of claims 1, 2, and 5 to 37, or comprising a module configured to perform the method according to any one of claims 3 to 37.

39. A communication system, comprising a first communication apparatus and a second communication apparatus, wherein the first communication apparatus comprises a module configured to perform the method according to any one of claims 1, 2, and 5 to 37, and the second communication apparatus comprises a module configured to perform the method according to any one of claims 3 to 37.

40. A communication apparatus, comprising a processor and a storage medium, wherein the storage medium stores instructions, and when the instructions are run by the processor, the method according to any one of claims 1, 2, and 5 to 37 is implemented, or the method according to any one of claims 3 to 37 is implemented.

41. A computer-readable storage medium, wherein the computer-readable storage medium comprises instructions, and when the instructions are run by a processor, the method according to any one of claims 1, 2, and 5 to 37 is implemented, or the method according to any one of claims 3 to 37 is implemented.

FIG. 1

FIG. 2

| Terminal | | Network device |
|---|---|---|

S301a: The terminal obtains at least one correspondence between a power coefficient and at least one of a number of uplink transmission streams, precoding information, and a number of PTRS ports

S301b: The network device obtains at least one correspondence between a power coefficient and at least one of a number of uplink transmission streams, precoding information, and a number of PTRS ports

S302: Downlink control information (indicating at least one of the following information: first precoding information, a first number of uplink transmission streams, and a first SRI)

S303a: The terminal determines, based on the at least one correspondence and the downlink control information, a first power coefficient corresponding to at least one of the first precoding information, the first number of uplink transmission streams, and the first SRI

S303b: The network device determines, based on the at least one correspondence and the downlink control information, a first power coefficient corresponding to at least one of the first precoding information, the first number of uplink transmission streams, and the first SRI

S304: The terminal sends a PTRS signal based on the first power coefficient through at least one PTRS port

FIG. 3

CW 0    CW 1

$$
Ng\ 0 \left[\begin{array}{cccccccc}
1 & 1 & 1 & 1 & 1 & 1 & 1 & 1 \\
1 & 1 & 1 & 1 & 1 & 1 & 1 & 1 \\
1 & 1 & 1 & 1 & 1 & 1 & 1 & 1 \\
1 & 1 & 1 & 1 & 1 & 1 & 1 & 1 \\
1 & 1 & 1 & 1 & 1 & 1 & 1 & 1 \\
1 & 1 & 1 & 1 & 1 & 1 & 1 & 1 \\
1 & 1 & 1 & 1 & 1 & 1 & 1 & 1 \\
1 & 1 & 1 & 1 & 1 & 1 & 1 & 1
\end{array}\right] PTRS\ p\ 0
$$

FIG. 4a

EP 4 654 514 A1

**Ng=2, PTRS port=2, type 1**

CW 0   CW 1

$$
\begin{array}{c}
\text{Ng 0} \\
\text{Ng 1}
\end{array}
\left[\begin{array}{cccccccc}
1 & 0 & 1 & 0 & 1 & 0 & 1 & 0 \\
1 & 0 & 1 & 0 & 1 & 0 & 1 & 0 \\
1 & 0 & 1 & 0 & 1 & 0 & 1 & 0 \\
1 & 0 & 1 & 0 & 1 & 0 & 1 & 0 \\
0 & 1 & 0 & 1 & 0 & 1 & 0 & 1 \\
0 & 1 & 0 & 1 & 0 & 1 & 0 & 1 \\
0 & 1 & 0 & 1 & 0 & 1 & 0 & 1 \\
0 & 1 & 0 & 1 & 0 & 1 & 0 & 1
\end{array}\right]
\begin{array}{c}
\text{PTRS p 0} \\
\text{PTRS p 1}
\end{array}
$$

CW 0   CW 1

$$
\left[\begin{array}{ccccccc}
1 & 0 & 1 & 1 & 0 & 1 & 0 \\
1 & 0 & 1 & 1 & 0 & 1 & 0 \\
1 & 0 & 1 & 1 & 0 & 1 & 0 \\
1 & 0 & 1 & 1 & 0 & 1 & 0 \\
0 & 1 & 0 & 0 & 1 & 0 & 1 \\
0 & 1 & 0 & 0 & 1 & 0 & 1 \\
0 & 1 & 0 & 0 & 1 & 0 & 1 \\
0 & 1 & 0 & 0 & 1 & 0 & 1
\end{array}\right]
$$

CW 0   CW 1

$$
\left[\begin{array}{cccccc}
1 & 0 & 1 & 0 & 1 & 0 \\
1 & 0 & 1 & 0 & 1 & 0 \\
1 & 0 & 1 & 0 & 1 & 0 \\
1 & 0 & 1 & 0 & 1 & 0 \\
0 & 1 & 0 & 1 & 0 & 1 \\
0 & 1 & 0 & 1 & 0 & 1 \\
0 & 1 & 0 & 1 & 0 & 1 \\
0 & 1 & 0 & 1 & 0 & 1
\end{array}\right]
$$

CW 0   CW 1

$$
\left[\begin{array}{ccccc}
1 & 0 & 1 & 0 & 1 \\
1 & 0 & 1 & 0 & 1 \\
1 & 0 & 1 & 0 & 1 \\
1 & 0 & 1 & 0 & 1 \\
0 & 1 & 0 & 1 & 0 \\
0 & 1 & 0 & 1 & 0 \\
0 & 1 & 0 & 1 & 0 \\
0 & 1 & 0 & 1 & 0
\end{array}\right]
$$

CW 0

$$
\left[\begin{array}{cccc}
1 & 0 & 1 & 0 \\
1 & 0 & 1 & 0 \\
1 & 0 & 1 & 0 \\
1 & 0 & 1 & 0 \\
0 & 1 & 0 & 1 \\
0 & 1 & 0 & 1 \\
0 & 1 & 0 & 1 \\
0 & 1 & 0 & 1
\end{array}\right]
$$

CW 0

$$
\left[\begin{array}{ccc}
1 & 0 & 1 \\
1 & 0 & 1 \\
1 & 0 & 1 \\
1 & 0 & 1 \\
0 & 1 & 0 \\
0 & 1 & 0 \\
0 & 1 & 0 \\
0 & 1 & 0
\end{array}\right]
$$

CW 0

$$
\left[\begin{array}{cc}
1 & 0 \\
1 & 0 \\
1 & 0 \\
1 & 0 \\
0 & 1 \\
0 & 1 \\
0 & 1 \\
0 & 1
\end{array}\right]
$$

$$
\left[\begin{array}{c}
1 \\
1 \\
1 \\
1 \\
0 \\
0 \\
0 \\
0
\end{array}\right]
$$

72

**Ng=2, PTRS port=2, type 2**

Ng 0, Ng 1

CW 0, CW 1

PTRS p0, PTRS p1

CW 0, CW 1, CW 0, CW 1, CW 0, CW 1, CW 0, CW 0, CW 0

**Ng=4, PTRS port=2, type 1**

**Ng=4, PTRS port=2, type 2**

**Ng=4, PTRS port=4, type 1**

CW 0  CW 1    CW 0  CW 1    CW 0  CW 1   CW 0  CW 1    CW 0    CW 0   CW 0

Ng 0 $\begin{bmatrix} 1 & 0 & 0 & 0 & 1 & 0 & 0 & 0 \\ 1 & 0 & 0 & 0 & 1 & 0 & 0 & 0 \\ 0 & 1 & 0 & 0 & 0 & 1 & 0 & 0 \\ 0 & 1 & 0 & 0 & 0 & 1 & 0 & 0 \\ 0 & 0 & 1 & 0 & 0 & 0 & 1 & 0 \\ 0 & 0 & 1 & 0 & 0 & 0 & 1 & 0 \\ 0 & 0 & 0 & 1 & 0 & 0 & 0 & 1 \\ 0 & 0 & 0 & 1 & 0 & 0 & 0 & 1 \end{bmatrix}$ PTRS p 0, p 1, p 2, p 3

$\begin{bmatrix} 1 & 0 & 0 & 1 & 0 & 0 \\ 1 & 0 & 0 & 1 & 0 & 0 \\ 0 & 1 & 0 & 0 & 1 & 0 \\ 0 & 1 & 0 & 0 & 1 & 0 \\ 0 & 0 & 1 & 0 & 0 & 1 \\ 0 & 0 & 1 & 0 & 0 & 1 \\ 0 & 0 & 0 & 0 & 0 & 1 \\ 0 & 0 & 0 & 0 & 0 & 1 \end{bmatrix}$
$\begin{bmatrix} 1 & 0 & 0 & 1 & 0 & 0 \\ 1 & 0 & 0 & 1 & 0 & 0 \\ 0 & 1 & 0 & 0 & 1 & 0 \\ 0 & 1 & 0 & 0 & 1 & 0 \\ 0 & 0 & 1 & 0 & 0 & 0 \\ 0 & 0 & 1 & 0 & 0 & 0 \\ 0 & 0 & 0 & 0 & 0 & 1 \\ 0 & 0 & 0 & 0 & 0 & 1 \end{bmatrix}$
$\begin{bmatrix} 1 & 0 & 1 & 0 & 0 \\ 1 & 0 & 1 & 0 & 0 \\ 0 & 1 & 0 & 0 & 0 \\ 0 & 1 & 0 & 0 & 0 \\ 0 & 0 & 0 & 1 & 0 \\ 0 & 0 & 0 & 1 & 0 \\ 0 & 0 & 0 & 0 & 1 \\ 0 & 0 & 0 & 0 & 1 \end{bmatrix}$
$\begin{bmatrix} 1 & 0 & 0 & 0 \\ 1 & 0 & 0 & 0 \\ 0 & 1 & 0 & 0 \\ 0 & 1 & 0 & 0 \\ 0 & 0 & 1 & 0 \\ 0 & 0 & 1 & 0 \\ 0 & 0 & 0 & 1 \\ 0 & 0 & 0 & 1 \end{bmatrix}$
$\begin{bmatrix} 1 & 0 & 0 \\ 1 & 0 & 0 \\ 0 & 1 & 0 \\ 0 & 1 & 0 \\ 0 & 0 & 1 \\ 0 & 0 & 1 \\ 0 & 0 & 0 \\ 0 & 0 & 0 \end{bmatrix}$
$\begin{bmatrix} 1 & 0 \\ 1 & 0 \\ 0 & 0 \\ 0 & 0 \\ 0 & 1 \\ 0 & 1 \\ 0 & 0 \\ 0 & 0 \end{bmatrix}$
$\begin{bmatrix} 1 \\ 1 \\ 0 \\ 0 \\ 0 \\ 0 \\ 0 \\ 0 \end{bmatrix}$

**Ng=4, PTRS port=4, type 2**

Ng 0, Ng 1, Ng 2, Ng 3

CW 0, CW 1

PTRS p0, PTRS p1, PTRS p2, PTRS p3

CW 0, CW 1, CW 0, CW 1, CW 0, CW 1, CW 0, CW 1, CW 0, CW 0

Ng=2, PTRS port=2, type 1

**Ng=2, PTRS port=2, type 2**

Ng 0  Ng 1

CW 0   CW 1

PTRS p 0   PTRS p 1

CW 0   CW 1   CW 0   CW 1   CW 0   CW 1   CW 0   CW 0   CW 0

**Ng=4, PTRS port=2, type 1**

Ng 0, Ng 1, Ng 2, Ng 3

CW 0 CW 1

PTRS p 0

PTRS p 1

$$
\begin{bmatrix}
1 & 0 & 0 & 0 & 1 & 0 & 0 & 0 \\
1 & 0 & 0 & 0 & 1 & 0 & 0 & 0 \\
0 & 1 & 0 & 0 & 0 & 1 & 0 & 0 \\
0 & 1 & 0 & 0 & 0 & 1 & 0 & 0 \\
0 & 0 & 1 & 0 & 0 & 0 & 1 & 0 \\
0 & 0 & 1 & 0 & 0 & 0 & 1 & 0 \\
0 & 0 & 0 & 1 & 0 & 0 & 0 & 1 \\
0 & 0 & 0 & 1 & 0 & 0 & 0 & 1
\end{bmatrix}
\begin{bmatrix}
1 & 0 & 0 & 0 & 0 & 0 \\
0 & 0 & 0 & 1 & 0 & 0 \\
0 & 1 & 0 & 0 & 0 & 0 \\
0 & 0 & 0 & 0 & 1 & 0 \\
0 & 0 & 1 & 0 & 0 & 0 \\
0 & 0 & 0 & 0 & 1 & 0 \\
0 & 0 & 0 & 0 & 0 & 1 \\
0 & 0 & 0 & 0 & 0 & 1
\end{bmatrix}
\begin{bmatrix}
1 & 0 & 0 & 0 & 0 & 0 \\
0 & 0 & 0 & 1 & 0 & 0 \\
0 & 1 & 0 & 0 & 0 & 0 \\
0 & 0 & 0 & 0 & 1 & 0 \\
0 & 0 & 1 & 0 & 0 & 0 \\
0 & 0 & 0 & 0 & 1 & 0 \\
0 & 0 & 0 & 0 & 0 & 1 \\
0 & 0 & 0 & 0 & 0 & 1
\end{bmatrix}
\begin{bmatrix}
1 & 0 & 0 & 0 \\
0 & 0 & 1 & 0 \\
0 & 1 & 0 & 0 \\
0 & 1 & 0 & 0 \\
0 & 0 & 0 & 1 \\
0 & 0 & 0 & 1
\end{bmatrix}
\begin{bmatrix}
1 & 0 & 0 & 0 \\
1 & 0 & 0 & 0 \\
0 & 1 & 0 & 0 \\
0 & 1 & 0 & 0 \\
0 & 0 & 1 & 0 \\
0 & 0 & 0 & 1
\end{bmatrix}
\begin{bmatrix}
1 & 0 & 0 \\
1 & 0 & 0 \\
0 & 1 & 0 \\
0 & 1 & 0 \\
0 & 0 & 1 \\
0 & 0 & 1
\end{bmatrix}
\begin{bmatrix}
1 & 0 \\
1 & 0 \\
0 & 0 \\
0 & 0 \\
0 & 1 \\
0 & 0
\end{bmatrix}
\begin{bmatrix}
1 \\
1 \\
0 \\
0 \\
0 \\
0
\end{bmatrix}
$$

CW 0, CW 1, CW 0, CW 1, CW 0, CW 1, CW 0, CW 1, CW 0, CW 0, CW 0

Ng=4, PTRS port=2, type 2

**Ng=4, PTRS port=4, type 1**

**Ng=4, PTRS port=4, type 2**

$$
\begin{array}{c}
\overbrace{\phantom{xxxxxxx}}^{\text{CW 0}} \quad \overbrace{\phantom{xxxxxxx}}^{\text{CW 1}} \\
\begin{bmatrix}
1 & 0 & 0 & 0 & 0 & 0 & 0 & 0 \\
0 & 1 & 0 & 0 & 0 & 0 & 0 & 0 \\
0 & 0 & 1 & 0 & 0 & 0 & 0 & 0 \\
0 & 0 & 0 & 1 & 0 & 0 & 0 & 0 \\
0 & 0 & 0 & 0 & 1 & 0 & 0 & 0 \\
0 & 0 & 0 & 0 & 0 & 1 & 0 & 0 \\
0 & 0 & 0 & 0 & 0 & 0 & 1 & 0 \\
0 & 0 & 0 & 0 & 0 & 0 & 0 & 1
\end{bmatrix}
\begin{array}{l}
\left.\begin{array}{c} \\ \\ \\ \\ \end{array}\right\} \text{PTRS p 0} \\
\left.\begin{array}{c} \\ \\ \\ \\ \end{array}\right\} \text{PTRS p 1}
\end{array}
\qquad
\overbrace{\phantom{xxxxxxx}}^{\text{CW 0}} \quad \overbrace{\phantom{xxxxxxx}}^{\text{CW 1}} \\
\begin{bmatrix}
1 & 0 & 0 & 0 & 0 & 0 & 0 & 0 \\
0 & 1 & 0 & 0 & 0 & 0 & 0 & 0 \\
0 & 0 & 1 & 0 & 0 & 0 & 0 & 0 \\
0 & 0 & 0 & 1 & 0 & 0 & 0 & 0 \\
0 & 0 & 0 & 0 & 1 & 0 & 0 & 0 \\
0 & 0 & 0 & 0 & 0 & 1 & 0 & 0 \\
0 & 0 & 0 & 0 & 0 & 0 & 1 & 0 \\
0 & 0 & 0 & 0 & 0 & 0 & 0 & 1
\end{bmatrix}
\begin{array}{l}
\left.\begin{array}{c} \\ \\ \end{array}\right\} \text{PTRS p 0} \\
\left.\begin{array}{c} \\ \\ \end{array}\right\} \text{PTRS p 1} \\
\left.\begin{array}{c} \\ \\ \end{array}\right\} \text{PTRS p 2} \\
\left.\begin{array}{c} \\ \\ \end{array}\right\} \text{PTRS p 3}
\end{array}
\end{array}
$$

FIG. 4n

| UL-PTRS-power/ $\alpha_{PTRS}^{PUSCH}$ | The number of PUSCH layers ($n_{layer}^{PUSCH}$) | | | | | | | | | | | | | | | | | | | | |
|---|---|---|---|---|---|---|---|---|---|---|---|---|---|---|---|---|---|---|---|---|---|
| | 1 | 2 | | | 3 | | | 4 | | | 5 | | | 6 | | | 7 | | | 8 | |
| | All cases | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent |
| 0 | 0 | 3 | $P_{partial}$ | $P_{non}$ | 4.77 | $P_{partial}$ | $P_{non}$ | 6 | $P_{partial}$ | $P_{non}$ | 6.99 | $P_{partial}$ | $P_{non}$ | 7.78 | $P_{partial}$ | $P_{non}$ | 8.45 | $P_{partial}$ | $P_{non}$ | 9 | $P_{partial}$ |
| 1 | 0 | 3 | 3 | 3 | 4.77 | 4.77 | 4.77 | 6 | 6 | 6 | 6.99 | 6.99 | 6.99 | 7.78 | 7.78 | 7.78 | 8.45 | 8.45 | 8.45 | 9 | 9 |

FIG. 5a

**The number of PUSCH layers ($n_{layer}^{PUSCH}$)**

| UL-PTRS-power/ $\alpha_{PTRS}^{PUSCH}$ | 1 | 2 | | | 3 | | | 4 | | | 5 | | | 6 | | | 7 | | | 8 | |
|---|---|---|---|---|---|---|---|---|---|---|---|---|---|---|---|---|---|---|---|---|---|
| | All cases | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent |
| 0 | 0 | 3 | $3Q_p-3$ | $3Q_p-3$ | 4.77 | Qp=1: 3 for PTRS port 0, 0 for PTRS port 1 Qp=2: 6 for PTRS port 0, 3 for PTRS port 1 | $3Q_p-3$ | 6 | $3Q_p$ | $3Q_p-3$ | 7 | Qp=1: 4.77 for PTRS port 0, 3 for PTRS port 1 Qp=2: 7.78 for PTRS port 0, 6 for PTRS port 1 | $3Q_p-3$ | 7.78 | Qp=1: 4.77 Qp=2: 7.78 | $3Q_p-3$ | 8.45 | Qp=1: 6 for PTRS port 0, 4.77 for PTRS port 1 Qp=2: 9 for PTRS port 0, 7.78 for PTRS port 1 | $3Q_p-3$ | 9 | Qp=1: 6 Qp=2: 9 |
| 1 | 0 | 3 | 3 | 3 | 4.77 | 4.77 | 4.77 | 6 | 6 | 6 | 7 | 7 | 7 | 7.78 | 7.78 | 7.78 | 8.45 | 8.45 | 8.45 | 9 | 9 |
| 2 | 0 | 3 | 3 | $3Q_p-3$ | 4.77 | 4.77 | $3Q_p-3$ | 6 | 6 | $3Q_p-3$ | 7 | Qp=1: 3 for PTRS port 0, 4.77 for PTRS port 1 Qp=2: 6 for PTRS port 0, 7.78 for PTRS port 1 | $3Q_p-3$ | 7.78 | Qp=1: 4.77 Qp=2: 7.78 | $3Q_p-3$ | 8.45 | Qp=1: 4.77 for PTRS port 0, 6 for PTRS port 1 Qp=2: 7.78 for PTRS port 0, 9 for PTRS port 1 | $3Q_p-3$ | 9 | Qp=1: 6 Qp=2: 9 |
| 3 | 0 | 3 | 3 | 3 | 4.77 | 4.77 | 4.77 | 6 | 6 | 6 | 7 | 7 | 7 | 7.78 | 7.78 | 7.78 | 8.45 | 8.45 | 8.45 | 9 | 9 |

FIG. 5b

| UL-PTRS-power/ $\alpha_{PTRS}^{PUSCH}$ | The number of PUSCH layers ($n_{layer}^{PUSCH}$) | | | | | | | | | | | | | | | | | | | | |
| | 1 | 2 | | | 3 | | | 4 | | | 5 | | | 6 | | | 7 | | | 8 | |
| | All cases | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent |
|---|---|---|---|---|---|---|---|---|---|---|---|---|---|---|---|---|---|---|---|---|---|
| 0 | 0 | 3 | $3Q_p{-}3$ | $3Q_p{-}3$ | 4.77 | $3Q_p{-}3$ | $3Q_p{-}3$ | 6 | $3Q_p{-}3$ | $3Q_p{-}3$ | 7 | Qp=1: 3 for PTRS port 0. when association to 1st/3rd DMRS port which shared PTRS port 0, 0 for PTRS port 0 when association to 2nd DMRS port which shared PTRS port 0; 0 for PTRS port 1 Qp=2: 6 for PTRS port 0, when association to 1st/3rd DMRS port which shared PTRS port 0, 3 for PTRS port 0 when association to 2nd DMRS port which shared PTRS port 0; 3 for PTRS port 1 | $3Q_p{-}3$ | 7.78 | Qp=1: 3 for PTRS port 0 0 for PTRS port 1 Qp=2: 0 for PTRS part 0 3 for PTRS port 1 | $3Q_p{-}3$ | 8.45 | Qp=1: 3 for PTRS port 0. 3 for PTRS port 1 when association to 1st/3rd DMRS port which shared PTRS port 1, 0 for PTRS port 1 when association to3rd DMRS port which shared PTRS port 1; Qp=2: 6 for PTRS part 0, 6 for PTRS port 1 when association to 1st/2nd DMRS port which shared PTRS port 1, 3 for PTRS port 1 when association to 2rd DMRS port which shared PTRS port 1 | $3Q_p{-}3$ | 9 | Qp=1: 3 Qp=2: 6 |
| 10 | 0 | 3 | 3 | $3Q_p{-}3$ | 4.77 | 3 for PTRS port 0. 0 for PTRS port 1 when association to 1st DMRS port which shared PTRS port 1. 3 for PTRS port 1 when association to 2nd/3rd DMRS port which share PTRS port1. | $3Q_p{-}3$ | 6 | 3 | $3Q_p{-}3$ | 7 | Qp=1: 3 for PTRS port 0, 0 for PTRS port 1 when association to 1st DMRS port which shared PTRS port 1, 3 for PTRS port 1 when association to 2nd/3rd DMRS port which shared PTRS port 1, Qp=2: 6 for PTRS part 0, 3 for PTRS port 1 when association to 1st DMRS port which shared PTRS port 1; 6 for PTRS port 1 when association to 2nd/3rd DMRS port which shared PTRS port 1: | $3Q_p{-}3$ | 7.78 | Qp=1: 3 for PTRS port 0 when association to 1st/2nd DMRS port which shared PTRS port 0, 0 for PTRS port 0 when association to 3rd DMRS port which shared PTRS port 0; 0 for PTRS port 1 when association to 1st DMRS port which shared PTRS port 1; 3 for PTRS port 1 when association to 2nd/3rd DMRS port which shared PTRS port 1, Qp=2: 6 for PTRS port 0 when association to 1st/2nd DMRS port which shared PTRS port 0, 3 for PTRS port 0 when association to 3rd DMRS port which shared PTRS port 0; 3 for PTRS port 1 when association to 1st DMRS port which shared PTRS port 1; 6 for PTRS port 1 when association to 2nd/3rd DMRS port which shared PTRS port 1, | $3Q_p{-}3$ | 8.45 | Qp=1: 3 for PTRS port 0 when association to 1st/2nd DMRS port which shared PTRS port 0, 0 for PTRS port 0 when association to 3rd DMRS port which shared PTRS port 0; 3 for PTRS port 1, Qp=2: 6 for PTRS port 0 when association to 1st/2nd DMRS port which shared PTRS port 0, 3 for PTRS port 0 when association to 3rd DMRS port which shared PTRS port 0; 6 for PTRS port 1, | $3Q_p{-}3$ | 9 | Qp=1: 3 Qp=2: 6 |
| 11 | 0 | 0 | 3 | 3 | 3 | 4.77 | 4.77 | 4.77 | 6 | 6 | 6 | 7 | 7 | 7 | 7.78 | 7.78 | 7.78 | 8.45 | 8.45 | 8.45 | 9 |

FIG. 5c

The number of PUSCH layers ($n_{layer}^{PUSCH}$)

| UL-PTRS-power/ $\alpha_{PTRS}^{PUSCH}$ | 1 | 2 | | | 3 | | | 4 | | | 5 | | | 6 | | | 7 | | | 8 | |
|---|---|---|---|---|---|---|---|---|---|---|---|---|---|---|---|---|---|---|---|---|---|
| | All cases | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent |
| 0 | 0 | 3 | $3Q_p-3$ | $3Q_p-3$ | 4.77 | Qp=1:<br>0<br>Qp=2:<br>3<br>Qp=3:<br>4.77 | $3Q_p-3$ | 0 | Qp=1:<br>0<br>Qp=2:<br>3<br>Qp=3:<br>4.77<br>Qp=4:<br>6 | $3Q_p-3$ | 7 | Qp=1:<br>3 for PTRS port 0,<br>0 for PTRS port 1,<br>0 for PTRS port 2,<br>0 for PTRS port 3<br>Qp=2:<br>6 for PTRS port 0,<br>3 for PTRS port 1,<br>3 for PTRS port 2,<br>3 for PTRS port 3<br>Qp=3:<br>7.78 for PTRS port 0,<br>4.77 for PTRS port 1,<br>4.77 for PTRS port 2,<br>4.77 for PTRS port 3<br>Qp=4:<br>9 for PTRS port 0,<br>6 for PTRS port 1,<br>6 for PTRS port 2,<br>6 for PTRS port 3 | $3Q_p-3$ | 7.78 | Qp=1:<br>3 for PTRS port 0,<br>3 for PTRS port 1,<br>0 for PTRS port 2,<br>0 for PTRS port 3<br>Qp=2:<br>6 for PTRS port 0,<br>6 for PTRS port 1,<br>3 for PTRS port 2,<br>3 for PTRS port 3<br>Qp=3:<br>7.78 for PTRS port 0,<br>7.78 for PTRS port 1,<br>4.77 for PTRS port 2,<br>4.77 for PTRS port 3<br>Qp=4:<br>9 for PTRS port 0,<br>9 for PTRS port 1,<br>6 for PTRS port 2,<br>6 for PTRS port 3 | $3Q_p-3$ | 8.45 | Qp=1:<br>3 for PTRS port 0,<br>3 for PTRS port 1,<br>3 for PTRS port 2,<br>0 for PTRS port 3<br>Qp=2:<br>6 for PTRS port 0,<br>6 for PTRS port 1,<br>6 for PTRS port 2,<br>3 for PTRS port 3<br>Qp=3:<br>7.78 for PTRS port 0,<br>7.78 for PTRS port 1,<br>7.78 for PTRS port 2,<br>4.77 for PTRS port 3<br>Qp=4:<br>9 for PTRS port 0,<br>9 for PTRS port 1,<br>9 for PTRS port 2,<br>6 for PTRS port 3 | $3Q_p-3$ | 9 | Qp=1:<br>3<br>Qp=2:<br>6<br>Qp=3:<br>7.78<br>Qp=4:<br>9 |
| 1 | 0 | 3 | 3 | 3 | 4.77 | 4.77 | 4.77 | 6 | 6 | 6 | 7 | 7 | 7 | 7.78 | 7.78 | 7.78 | 8.45 | 8.45 | 8.45 | 9 | 9 |
| 10 | 0 | 3 | 3 | $3Q_p-3$ | 4.77 | Qp=1:<br>3 for PTRS port 0,<br>0 for PTRS port 1,<br>Qp=2:<br>6 for PTRS port 0,<br>3 for PTRS port 1, | $3Q_p-3$ | 6 | Qp=1:<br>3<br>Qp=2:<br>6 | $3Q_p-3$ | 7 | Qp=1:<br>3 for PTRS port 0,<br>0 for PTRS port 1,<br>0 for PTRS port 2,<br>3 for PTRS port 3<br>Qp=2:<br>6 for PTRS port 0,<br>6 for PTRS port 1,<br>3 for PTRS port 2,<br>6 for PTRS port 3<br>Qp=3:<br>7.78 for PTRS port 0,<br>0 for PTRS port 1,<br>4.77 for PTRS port 2,<br>7.78 for PTRS port 3 | $3Q_p-3$ | 7.78 | Qp=1:<br>3 for PTRS port 0,<br>0 for PTRS port 1,<br>0 for PTRS port 2,<br>3 for PTRS port 3<br>Qp=2:<br>6 for PTRS port 0,<br>3 for PTRS port 1,<br>6 for PTRS port 2,<br>6 for PTRS port 3<br>Qp=3:<br>7.78 for PTRS port 0,<br>4.77 tor PTRS port 1,<br>4.77 for PTRS port 2,<br>7.78 for PTRS port 3<br>Qp=4:<br>9 for PTRS port 0,<br>6 for PTRS port 1,<br>6 for PTRS port 2,<br>9 for PTRS port 3 | $3Q_p-3$ | 8.45 | Qp=1:<br>3 for PTRS port 0,<br>0 for PTRS port 1,<br>3 for PTRS port 2,<br>3 for PTRS port 3<br>Qp=2:<br>6 for PTRS port 0,<br>3 for PTRS port 1,<br>6 for PTRS port 2,<br>6 for PTRS port 3<br>Qp=3:<br>7.78 for PTRS port 0,<br>4.77 tor PTRS port 1,<br>7.78 for PTRS port 2,<br>7.78 for PTRS port 3<br>Qp=4:<br>9 for PTRS port 0,<br>6 for PTRS port 1,<br>9 for PTRS port 2,<br>9 for PTRS port 3 | $3Q_p-3$ | 9 | Qp=1:<br>3<br>Qp=2:<br>6<br>Qp=3:<br>7.78<br>Qp=4:<br>9 |
| 11 | 0 | 0 | 3 | 3 | 3 | 4.77 | 4.77 | 4.77 | 6 | 6 | 6 | 7 | 7 | 7 | 7.78 | 7.78 | 7.78 | 8.45 | 8.45 | 8.45 | 9 |

FIG. 5d

| UL-PTRS-power | $\alpha_{PTRS}^{PUSCH}$ | The number of PUSCH layers ($n_{layer}^{PUSCH}$) | | | | | | | | | | | | | | | | | | |
|---|---|---|---|---|---|---|---|---|---|---|---|---|---|---|---|---|---|---|---|---|
| | | 1 | 2 | | | 3 | | | 4 | | | 5 | | | 6 | | | 7 | | | 8 | |
| | | All cases | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent |
| 0 | 0 | 3 | $3Q_p-3$ | $3Q_p-3$ | 4.77 | $3Q_p-3$ | $3Q_p-3$ | 6 | $3Q_p$ | $3Q_p-3$ | 7 | $3Q_p$ | $3Q_p-3$ | 7.78 | $3Q_p+1.77$ | $3Q_p-3$ | 8.45 | $3Q_p+1.77$ | $3Q_p-3$ | 9 | $3Q_p+3$ |
| 1 | 0 | 3 | 3 | 3 | 4.77 | 4.77 | 4.77 | 6 | 6 | 6 | 7 | 7 | 7 | 7.78 | 7.78 | 7.78 | 8.45 | 8.45 | 8.45 | 9 | 9 |

FIG. 5e

| UL-PTRS-power/ $\alpha_{PTRS}^{PUSCH}$ | 1 | The number of PUSCH layers ($n_{layer}^{PUSCH}$) | | | | | | | | | | | | | | | | | | |
| | | 2 | | | 3 | | | 4 | | | 5 | | | 6 | | | 7 | | | 8 | |
| | All cases | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent |
|---|---|---|---|---|---|---|---|---|---|---|---|---|---|---|---|---|---|---|---|---|---|
| 0 | 0 | 3 | $3Q_p-3$ | $3Q_p-3$ | 4.77 | $3Q_p-3$ | $3Q_p-3$ | 6 | $3Q_p-3$ | $3Q_p-3$ | 7 | $3Q_p-3$ | $3Q_p-3$ | 7.78 | $3Q_p-3$ | $3Q_p-3$ | 8.45 | $3Q_p-3$ | $3Q_p-3$ | 9 | $3Q_p$ |
| 1 | 0 | 3 | 3 | 3 | 4.77 | 4.77 | 4.77 | 6 | 6 | 6 | 7 | 7 | 7 | 7.78 | 7.78 | 7.78 | 8.45 | 8.45 | 8.45 | 9 | 9 |

FIG. 5f

| UL-PTRS-power/ $\alpha_{PTRS}^{PUSCH}$ | The number of PUSCH layers ($n_{layer}^{PUSCH}$) | | | | | | | | | | | | | | | | | | | | |
| | 1 | 2 | | | 3 | | | 4 | | | 5 | | | 6 | | | 7 | | | 8 | |
| | All cases | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent | Non-coherent and non-codebook based | Full coherent | Partial coherent |
|---|---|---|---|---|---|---|---|---|---|---|---|---|---|---|---|---|---|---|---|---|---|
| 0 | 0 | 3 | $3Q_p-3$ | $3Q_p-3$ | 4.77 | Qp=1: 0 Qp=2: 3 Qp=3: 4.77 | Qp=1: 0 Qp=2: 3 Qp=3: 4.77 | 6 | Qp=1: 0 Qp=2: 3 Qp=3: 4.77 Qp=4: 6 | Qp=1: 0 Qp=2: 3 Qp=3: 4.77 Qp=4: 6 | 7 | Qp=1: 0 Qp=2: 3 Qp=3: 4.77 Qp=4: 6 | Qp=1: 0 Qp=2: 3 Qp=3: 4.77 Qp=4: 6 | 7.78 | Qp=1: 0 Qp=2: 3 Qp=3: 4.77 Qp=4: 6 | Qp=1: 0 Qp=2: 3 Qp=3: 4.77 Qp=4: 6 | 8.45 | Qp=1: 0 Qp=2: 3 Qp=3: 4.77 Qp=4: 6 | Qp=1: 0 Qp=2: 3 Qp=3: 4.77 Qp=4: 6 | 9 | Qp=1: 3 Qp=2: 6 Qp=3: 7.78 Qp=4: 9 |
| 1 | 0 | 3 | 3 | 3 | 4.77 | 4.77 | 4.77 | 6 | 6 | 6 | 7 | 7 | 7 | 7.78 | 7.78 | 7.78 | 8.45 | 8.45 | 8.45 | 9 | 9 |

FIG. 5g

600

Communication
apparatus

Processing
unit — 610

Transceiver
unit — 620

FIG. 6

700

Communication apparatus

710 — Processor

Interface circuit — 720

Memory — 730

FIG. 7

## INTERNATIONAL SEARCH REPORT

| International application No. |
|---|
| **PCT/CN2024/075592** |

| A. | CLASSIFICATION OF SUBJECT MATTER |
|---|---|

H04L5/00(2006.01)i;  H04W52/14(2009.01)i

According to International Patent Classification (IPC) or to both national classification and IPC

| B. | FIELDS SEARCHED |
|---|---|

Minimum documentation searched (classification system followed by classification symbols)

IPC：H04L H04W

Documentation searched other than minimum documentation to the extent that such documents are included in the fields searched

Electronic data base consulted during the international search (name of data base and, where practicable, search terms used)

CNTXT, ENTXT, CNKI, WPABS, 3GPP: PTRS, 功率, power, 提升, boost, 比, ratio, 层, layer, PUSCH, 8TX, 8 TX, rank, 秩, 预编码, precode, pre-code, 端口, port, 数, number, 相干, coherent, 每, per, RE, 资源单元, 资源粒子

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | NTT DOCOMO. "R1-2312266, FL summary on DMRS#1" <br> *3GPP TSG RAN WG1 #115*, 17 November 2023 (2023-11-17), <br> section 4.2 | 1-8, 22-41 |
| X | CN 110771086 A (LG ELECTRONICS INC.) 07 February 2020 (2020-02-07) <br> description, paragraphs 12 and 228-324 | 1-8, 23-41 |
| Y | CN 110771086 A (LG ELECTRONICS INC.) 07 February 2020 (2020-02-07) <br> description, paragraphs 12 and 228-324 | 22 |
| Y | 3RD GENERATION PARTNERSHIP PROJECT. "Technical Specification Group Radio <br> Access Network: NR: Physical layer procedures for data (Release 17)" <br> *3GPP TS 38.214 V17.4.0*, 31 December 2022 (2022-12-31), <br> section 6.2.3.1 | 22 |
| A | INTEL CORP. "R1-2204791, Discussion on enhancement for 8Tx UL transmission" <br> *3GPP TSG RAN WG1 #109-e*, 20 May 2022 (2022-05-20), <br> entire document | 1-41 |

| ☑ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **15 April 2024** | **25 April 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/075592**

**C.    DOCUMENTS CONSIDERED TO BE RELEVANT**

| Category* | Citation of document, with indication, where appropriate, of the relevant passages | Relevant to claim No. |
|---|---|---|
| A | US 2020382181 A1 (INTEL CORP.) 03 December 2020 (2020-12-03)<br>entire document | 1-41 |

Form PCT/ISA/210 (second sheet) (July 2022)

## INTERNATIONAL SEARCH REPORT
### Information on patent family members

| | International application No. |
|---|---|
| | **PCT/CN2024/075592** |

| Patent document cited in search report | | | Publication date (day/month/year) | Patent family member(s) | | | Publication date (day/month/year) |
|---|---|---|---|---|---|---|---|
| CN | 110771086 | A | 07 February 2020 | CA | 3030799 | A1 | 07 June 2020 |
| | | | | CA | 3030799 | C | 01 June 2021 |
| | | | | US | 2019182001 | A1 | 13 June 2019 |
| | | | | US | 10355842 | B2 | 16 July 2019 |
| | | | | AU | 2018298510 | A1 | 27 June 2019 |
| | | | | AU | 2018298510 | B2 | 16 April 2020 |
| | | | | WO | 2019112374 | A1 | 13 June 2019 |
| | | | | US | 2019238293 | A1 | 01 August 2019 |
| | | | | US | 10554360 | B2 | 04 February 2020 |
| | | | | MX | 2019002598 | A | 10 July 2019 |
| | | | | RU | 2742044 | C1 | 02 February 2021 |
| | | | | CL | 2019000066 | A1 | 08 November 2019 |
| | | | | BR | 112019007429 | A2 | 15 October 2019 |
| | | | | BR | 112019007429 | B1 | 02 June 2020 |
| | | | | KR | 20190122616 | A | 30 October 2019 |
| | | | | KR | 20190067731 | A | 17 June 2019 |
| | | | | KR | 102037326 | B1 | 28 October 2019 |
| | | | | US | 2020195404 | A1 | 18 June 2020 |
| | | | | US | 10999031 | B2 | 04 May 2021 |
| | | | | US | 2019356443 | A1 | 21 November 2019 |
| | | | | US | 10644855 | B2 | 05 May 2020 |
| | | | | US | 2019379505 | A1 | 12 December 2019 |
| | | | | US | 10594458 | B2 | 17 March 2020 |
| | | | | PH | 12019500260 | A1 | 21 October 2019 |
| | | | | EP | 3520312 | A1 | 07 August 2019 |
| | | | | EP | 3520312 | A4 | 18 September 2019 |
| | | | | EP | 3520312 | B1 | 02 February 2022 |
| | | | | JP | 2020509617 | A | 26 March 2020 |
| | | | | JP | 6770171 | B2 | 14 October 2020 |
| US | 2020382181 | A1 | 03 December 2020 | None | | | |

Form PCT/ISA/210 (patent family annex) (July 2022)

**EP 4 654 514 A1**

**Patent documents cited in the description**

- CN 202310149382